# EUROPEAN PATENT SPECIFICATION

(11) **EP 4 357 862 B1**
(45) Date of publication and mention of the grant of the patent: **30.09.2026**
(21) Application number: 23757825.7
(22) Date of filing: 22.08.2023
(51) Int. Cl.: G03B 5/06, G03B 17/12, H02N 2/02, H02N 2/00, G03B 5/02, G03B 30/00, H04N 23/68, G02B 27/64, H04N 23/57, H04N 23/51, H04N 23/55

(54) **CAMERA MODULE COMPRISING PIEZOELECTRIC MOTOR**
KAMERAMODUL MIT PIEZOELEKTRISCHEM MOTOR
MODULE DE CAMÉRA COMPRENANT UN MOTEUR PIÉZOÉLECTRIQUE

(30) Priority: 08.09.2022 KR 20220114483; 03.11.2022 KR 20220145313
(43) Date of publication of application: 24.04.2024
(73) Proprietor: Samsung Electronics Co., Ltd., Suwon-si, Gyeonggi-do 16677 (KR)
(72) Inventor: OH, Jinheon, Suwon-si Gyeonggi-do 16677 (KR); SIM, Jaeseung, Ansan-si Gyeonggi-do 15416 (KR); PARK, Sungho, Ansan-si Gyeonggi-do 15416 (KR); AHN, Woohyun, Ansan-si Gyeonggi-do 15416 (KR)
(74) Representative: Gulde & Partner
(86) International application number: PCT/KR2023/012417
(87) International publication number: WO 2024/053905

(56) References cited:
- CN-A- 114 077 031
- JP-A- H0 983 033
- JP-A- H0 983 033
- KR-A- 20130 088 063
- KR-A- 20130 088 063
- KR-A- 20160 006 435
- KR-A- 20200 003 762
- KR-A- 20210 042 915
- US-A- 5 136 200
- US-A1- 2020 382 023
- US-A1- 2020 393 637
- SHI GE ET AL: "A Sensorless Self-Tuning Resonance System for Piezoelectric Broadband Vibration Energy Harvesting", IEEE TRANSACTIONS ON INDUSTRIAL ELECTRONICS, IEEE SERVICE CENTER, PISCATAWAY, NJ, USA, vol. 68, no. 3, 26 February 2020 (2020-02-26), pages 2225 - 2235, XP011821868, ISSN: 0278-0046, [retrieved on 20201125], DOI: 10.1109/TIE.2020.2975457

## Description

### [Technical Field]

Various embodiments of the disclosure described herein relate to a camera module including a piezoelectric motor.

### [Background Art]

A mobile electronic device, such as a smartphone, may include a camera module. The camera module may include lenses, a lens barrel surrounding the lenses, and an image sensor. The camera module may support various functions. For example, the camera module may support functions related to image stabilization (e.g., optical image stabilization (OIS), digital image stabilization (DIS), or electrical image stabilization (EIS)) and auto focus (AF).

The camera module may provide an image stabilization function and an auto focus function by moving the lenses relative to the image sensor. For example, the camera module may move the lenses relative to the image sensor in directions perpendicular to an optical axis in relation to the image stabilization function, or may move the lenses relative to the image sensor in the direction of the optical axis in relation to the auto focus function.

The camera module may include various types of actuators for implementing movement of the lenses. For example, the actuators may be provided by using a stepping motor (STM), a voice coil motor (VCM), shape memory alloys (SMA), and a piezoelectric motor. The CN 114 077 031 A discloses a camera module having an ultrasonic piezoelectric motor, wherein a z-direction piezoelectric actuator is located between a support and a carrier. The Z-direction piezoelectric driver can drive the carrier to move relative to the support along the Z-direction. The KR 2013 0088063 A discloses an ultrasonic motor for generating an elliptical vibration in a vibrator and driving the vibrator pressed against a driven member for rotation. The US 2020/393637 A1 discloses a driving assembly including a piezoelectric element with two piezoelectric ceramic plates and an elastic material sheet disposed between the two piezoelectric ceramic plates. The transmission element is connected to the piezoelectric element.

The above-described information may be provided as related art for a better understanding of the disclosure. No claim or determination is made as to whether any of the above-described contents is applicable as prior art related to the disclosure.

### [Disclosure]

### [Technical Solution]

The invention referring is directed to a camera module as provided in the appended set of claims.

### [Description of Drawings]

FIG. 1 is a block diagram illustrating an electronic device in a network environment according to various embodiments.
FIG. 2 is a block diagram illustrating the camera module according to various embodiments.
FIG. 3A is a front perspective view of an electronic device according to an embodiment.
FIG. 3B is a rear perspective view of the electronic device according to an embodiment.
FIG. 3C is an exploded perspective view of the electronic device according to an embodiment.
FIG. 4A is a front view of a camera module according to an embodiment.
FIG. 4B is a plan view of the camera module according to an embodiment.
FIG. 5 is an exploded perspective view of the camera module according to an embodiment.
FIG. 6 is a view illustrating a lens carrier and a first piezoelectric motor of the camera module according to an embodiment.
FIG. 7 is a view illustrating a first carrier, a second carrier, and the first piezoelectric motor of the camera module according to an embodiment.
FIG. 8 is a view illustrating the first carrier, the second carrier, and a first spring member of the camera module according to an embodiment.
FIG. 9A is a view illustrating the first piezoelectric motor of the camera module according to an embodiment.
FIG. 9B is a view illustrating the first piezoelectric motor of the camera module according to an embodiment.
FIG. 9C is a view illustrating a piezoelectric element and an elastic body of the first piezoelectric motor according to an embodiment.
FIG. 10 is a view illustrating an operation of the first piezoelectric motor according to an embodiment.
FIG. 11 is a view illustrating an operation in which the first piezoelectric element and the elastic body of the first piezoelectric motor vibrate according to an embodiment.
FIG. 12 is a view illustrating a coupling structure of the first piezoelectric motor and the second carrier of the camera module according to an embodiment.
FIG. 13 is a view illustrating a coupling structure of the second carrier, guide members, and a second piezoelectric motor of the camera module according to an embodiment.
FIG. 14 is an exploded perspective view illustrating a camera housing, the second carrier, the guide members, and the second piezoelectric motor of the camera module according to an embodiment.
FIG. 15A is a view illustrating the second piezoelectric motor of the camera module according to an embodiment.
FIG. 15B is a view illustrating the second piezoelectric motor of the camera module according to an embodiment.
FIG. 16 is a view illustrating an operation of the second piezoelectric motor according to an embodiment.
FIG. 17 is a view illustrating a coupling structure of the guide members and the second piezoelectric motor of the camera module according to an embodiment.
FIG. 18A is a view illustrating the second carrier, a first guide member, and a second guide member of the camera module according to an embodiment.
FIG. 18B is a view illustrating the second carrier, the first guide member, and the second guide member of the camera module according to an embodiment.
FIG. 19 is a view illustrating an electrical connection structure between a substrate member and the piezoelectric motors of the camera module according to an embodiment.
FIG. 20A is a view illustrating a moving operation of a first connecting member in the first piezoelectric motor according to an embodiment.
FIG. 20B is a view illustrating a moving operation of s second connecting member in the second piezoelectric motor according to an embodiment.
FIG. 20C is a graph depicting the moving operations of the connecting members in the first piezoelectric motor and the second piezoelectric motor according to an embodiment.
FIG. 21 is a view illustrating a camera housing, a second carrier, and a second piezoelectric motor of a camera module according to an embodiment.
FIG. 22 is a view illustrating the camera housing, the second carrier, and the second piezoelectric motor of the camera module according to an embodiment.
FIG. 23 is a view illustrating the camera housing, the second carrier, and the second piezoelectric motor of the camera module according to an embodiment.

With regard to description of the drawings, identical or similar reference numerals may be used to refer to identical or similar components.

### [Mode for Invention]

Hereinafter, various embodiments of the disclosure will be described with reference to accompanying drawings. Whenever a feature is described as "substantially perpendicular", "substantially vertical" or the like, the term "substantially" may be omitted and the feature may be described as "perpendicular", "vertical" or the like.

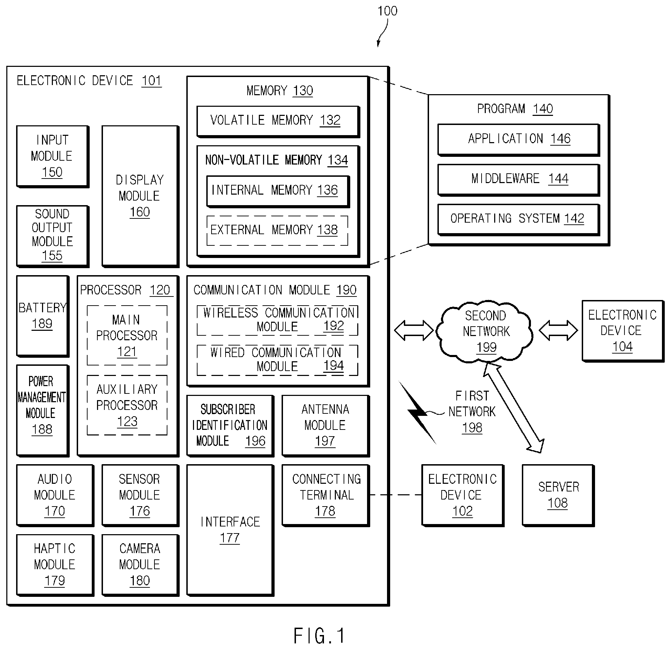

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-ofthings (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

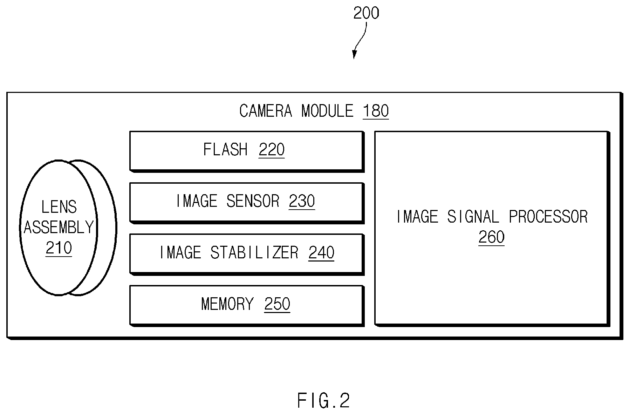

FIG. 2 is a block diagram 200 illustrating the camera module 180 according to various embodiments.

Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer.

The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing processes with respect to an image obtained via the image sensor 230 or an image stored in the memory 250. The one or more image processing processes may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

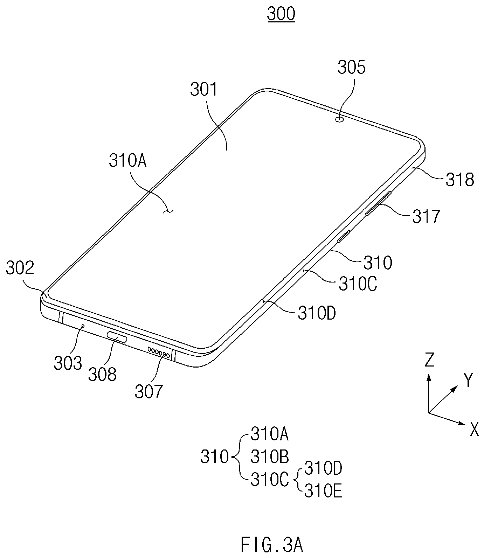

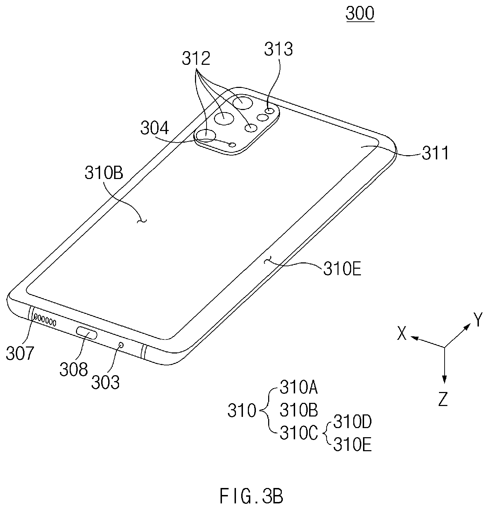

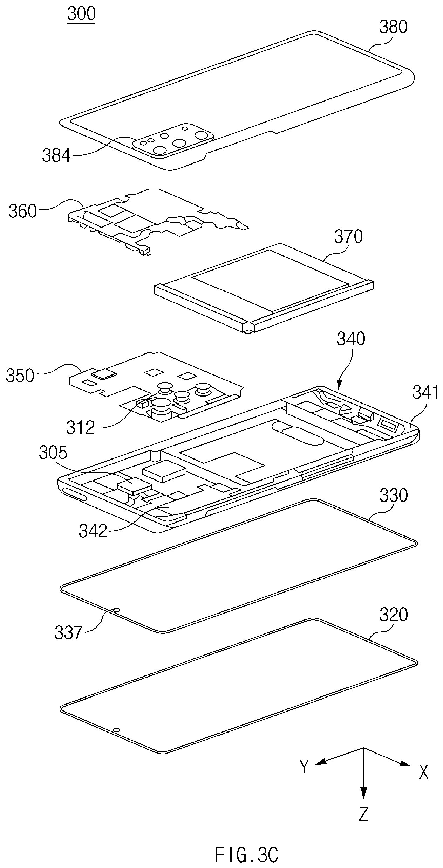

FIG. 3A is a front perspective view of an electronic device according to an embodiment. FIG. 3B is a rear perspective view of the electronic device according to an embodiment. FIG. 3C is an exploded perspective view of the electronic device according to an embodiment.

Referring to FIGS. 3A and 3B, the electronic device 300 according to an embodiment (e.g., the electronic device 101 of FIG. 1) may include a housing 310 that includes a first surface (or, a front surface) 310A, a second surface (or, a rear surface) 310B, and a third surface (or, a side surface) 310C surrounding a space between the first surface 310A and the second surface 310B. In various embodiments, the housing 310 may refer to a structure that forms some of the first surface 310A, the second surface 310B, and the third surface 310C.

The first surface 310A may be formed by a front plate 302, at least a portion of which is substantially transparent (e.g., a glass plate including various coating layers, or a polymer plate). The second surface 310B may be formed by a back plate 311 that is substantially opaque. The back plate 311 may be formed of, for example, coated or colored glass, ceramic, a polymer, metal (e.g., aluminum, stainless steel (STS), or magnesium), or a combination of at least two of the aforementioned materials. The third surface 310C may be formed by a side bezel structure (or, a side member) 318 that is coupled with the front plate 302 and the back plate 311 and that includes metal and/or a polymer. In various embodiments, the back plate 311 and the side bezel structure 318 may be integrally formed with each other and may include the same material (e.g., a metallic material such as aluminum).

The front plate 302 may include two first regions 310D that curvedly and seamlessly extend from partial regions of the first surface 310A toward the back plate 311. The first regions 310D may be located at opposite long edges of the front plate 302.

The back plate 311 may include two second regions 310E that curvedly and seamlessly extend from partial regions of the second surface 310B toward the front plate 302. The second regions 310E may be located at opposite long edges of the back plate 311.

In various embodiments, the front plate 302 (or, the back plate 311) may include only one of the first regions 310D (or, the second regions 310E). Furthermore, in another embodiment, the front plate 302 (or, the back plate 311) may not include a part of the first regions 310D (or, the second regions 310E).

The side bezel structure 318, when viewed from a side of the electronic device 300, may have a first thickness (or, width) at sides (e.g., short sides) not including the first regions 310D or the second regions 310E and may have a second thickness at sides (e.g., long sides) including the first regions 310D or the second regions 310E, the second thickness being smaller than the first thickness.

The electronic device 300 may include at least one of a display 301 (e.g., the display module 160 of FIG. 1), audio modules 303, 304, and 307 (e.g., the audio module 170 of FIG. 1), a sensor module (not illustrated) (e.g., the sensor module 176 of FIG. 1), camera modules 305, 312, and 313 (e.g., the camera module 180 of FIGS. 1 and 2), key input devices 317 (e.g., the input device 150 of FIG. 1), a light emitting element (not illustrated), or a connector hole 308 (e.g., the connecting terminal 178 of FIG. 1). In another embodiment, the electronic device 300 may omit at least one component (e.g., the key input devices 317 or the light emitting element (not illustrated)) among the aforementioned components, or may additionally include other component(s).

The display 301 may be visually exposed through most of the front plate 302. For example, at least a portion of the display 301 may be visually exposed through the front plate 302 that includes the first surface 310A and the first regions 310D of the third surface 310C. The display 301 may be disposed on a rear surface of the front plate 302.

The periphery of the display 301 may be formed to be substantially the same as the shape of the adjacent outside edge of the front plate 302. In another embodiment, to expand the area by which the display 301 is visually exposed, the gap between the outside edge of the display 301 and the outside edge of the front plate 302 may be substantially constant.

A surface of the housing 310 (or, the front plate 302) may include a screen display region that is formed as the display 301 is visually exposed. For example, the screen display region may include the first surface 310A and the first regions 310D of the side surface.

In various embodiments, the screen display region 310A and 310D may include a sensing region (not illustrated) that is configured to obtain biometric information of a user. When the screen display region 310A and 310D includes the sensing region, this may mean that at least a portion of the sensing region overlaps the screen display region 310A and 310D. For example, the sensing region (not illustrated) may refer to a region capable of displaying visual information by the display 301 like the other areas of the screen display region 310A and 310D and additionally obtaining biometric information (e.g., a fingerprint) of the user.

The screen display region 310A and 310D of the display 301 may include a region through which the first camera module 305 (e.g., a punch hole camera) is visually exposed. For example, at least a portion of the periphery of the region through which the first camera module 305 is visually exposed may be surrounded by the screen display region 310A and 310D. In various embodiments, the first camera module 305 may include a plurality of camera modules (e.g., the camera module 180 of FIG. 1).

In various embodiments, the display 301 may be configured such that at least one of an audio module (not illustrated), a sensor module (not illustrated), a camera module (e.g., the first camera module 305), or a light emitting element (not illustrated) is disposed on a rear surface of the screen display region 310A and 310D. For example, the electronic device 300 may be configured such that the first camera module 305 (e.g., an under display camera (UDC)) is disposed on the rear side (e.g., the side facing in the -z-axis direction) of the first surface 310A (e.g., the front surface) and/or the side surface 310C (e.g., at least one surface of the first areas 310D) so as to face toward the first surface 310A and/or the side surface 310C. For example, the first camera module 305 may be disposed under the display 301 and may not be visually exposed through the screen display region 310A and 310D.

In various embodiments, when the first camera module 305 is implemented with an under display camera, the region of the display 301 that faces the first camera module 305 may be formed to be a transmissive region having a specified transmittance as a portion of the display region that displays contents. For example, the transmissive region may have a transmittance of about 5% to about 50%. The transmissive region may include a region through which light for generating an image by being focused on an image sensor (e.g., the image sensor 230 of FIG. 2) passes and that overlaps an effective region (e.g., a field of view (FOV) region) of the first camera module 305. For example, the transmissive region of the display 301 may include a region having a lower pixel density and/or wiring density than a surrounding region.

The display 301 may be combined with, or disposed adjacent to, touch detection circuitry, a pressure sensor capable of measuring the intensity (pressure) of a touch, and/or a digitizer for detecting a stylus pen of a magnetic field type.

The audio modules 303, 304, and 307 may include the microphone holes 303 and 304 and the speaker hole 307.

The microphone holes 303 and 304 may include the first microphone hole 303 formed in a partial region of the third surface 310C and the second microphone hole 304 formed in a partial region of the second surface 310B. A microphone (not illustrated) for obtaining external sound may be disposed in the microphone holes 303 and 304. The microphone may include a plurality of microphones to sense the direction of sound.

The second microphone hole 304 formed in the partial region of the second surface 310B may be disposed adjacent to the camera modules 305, 312, and 313. For example, the second microphone hole 304 may obtain sounds when the camera modules 305, 312, and 313 are executed, or may obtain sounds when other functions are executed.

The speaker hole 307 may include an external speaker hole 307 and a receiver hole for telephone calls (not illustrated). The external speaker hole 307 may be formed in a portion of the third surface 310C of the electronic device 300. In another embodiment, the external speaker hole 307, together with the microphone hole 303, may be implemented as a single hole. Although not illustrated, the receiver hole for telephone calls (not illustrated) may be formed in another portion of the third surface 310C. For example, the receiver hole for telephone calls may be formed in another portion (e.g., a portion facing in the +y-axis direction) of the third surface 310C that faces the portion (e.g., a portion facing in the -y-axis direction) of the third surface 310C in which the external speaker hole 307 is formed. According to various embodiments, the receiver hole for telephone calls may not be formed in a portion of the third surface 310C and may be formed by a separation space between the front plate 302 (or, the display 301) and the side bezel structure 318.

The electronic device 300 may include at least one speaker (not illustrated) that is configured to output sound outside the housing 310 through the external speaker hole 307 or the receiver hole for telephone calls (not illustrated). According to various embodiments, the speaker may include a piezoelectric speaker from which the speaker hole 307 is omitted.

The sensor module (not illustrated) may generate an electrical signal or a data value that corresponds to an operational state inside the electronic device 300 or an environmental state external to the electronic device 300. For example, the sensor module may include at least one of a proximity sensor, an HRM sensor, a fingerprint sensor, a gesture sensor, a gyro sensor, an atmospheric pressure sensor, a magnetic sensor, an acceleration sensor, a grip sensor, a color sensor, an infrared (IR) sensor, a biosensor, a temperature sensor, a humidity sensor, or an illuminance sensor.

The camera modules 305, 312, and 313 may include the first camera module 305 (e.g., a punch hole camera) exposed on the first surface 310A of the electronic device 300, the second camera module 312 exposed on the second surface 310B, and/or the flash 313.

The first camera module 305 may be visually exposed through a portion of the screen display region 310A and 310D of the display 301. For example, the first camera module 305 may be visually exposed on a partial area of the screen display region 310A and 310D through an opening (not illustrated) that is formed in a portion of the display 301. In another example, the first camera module 305 (e.g., an under display camera) may be disposed on a rear surface of the display 301 and may not be visually exposed through the screen display region 310A and 310D.

The second camera module 312 may include a plurality of cameras (e.g., a dual camera, a triple camera, or a quad camera). However, the second camera module 312 is not necessarily limited to including the plurality of cameras and may include one camera.

The first camera module 305 and the second camera module 312 may include one or more lenses, an image sensor, and/or an image signal processor. The flash 313 may include, for example, a light emitting diode or a xenon lamp. In another embodiment, two or more lenses (an IR camera lens, a wide angle lens, and a telephoto lens) and image sensors may be disposed on one surface of the electronic device 300.

The key input devices 317 may be disposed on the third surface 310C of the housing 310 (e.g., the first regions 310D and/or the second regions 310E). In another embodiment, the electronic device 300 may not include all or some of the key input devices 317, and the key input devices 317 not included may be implemented in a different form, such as a soft key, on the display 301. In another embodiment, the key input devices may include a sensor module (not illustrated) that forms the sensing region (not illustrated) that is included in the screen display region 310A and 310D.

The connector hole 308 may be accommodate a connector. The connector hole 308 may be disposed in the third surface 310C of the housing 310. For example, the connector hole 308 may be disposed in the third surface 310C so as to be adjacent to at least a part of the audio modules (e.g., the microphone hole 303 and the speaker hole 307). In another embodiment, the electronic device 300 may include the first connector hole 308 capable of accommodating a connector (e.g., a USB connector) for transmitting/receiving power and/or data with an external electronic device, and/or a second connector hole (not illustrated) capable of accommodating a connector (e.g., an earphone jack) for transmitting/receiving an audio signal with an external electronic device.

The electronic device 300 may include the light emitting element (not illustrated). For example, the light emitting element (not illustrated) may be disposed on the first surface 310A of the housing 310. The light emitting element (not illustrated) may provide state information of the electronic device 300 in the form of light. In another embodiment, the light emitting element (not illustrated) may provide a light source that operates in conjunction with operation of the first camera module 305. For example, the light emitting element (not illustrated) may include an LED, an IR LED, and/or a xenon lamp.

Referring to FIG. 3C, the electronic device 300 according to an embodiment may include a front plate 320 (e.g., the front plate 302 of FIG. 3A), a display 330 (e.g., the display 301 of FIG. 3A), a side member 340 (e.g., the side bezel structure 318 of FIG. 3A), a printed circuit board 350, a rear case 360, a battery 370, a back plate 380 (e.g., the back plate 311 of FIG. 3B), and an antenna (not illustrated).

In various embodiments, the electronic device 300 may not include at least one component (e.g., the rear case 360) among the aforementioned components, or may additionally include other component(s). Some of the components of the electronic device 300 illustrated in FIG. 3C may be identical or similar to some of the components of the electronic device 300 illustrated in FIGS. 3A and 3B, and repetitive descriptions will hereinafter be omitted.

The front plate 320 and the display 330 may be coupled to the side member 340. For example, based on FIG. 3C, the front plate 320 and the display 330 may be disposed under the side member 340. The front plate 320 and the display 330 may be located in the +z-axis direction from the side member 340. For example, the display 330 may be coupled to the bottom of the side member 340, and the front plate 320 may be coupled to the bottom of the display 330. The front plate 320 may form a portion of an outer surface (or, the exterior) of the electronic device 300. The display 330 may be disposed between the front plate 320 and the side member 340 so as to be located inside the electronic device 300.

The side member 340 may be disposed between the display 330 and the back plate 380. For example, the side member 340 may be configured to surround a space between the back plate 380 and the display 330.

The side member 340 may include a frame structure 341 that forms a portion of a side surface of the electronic device 300 (e.g., the third surface 310C of FIG. 3A) and a plate structure 342 extending inward from the frame structure 341.

The plate structure 342 may be disposed inside the frame structure 341 so as to be surrounded by the frame structure 341. The plate structure 342 may be connected with the frame structure 341, or may be integrally formed with the frame structure 341. The plate structure 342 may be formed of a metallic material and/or a nonmetallic (e.g., polymer) material. In an embodiment, the plate structure 342 may support other components included in the electronic device 300. For example, at least one of the display 330, the printed circuit board 350, the rear case 360, or the battery 370 may be disposed on the plate structure 342. For example, the display 330 may be coupled to one surface (e.g., a surface facing in the +z-axis direction) of the plate structure 342, and the printed circuit board 350 may be coupled to an opposite surface (e.g., a surface facing in the - z-axis direction) that faces away from the one surface.

The rear case 360 may be disposed between the back plate 380 and the plate structure 342. The rear case 360 may be coupled to the side member 340 so as to overlap at least a portion of the printed circuit board 350. For example, the rear case 360 may face the plate structure 342 with the printed circuit board 350 therebetween.

A processor (e.g., the processor 120 of FIG. 1), memory (e.g., the memory 130 of FIG. 1), and/or an interface (e.g., the interface 177 of FIG. 1) may be mounted on the printed circuit board 350. The processor may include, for example, one or more of a central processing unit, an application processor, a graphic processing unit, an image signal processor, a sensor hub processor, or a communication processor. The memory may include, for example, a volatile memory or a non-volatile memory. The interface may include, for example, a high definition multimedia interface (HDMI), a universal serial bus (USB) interface, an SD card interface, and/or an audio interface. The interface may electrically or physically connect the electronic device 300 with an external electronic device and may include a USB connector, an SD card/MMC connector, or an audio connector.

The battery 370 (e.g., the battery 189 of FIG. 1) may supply power to at least one component of the electronic device 300. For example, the battery 370 may include a primary cell that is not rechargeable, a secondary cell that is rechargeable, or a fuel cell. At least a portion of the battery 370 may be disposed on substantially the same plane as the printed circuit board 350. The battery 370 may be integrally disposed inside the electronic device 300, or may be disposed so as to be detachable from the electronic device 300.

The antenna (not illustrated) (e.g., the antenna module 197 of FIG. 1) may be disposed between the back plate 380 and the battery 370. The antenna (not illustrated) may include, for example, a near field communication (NFC) antenna, a wireless charging antenna, and/or a magnetic secure transmission (MST) antenna. For example, the antenna (not illustrated) may perform short-range communication with an external device, or may wirelessly transmit and receive power required for charging.

The first camera module 305 may be disposed on at least a portion (e.g., the plate structure 342) of the side member 340 such that a lens receives external light through a partial region of the front plate 320 (e.g., the front surface 310A of FIG. 3A). For example, the lens of the first camera module 305 may be visually exposed through a partial region of the front plate 320. A camera region 337 (e.g., an opening region or a light transmitting region) corresponding to the first camera module 305 may be formed in the display 330.

The second camera module 312 may be disposed on the printed circuit board 350 such that a lens receives external light through a camera region 384 of the back plate 380 (e.g., the rear surface 310B of FIG. 3B) of the electronic device 300. For example, the lens of the second camera module 312 may be visually exposed through the camera region 384. In an embodiment, the second camera module 312 may be disposed in at least a portion of an inner space formed in the housing of the electronic device 300 (e.g., the housing 310 of FIGS. 3A and 3B) and may be electrically connected to the printed circuit board 350 through a connecting member (e.g., a connector).

The camera region 384 may be formed on a surface of the back plate 380 (e.g., the rear surface 310B of FIG. 3B). In an embodiment, the camera region 384 may be formed to be at least partially transparent such that external light is incident to the lens of the second camera module 312. In an embodiment, at least a portion of the camera region 384 may protrude to a predetermined height from the surface of the back plate 380. However, without being necessarily limited thereto, the camera region 384 may form substantially the same plane as the surface of the back plate 380.

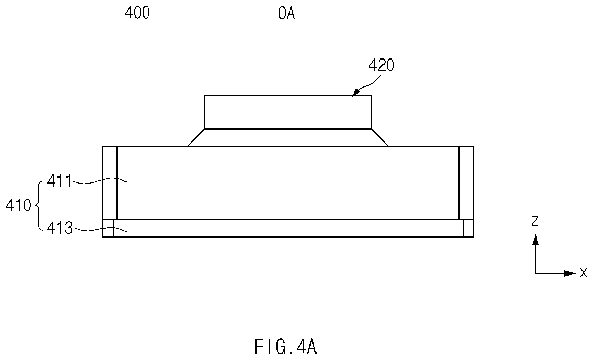

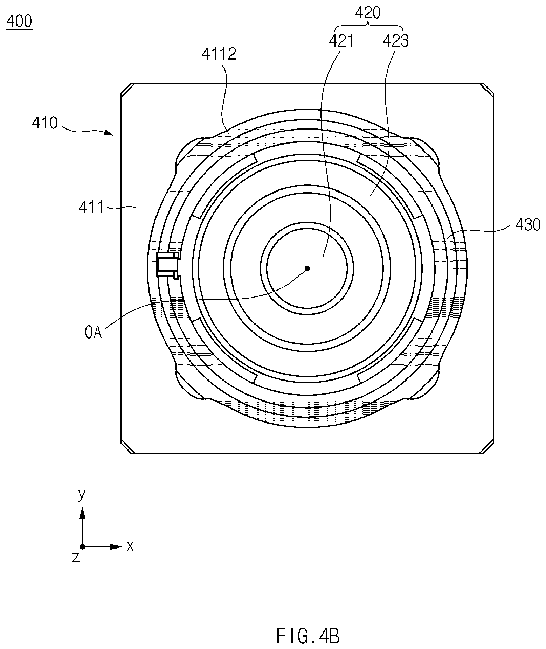

FIG. 4A is a front view of a camera module according to an embodiment. FIG. 4B is a plan view of the camera module according to an embodiment.

Referring to FIGS. 4A and 4B, the camera module 400 according to an embodiment (e.g., the first camera module 305 of FIGS. 3A and 3C and the second camera module 312 of FIGS. 3B and 3C) may include a camera housing 410, a lens assembly 420 (e.g., the lens assembly 210 of FIG. 2), and a lens carrier 430.

In an embodiment, the camera housing 410 may include a cover 411 and a base 413. The cover 411 and the base 413 may be coupled with each other to form a predetermined space in which other parts of the camera module 400 are accommodated.

In an embodiment, the base 413 may support the lens assembly 420 and the lens carrier 430, and the cover 411 may be coupled to the base 413 to cover at least a portion of the lens assembly 420 and at least a portion of the lens carrier 430. The cover 411 may have an opening 4112 formed therein in which at least a portion the lens assembly 420 is accommodated. For example, the lens assembly 420 may pass through the opening 4112, and at least a portion the lens assembly 420 may be exposed outside the camera housing 410. The cover 411 may perform a function of shielding electro-magnetic interference (EMI). For example, the cover 411 may be formed of a metallic material and may be referred to as a shield can (or, an EMI shield can).

In an embodiment, the lens assembly 420 may include a lens 421 and a lens barrel 423 in which the lens 421 is accommodated. For example, the lens barrel 423 may surround at least one lens 421. The lens barrel 423 may provide a function of supporting the lens 421 and protecting the lens 421 from an external impact. At least a portion of the lens assembly 420 may be visually exposed outside the camera housing 410 through the opening 4112 of the cover 411, and external light may be incident to the lens 421.

The lens assembly 420 may pass through the opening 4112 and may protrude to a predetermined height from the cover 411. However, the disclosure is not limited to the illustrated embodiment, and according to various embodiments, the lens assembly 420 may be completely accommodated in the camera housing 410 and may be configured such that external light is incident through a light receiving region including the opening 4112 or transparent glass.

The lens assembly 420 may be accommodated in the camera housing 410 in a state of being coupled to the lens carrier 430. For example, the lens assembly 420 may be coupled to (or, mounted on) the lens carrier 430 and may be configured to move together with at least a portion of the lens carrier 430 relative to the camera housing 410 in at least one direction (e.g., at least one direction among the x-axis direction, the y-axis direction, and the z-axis direction).

In an embodiment, the lens carrier 430 may be coupled with the lens assembly 420 and may be disposed in the camera housing 410 so as to be movable. The lens carrier 430 may be configured such that at least a portion thereof moves relative to the camera housing 410 in the direction of an optical axis OA or a direction substantially perpendicular or perpendicular to the optical axis OA. The lens carrier 430 may move the lens assembly 420 relative to the camera housing 410 (or, an image sensor (not illustrated) fixed to the camera housing 410). For example, all and/or part of the lens carrier 430 may move relative to the camera housing 410 in the direction of the optical axis OA (e.g., the z-axis direction) or a direction substantially perpendicular or perpendicular to the optical axis OA (e.g., the x-axis direction and the y-axis direction) in a state in which at least a portion of the lens carrier 430 is accommodated in the camera housing 410, and the lens assembly 420 may move together with the lens carrier 430.

The camera module 400 according to an embodiment of the disclosure may provide an auto focus (AF) function and an optical image stabilization (OIS) function by controlling movement of the lens carrier 430. For example, the camera module 400 may perform the auto focus function by moving the lens carrier 460 in the direction of the optical axis OA. The camera module 400 may perform the optical image stabilization function (e.g., a camera-shake correction function) by moving the lens carrier 440 in one or more directions substantially perpendicular to the optical axis OA.

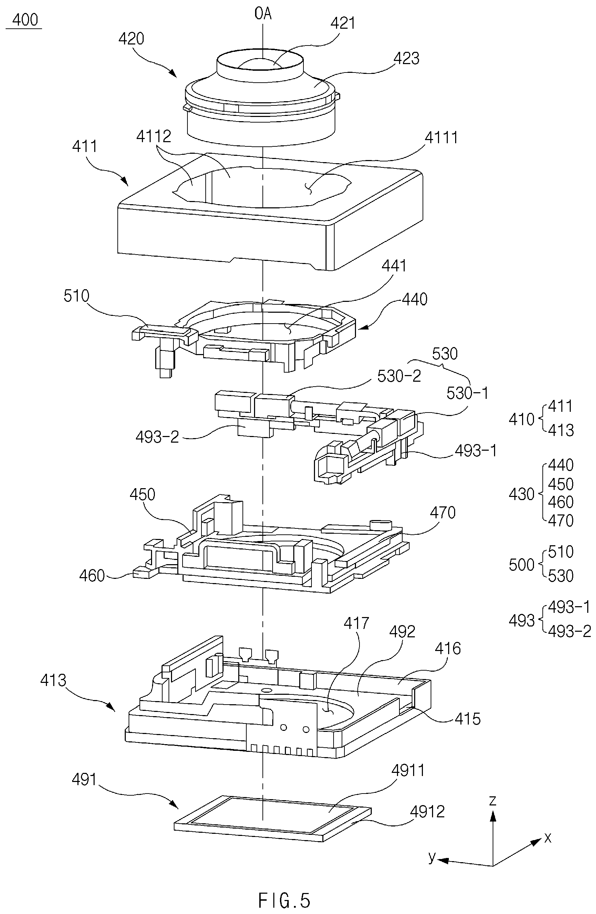

FIG. 5 is an exploded perspective view of the camera module according to an embodiment.

Referring to FIG. 5, the camera module 400 according to an embodiment may include the camera housing 410, the lens assembly 420, the lens carrier 430, a piezoelectric motor 500, a motor holder 493, a sensor assembly 491, and a substrate member 492.

At least some of the components of the camera module 400 illustrated in FIG. 5 may be identical or similar to the components of the camera module 400 illustrated in FIGS. 4A and 4B, and repetitive descriptions will hereinafter be omitted.

In an embodiment, the camera housing 410 may include the base 413 on which the lens carrier 430 is disposed and the cover 411 coupled with the base 413. Through the coupling of the base 413 and the cover 411, the camera housing 410 may have an inner space formed therein in which the lens carrier 430, the piezoelectric motor 500, the substrate member 492, and the lens assembly 420 are disposed. The cover 411 may have a first opening 4111 formed therein through which the lens 421 is exposed outside the camera housing 410.

In an embodiment, the base 413 may support the lens carrier 430, the piezoelectric motor holder 493, the substrate member 492, and the sensor assembly 491. The base 413 may include a first surface 415 (e.g., a surface facing in the +z-axis direction) that faces toward the lens assembly 420 and a second surface (not illustrated) (e.g., a surface facing in the -z-axis direction) that faces away from the first surface 415. The lens carrier 430 and the substrate member 492 may be disposed on the first surface 415 of the base 413, and the sensor assembly 491 may be disposed on the second surface.

The base 413 may include a sidewall part 416 partially brought into contact with an inner surface 4112 of the cover 411 when the base 413 is coupled with the cover 411. For example, the sidewall part 416 may guide the coupling of the base 413 and the cover 411. On the first surface 415 of the base 413, the sidewall part 416 may substantially vertically extend along the periphery of the first surface 415. The sidewall part 416 may support a portion of the substrate member 492.

The base 413 may have a second opening 417 formed therein. For example, the second opening 417 may be formed in a central region of the base 413 and may penetrate from the first surface 415 to the second surface. The second opening 417 may be aligned with the lens assembly 420 and an image sensor 4911 with respect to the optical axis OA. For example, the lens assembly 420, the second opening 417, and the image sensor 4911 may overlap one another in the direction of the optical axis OA. The lens assembly 420 and the image sensor 4911 may face each other through the second opening 417. For example, light passing through the lens assembly 420 may be incident or delivered to the image sensor 4911 through the second opening 417.

In an embodiment, the lens assembly 420 is coupled to the lens carrier 430. For example, the lens assembly 420 may be coupled to a first carrier 440 of the lens carrier 430 and may move together with the first carrier 440. The lens assembly 420 may be coupled to the first carrier 440 by being at least partially inserted into a receiving hole 441 of the first carrier 440. The lens assembly 420 may include the at least one lens 421 and the lens barrel 423 in which the lens 421 is accommodated. For example, the lens barrel 423 may be coupled to the first carrier 440 by being inserted into the receiving hole 441 of the first carrier 440.

The lens assembly 420 may move relative to the camera housing 410 and the sensor assembly 491 as the lens carrier 430 moves. For example, as the lens assembly 420 moves in the direction of the optical axis OA (e.g., the z-axis direction), the distance between the lens 421 and the image sensor 4911 in the direction of the optical axis OA may be changed (e.g., an AF function). As the lens assembly 420 moves in a direction substantially perpendicular to the optical axis OA, the position of the optical axis OA of the lens 421 relative to the image sensor 4911 may be changed (e.g., an OIS function).

The lens carrier 430 may be configured to partially move in the camera housing 410 in the direction of the optical axis OA and one or more directions substantially perpendicular to the optical axis OA. The lens carrier 430 may be a component for moving the lens assembly 420 relative to the image sensor 4911, and the lens assembly 420 may move together with the lens carrier 430.

The lens carrier 430 may include the first carrier 440, a second carrier 450, a first guide member 460, and a second guide member 470. The lens carrier 430 may be provided such that through a connection structure between the first carrier 440, the second carrier 450, the first guide member 460, and the second guide member 470, the first carrier 440 is movable in the direction of the optical axis OA and the second carrier 450 is movable in two directions (e.g., the x-axis direction and the y-axis direction) perpendicular to the optical axis OA. The lens assembly 420 may be coupled to the first carrier 440.

The first carrier 440 is connected to the second carrier 450 so as to be movable in the direction of the optical axis OA. For example, the first carrier 440 may be connected to the second carrier 450, but may move in the direction of the optical axis OA with respect to the second carrier 450. The second carrier 450 may be connected to the base 413 through the first guide member 460 and the second guide member 470 so as to be movable in the two directions substantially perpendicular to the optical axis OA. For example, the second carrier 450 may move in a direction substantially perpendicular to the optical axis OA with respect to the base 413. The first carrier 440 may move together with the second carrier 450 when the second carrier 450 moves in the direction substantially perpendicular to the optical axis OA. For example, the first carrier 440 may be referred to as an AF carrier that moves the lens in the direction of the optical axis OA, and the second carrier 450 may be referred to as an OIS carrier that moves the lens 421 in the direction substantially perpendicular to the optical axis OA. The first guide member 460 and the second guide member 470 may receive a driving force from a second piezoelectric motor 530 and may guide a movement direction of the second carrier 450. The connection structure between the first carrier 440, the second carrier 450, the first guide member 460, and the second guide member 470 included in the lens carrier 430 will be described below in more detail.

The piezoelectric motor 500 generates a driving force for moving the lens assembly 420 in the direction of the optical axis OA and the direction substantially perpendicular to the optical axis OA. The piezoelectric motor 500 may generate the driving force based on vibration displacement of a piezoelectric element. The piezoelectric motor 500 may include a first piezoelectric motor 510 that provides a driving force for moving the lens assembly 420 in the direction of the optical axis OA and the second piezoelectric motor 530 that provides a driving force for moving the lens assembly 420 in the direction substantially perpendicular to the optical axis OA.

The first piezoelectric motor 510 is configured to move the first carrier 440 in the direction of the optical axis OA. For example, the first piezoelectric motor 510 may be connected to the first carrier 440 and the second carrier 450, and the first carrier 440 may be moved in the direction of the optical axis OA with respect to the second carrier 450 by the driving force transmitted from the first piezoelectric motor 510. The first piezoelectric motor 510 may be referred to as an AF motor or an AF actuator for the AF function.

In an embodiment, the second piezoelectric motor 530 is configured to move the second carrier 450 in two directions (e.g., the x-axis direction and the y-axis direction) substantially perpendicular to the optical axis OA. The second piezoelectric motor 530 may include a first sub-piezoelectric motor 530-1 and a second sub-piezoelectric motor 530-2 for moving the second carrier 450 in two shift axis directions perpendicular to each other. For example, the first sub-piezoelectric motor 530-1 may generate a driving force for moving the second carrier 450 in the x-axis direction, and the second sub-piezoelectric motor 530-2 may generate a driving force for moving the second carrier 450 in the y-axis direction. The second piezoelectric motor 530 may be referred to as an OIS motor or an OIS actuator for the OIS function.

The second piezoelectric motor 530 transmits a driving force to the second carrier 450 through the guide members 460 and 470. For example, the first sub-piezoelectric motor 530-1 may be connected to the base 413 and the first guide member 460, and the second carrier 450 may be moved in the x-axis direction with respect to the base 413 by the driving force transmitted through the first guide member 460. For example, the second sub-piezoelectric motor 530-2 may be connected to the base 413 and the second guide member 470, and the second carrier 450 may be moved in the y-axis direction with respect to the base 413 by the driving force transmitted through the second guide member 470. The second piezoelectric motor 530 may be indirectly connected with the base 413 through the motor holder 493.

In an embodiment, the motor holder 493 may support the second piezoelectric motor 530. For example, the motor holder 493 may include a first motor holder 493-1 supporting the first sub-piezoelectric motor 530-1 and a second motor holder 493-2 supporting the second sub-piezoelectric motor 530-2. The motor holder 493 may be fixedly disposed on the base 413, and the second piezoelectric motor 530 may be connected to the motor holder 493. For example, as the second piezoelectric motor 530 is connected to the motor holder 493, the position of the second piezoelectric motor 530 on the base 413 may be fixed in a state in which operation of the second piezoelectric motor 530 is possible. As the second piezoelectric motor 530 is supported on the motor holder 493, movement and/or separation of the second piezoelectric motor 530 in the z-axis direction may be restricted.

In an embodiment, the sensor assembly 491 may be fixed to the camera housing 410. For example, the sensor assembly 491 may be fixedly disposed on the second surface of the base 413. When the lens assembly 420 moves, the sensor assembly 491 may remain fixed to the camera housing 410, and the position of the sensor assembly 491 relative to the lens assembly 420 may be changed accordingly.

The sensor assembly 491 may include a circuit board 4912 fixedly disposed on the base 413 and the image sensor 4911 disposed on one surface (e.g., a surface facing in the +z-axis direction) of the circuit board 4911 to face the lens assembly 420. According to various embodiments, the image sensor assembly 491 may further include an optical filter (e.g., an infrared filter) disposed to cover the image sensor 4911.

In an embodiment, the circuit board 4912 may be fixedly disposed on the second surface (e.g., a surface facing in the -z-axis direction) of the base 413. The circuit board 4912 may be electrically connected with a main board (e.g., the printed circuit board 350 of FIG. 3C) of the electronic device (e.g., the electronic device 300 of FIGS. 3A, 3B, and 3C). The image sensor 4911 may be disposed on the circuit board 4912 so as to be aligned with the optical axis OA. The image sensor 4911 may overlap the second opening 417 of the base 413 in the direction of the optical axis OA and may face the lens 421 of the lens assembly 420 through the second opening 417. The image sensor 4911 may be electrically connected with the circuit board 4912. The image sensor may receive light passing through the lens 421 and may be configured to generate an electrical signal based on the received light signal.

In an embodiment, the substrate member 492 may be disposed on the base 413. A portion of the substrate member 492 may be electrically connected with the piezoelectric motor 500 so as to transmit an electrical signal to the piezoelectric motor 500. The substrate member 492 may be electrically connected with the main board 350 of the electronic device 300 through a connecting member (not illustrated). For example, the substrate member 492 may include a printed circuit board (PCB), a flexible printed circuit board (FPCB), or a rigid-flexible printed circuit board (RFPCB). An opening region corresponding to the second opening 417 of the base 413 may be formed in the substrate member 492.

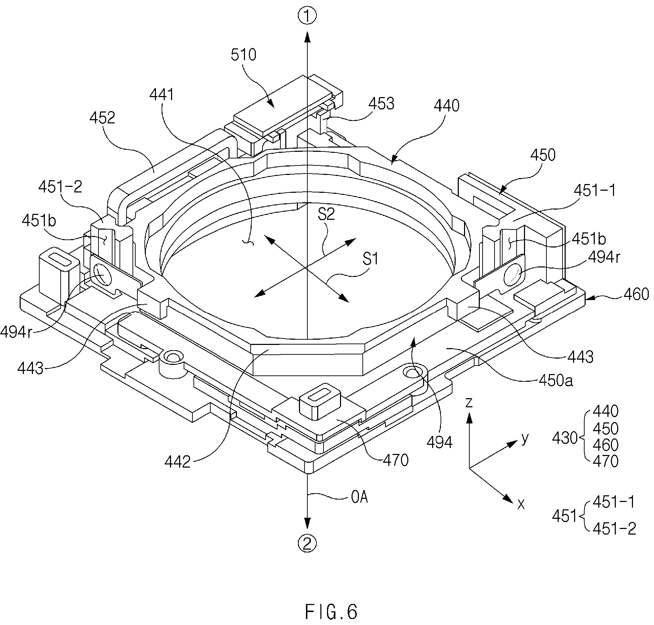

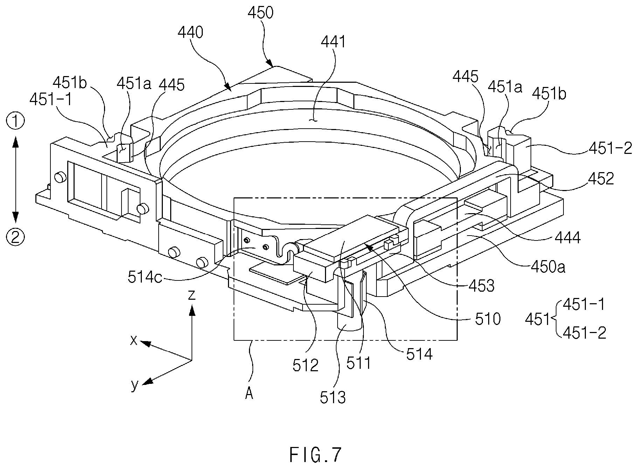

FIG. 6 is a view illustrating the lens carrier and the first piezoelectric motor of the camera module according to an embodiment. FIG. 7 is a view illustrating the first carrier, the second carrier, and the first piezoelectric motor of the camera module according to an embodiment.

Referring to FIGS. 6 and 7, the camera module according to an embodiment (e.g., the camera module 400 of FIGS. 4A, 4B, and 5) may include the first guide member 460, the second carrier 450 seated on the first guide member 460, the first carrier 440 seated on the second carrier 450, the second guide member 470 seated on the second carrier 450, and the first piezoelectric motor 510 connected to the first carrier 440 and the second carrier 450. For example, the lens carrier 430 may be provided in a structure in which the first carrier 440, the second carrier 450, the first guide member 460, and the second guide member 470 are connected so as to be integrally or separately movable relative to each other. Each of the second carrier 450 and the first guide member 460 may have an opening region formed therein to overlap the receiving hole 441 of the first carrier 440 and the second opening (e.g., the second opening 417 of FIG. 5) of the base (e.g., the base 413 of FIG. 5) in the direction of the optical axis OA.

In an embodiment, the lens carrier 430 may be configured such that the first carrier 440 moves relative to the camera housing 410 in the direction of the optical axis OA and the second carrier 450 moves relative to the camera housing 410 in the direction of a first shift axis S1 and the direction of a second shift axis S2 that are substantially perpendicular to the optical axis OA. Accordingly, the lens carrier 430 may move the lens assembly (e.g., the lens assembly 420 of FIG. 5) in response to the AF function and the OIS function.

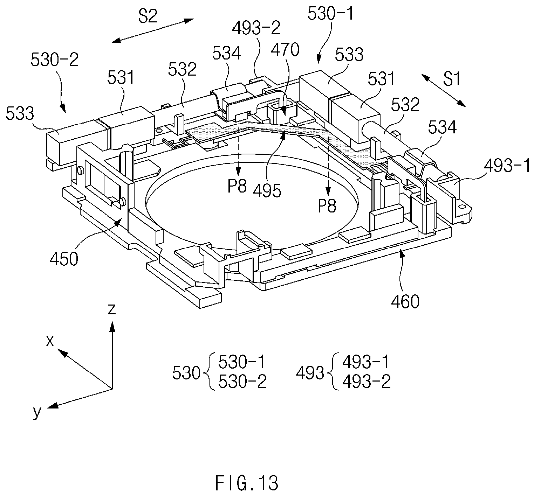

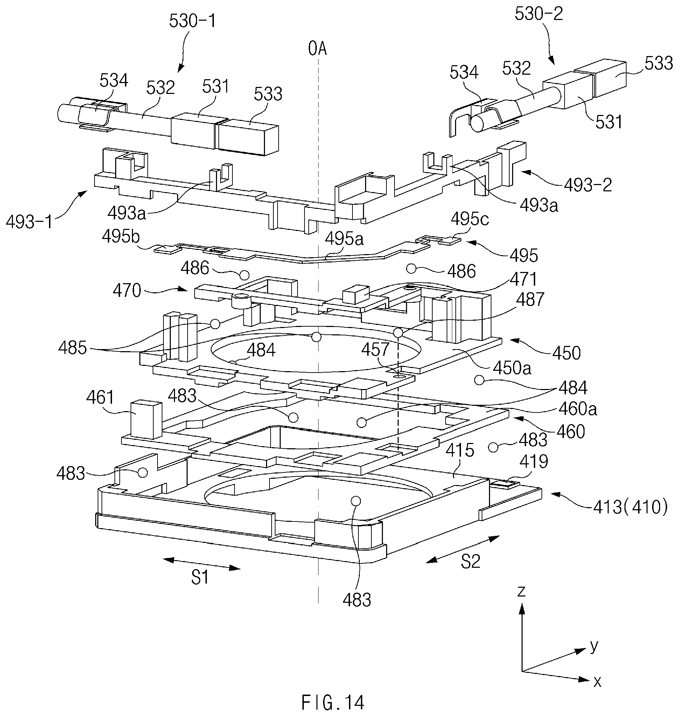

In an embodiment, movement of the second carrier 450 in the direction of the first shift axis S1 and the direction of the second shift axis S2 may be guided by the first guide member 460 and the second guide member 470. For example, movement of the second carrier 450 relative to the first guide member 460 in the direction of the first shift axis S1 may be restricted, and the second carrier 450 may be movable in the direction of the second shift axis S2. Movement of the second carrier 450 relative to the second guide member 470 in the direction of the second shift axis S2 may be restricted, and the second carrier 450 may be movable in the direction of the first shift axis S1. A connection structure between the first guide member 460, the second carrier 450, and the second guide member 470 will be described below in detail with reference to FIGS. 13 and 14.

In an embodiment, the first carrier 440 may be disposed on the second carrier 450. For example, the first carrier 440 may be seated on a first upper surface 450a of the second carrier 450. The first carrier 440 may move together with the second carrier 450 when the second carrier 450 moves. For example, the first carrier 440 may move together with the second carrier 450 in the directions of the shift axes S1 and S2 as the second carrier 450 moves in the directions of the shift axes S1 and S2. The camera module 400 according to an embodiment of the disclosure may provide the AF function as the first carrier 440 having the lens assembly 420 coupled thereto moves relative to the second carrier 450 in the direction of the optical axis OA and may provide the OIS function as the first carrier 440 having the lens assembly 420 coupled thereto moves together with the second carrier 450 relative to the camera housing 410 in the directions of the shift axes S1 and S2.

The first carrier 440 is connected to the second carrier 450 so as to be movable in the direction of the optical axis OA. For example, the first carrier 440 may be connected to the second carrier 450, but may be movable relative to the second carrier 450 in the direction of the optical axis OA. Movement of the first carrier 440 relative to the second carrier 450 in the directions of the shift axes S1 and S2 may be restricted, but the first carrier 440 may be movable in the direction of the optical axis OA. Support parts 451 for guiding movement of the first carrier 440 in the direction of the optical axis OA may be formed on the first upper surface 450a of the second carrier 450. For example, the support parts 451 may extend from the first upper surface 450a of the second carrier 450 in a direction (e.g., a first optical axis direction ①) substantially perpendicular to the first upper surface 450a. In the illustrated embodiment, the support parts 451 may include a first support part 451-1 and a second support part 451-2 that are formed on corner portions of the second carrier 450 facing away from each other. However, the illustrated embodiment is illustrative, and the number and/or positions of support parts 451 may be diversely changed without being limited to the illustrated embodiment.

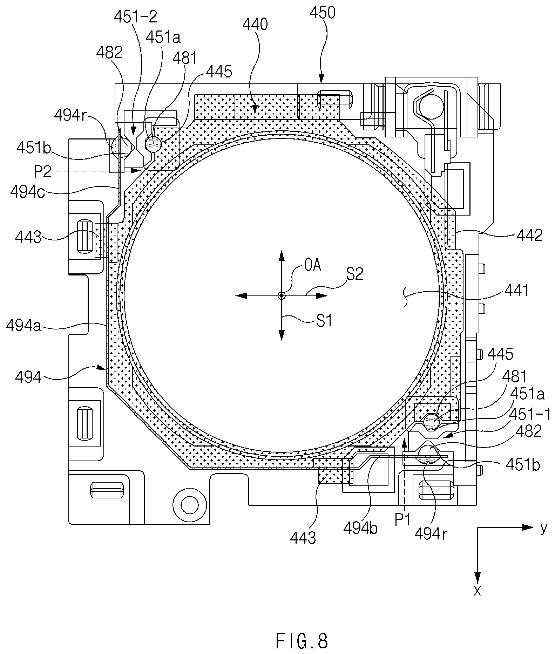

The first carrier 440 may be movable relative to the second carrier 450 in the direction of the optical axis OA through a first ball guide structure including a plurality of first balls (e.g., a plurality of first balls 481 of FIG. 8). The plurality of first balls 481 for guiding movement of the first carrier 440 may be disposed between a portion of the first carrier 440 and a portion of the second carrier 450. For example, the second carrier 450 may have, on the support parts 451, first grooves 451a in which the plurality of first balls 481 are accommodated, and the first carrier 440 may have, on a partial region of a side surface (e.g., a surface facing in a direction perpendicular to the optical axis OA), second grooves 445 facing the first grooves 451a. The first grooves 451a and the second grooves 445 may extend in the direction of the optical axis OA. The first grooves 451a and the second grooves 445 may be disposed to face each other to form or define spaces in which the plurality of first balls 481 are accommodated. For example, the plurality of first balls 481 may be arranged between the first grooves 451a and the second grooves 445 in the direction of the optical axis OA. The plurality of first balls 481 may be accommodated in the spaces between the first grooves 451a and the second grooves 445 so as to be rotatable. For example, when the first carrier 440 moves in the direction of the optical axis OA with respect to the second carrier 450, the plurality of first balls 481 may perform a rotational motion or a rolling motion between the first grooves 451a and the second grooves 445.

A ball guide structure may be used to ensure the stability of the movement of the optical axis of the AF carrier, and a preload may be applied by a spring to ensure a stable fit on the ball guide part.

A movement distance of the first carrier 440 relative to the second carrier 450 in the direction of the optical axis OA may be restricted by a stopper structure (e.g., a first stopper 452 and a second stopper 444). For example, the second carrier 450 may include the first stopper 452 disposed on the first upper surface 450a, and the first carrier 440 may include the second stopper 444 disposed between the first stopper 452 and the first upper surface 450a. When the first carrier 440 moves in the direction of the optical axis OA (e.g., the first optical axis direction ①) with respect to the second carrier 450, a movement distance of the first carrier 440 in the direction of the optical axis OA may be limited to a specified range as the first stopper 452 and the second stopper 444 make contact with each other. In addition, separation of the first carrier 440 from the second carrier 450 in the direction of the optical axis OA may be prevented by the first stopper 452 and the second stopper 444.

The first carrier 440 may apply a predetermined pre-load to the second carrier 450 through a first spring member (or, an elastic member) 494. The elastic member may be any element that can be elastically deformed. Specifically, the elastic member may be made of a metal. The elastic member may be a spring member. The first spring member 494 may be coupled to at least a portion of a side surface 442 of the first carrier 440. The first spring member 494 may be configured such that opposite end portions face third grooves 451b formed on the support parts 451 and a central portion between the opposite end portions is coupled to the side surface of the first carrier 440. The first carrier 440 may have, on partial regions of the side surface thereof, a plurality of coupling protrusions 443 to which the first spring member 494 is coupled. For example, parts of the central portion of the first spring member 494 may be coupled to and supported on the plurality of coupling protrusions 443. The first spring member 494 may have, on the opposite end portions thereof, ball receiving recesses 494r in which second balls (e.g., second balls 482 of FIG. 8) are accommodated. For example, the ball receiving recesses 494r of the first spring member 494 may face the third grooves 451b of the support parts 451, and the second balls 482 may be disposed between the ball receiving recesses 494r and the third grooves 451b. The structure in which the pre-load is applied between the first carrier 440 and the second carrier 450 through the first spring member 494 will be described below in detail with reference to FIG. 8.

In an embodiment, the second carrier 450 may include the support part 451 having a ball guide structure formed thereon and a motor support part 453 on which the first piezoelectric motor 510 is disposed. The support parts 451 and the motor support part 453 may extend from the first upper surface 450a of the second carrier 450 in the first optical axis direction ①.

In an embodiment, the support parts 451 may be disposed between the side surface of the first carrier 440 and the first spring member 494. The first grooves 451a and the third grooves 451b may be formed on the support parts 451. For example, the first grooves 451a may be formed on first surfaces of the support parts 451 that face toward the first carrier 440, and the third grooves 451b may be formed on second surfaces (e.g., surfaces facing away from the first surfaces) of the support parts 451 that face toward the end portions of the first spring member 494. The first grooves 451a and the third grooves 451b may extend in the direction of the optical axis OA by a predetermined length.

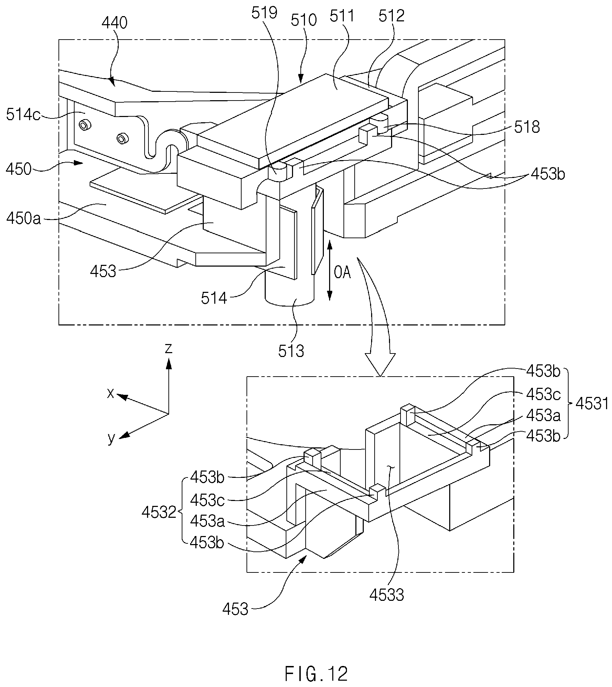

In an embodiment, the motor support part 453 may be formed on a corner portion of the second carrier 450. For example, the motor support part 453 may be formed on one of corner portions where the support parts 451 are not formed, among the four corner portions of the second carrier 450. At least a portion of the first piezoelectric motor 510 may be bonded to the motor support part 453. The structure in which the first piezoelectric motor 510 is coupled to the motor support part 453 will be described below in detail with reference to FIG. 12.

The first piezoelectric motor 510 provides a driving force for moving the first carrier 440 in the direction of the optical axis OA. For example, the first piezoelectric motor 510 may generate the driving force, based on a change in the shape of piezoelectric ceramic depending on application of a voltage. The first carrier 440 may be moved in the first optical axis direction ① or a second optical axis direction ② by the first piezoelectric motor 510. In various embodiments, the first piezoelectric motor 510 may be referred to as a piezoelectric linear actuator or an ultrasonic linear actuator.

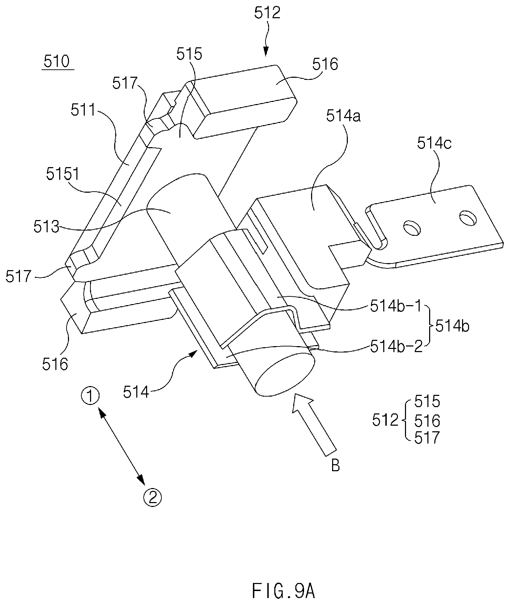

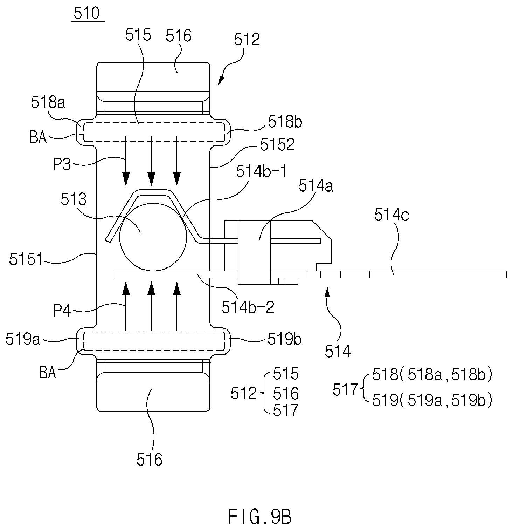

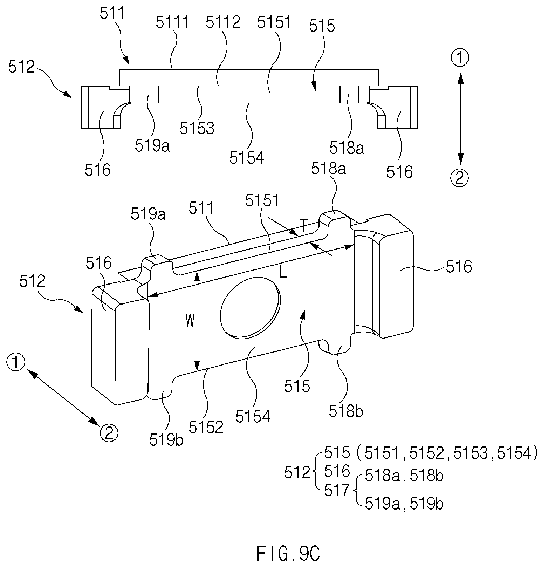

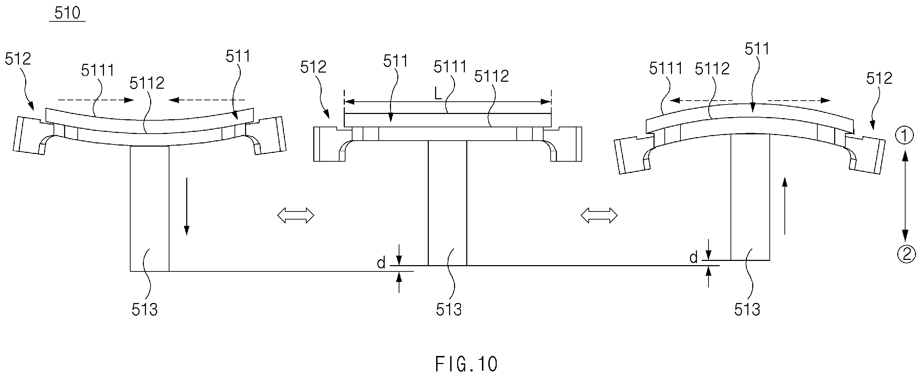

The first piezoelectric motor 510 is connected to the first carrier 440 and the second carrier 450 and is configured to move the first carrier 440 relative to the second carrier 450 in the direction of the optical axis OA. The first piezoelectric motor 510 includes a first piezoelectric element 511, an elastic body 512, a first rod 513, and a first connecting member 514. The first piezoelectric motor 510 may be connected to the first carrier 440 and the second carrier 450 as a portion of the elastic body 512 is coupled to the motor support part 453 of the second carrier 450 and a first fixed portion 514c of the first connecting member 514 is coupled to the first carrier 440. For example, the first piezoelectric motor 510 may be connected with the first carrier 440 in a state of being supported on the motor support part 453. The first piezoelectric motor 510 generates a driving force, based on vibration displacement of the first piezoelectric element 511 and the elastic body 512. For example, the first piezoelectric motor 510 may generate vibration displacement in a state in which the elastic body 512 is supported on the motor support part 453, and the vibration displacement may be transferred to the first carrier 440 through the first rod 513 and the first connecting member 514. The components and operation of the first piezoelectric motor 510 will be described below in detail with reference to FIGS. 9A, 9B, 9C, and 10.

FIG. 8 is a view illustrating the first carrier, the second carrier, and the first spring member of the camera module according to an embodiment.

FIG. 8 may be referred to as a plan view of the first carrier 440, the second carrier 450, and the first spring member 494 illustrated in FIG. 6 as viewed from above (e.g., in the +z-axis direction). For example, FIG. 8 is a view in which the first guide member 460 and the second guide member 470 in FIG. 6 are omitted.

Hereinafter, a pre-load structure between the first carrier 440 and the second carrier 450, which is provided through the first spring member 494, will be described with reference to FIGS. 6 and 8 together.

Referring to FIGS. 6 and 8, the camera module according to an embodiment (e.g., the camera module 400 of FIGS. 4A, 4B, and 5) may include the first spring member 494, and a pre-load structure or a tension structure may be provided or applied between the first carrier 440 and the second carrier 450 accordingly.

In an embodiment, the first spring member 494 may be formed to have an elastic force. For example, the first spring member 494 may be a spring having a thin plate shape (e.g., a plate spring) and may elastically fix the first carrier 440 and the second carrier 450. For example, the first spring member 494 may elastically fasten the first carrier 440 and the second carrier 450 as one portion is fixed to the first carrier 440 and another portion applies an elastic force to the second carrier 450 supporting the first carrier 440. In various embodiments, the first spring member 494 may be formed of a plate spring made of a metallic material, but is not limited thereto.

In an embodiment, the first spring member 494 may include a first portion 494a coupled to the side surface of the first carrier 440, a second portion 494b extending from one end of the first portion 494a and partially facing the first support part 451-1 of the second carrier 450, and a third portion 494c extending from an opposite end of the first portion 494a and partially facing the second support part 451-2 of the second carrier 450. For example, the first spring member 494 may be formed in a shape in which the first portion 494a, the second portion 494b, and the third portion 494c are partially bent along the side surface of the first carrier 440. The first spring member 494 may be formed to correspond to the shape of the first carrier 440.

In an embodiment, the first portion 494a of the first spring member 494 may be fixedly coupled to the side surface of the first carrier 440. At least part of the first portion 494a may be fitted into the first carrier 440 by the coupling protrusions 443 of the first carrier 440. For example, the first portion 494a may be partially bent to extend from a side surface of the first carrier 440 that faces in the +x-axis direction to a side surface of the first carrier 440 that faces in the -y-axis direction. In various embodiments, the first portion 494a may be attached to the side surface of the first carrier 440 through various adhesive means.

In an embodiment, the second portion 494b of the first spring member 494 may extend from one side of the first portion 494a (e.g., an end portion facing in the +y-axis direction based on FIG. 8) and may be spaced apart from the side surface of the first carrier 440. For example, the second portion 494b may extend from the first portion 494a toward the first support part 451-1. The second portion 494b may form or define one end portion of the first spring member 494. For example, the one end portion of the first spring member 494 may be defined as an end of the second portion 494b. The ball receiving recess 494r, in which the second ball 482 is accommodated, may be formed on the second portion 494b. For example, the ball receiving recess 494r of the second portion 494b may face the third groove 451b of the first support part 451-1. The second ball 482 may be accommodated in the space between the third groove 451b of the first support part 451-1 and the ball receiving recess 494r of the second portion 494b so as to be rotatable.

The second portion 494b of the first spring member 494 may overlap the first support part 451-1 and the first groove 451a of the first carrier 440 in the direction of the first shift axis S1 substantially perpendicular to the optical axis OA. For example, the second portion 494b may overlap the first groove 451a and the third groove 451b formed on the first support part 451-1 and the second groove 445 formed on the first carrier 440 in the direction of the first shift axis S1. The second portion 494b may apply a pre-load P1 in a direction toward the first support part 451-1. As the pre-load P1 is applied by the second portion 494b, the first ball 481 or the second ball 482 may be stably seated in the first groove 451a and the second groove 445 or in the third groove 451b and the ball receiving recess 494r, and movement of the first ball 481 or the second ball 482 in directions other than the extension direction of the first groove 451a, the second groove 445, and the third groove 451b (e.g., the direction of the optical axis OA) may be prevented or reduced.

The second portion 494b of the first spring member 494 may elastically press the second ball 482 accommodated in the third groove 451b of the first support part 451-1 in a state of being disposed to overlap the first groove 451a of the first carrier 440 in the direction of the first shift axis S1 with the first support part 451-1 of the second carrier 450 therebetween. Due to the pre-load P1 applied by the second portion 494b, the first support part 451-1 may be brought into contact with the first ball 481 and the second ball 482 by a predetermined pressing force facing in the direction of the first shift axis S 1. Accordingly, movement in the direction of the second shift axis S2 between the first carrier 440 and the second carrier 450 may be restricted or prevented.

In an embodiment, the third portion 494c of the first spring member 494 may extend from an opposite side of the first portion 494a (e.g., an end portion facing in the -x-axis direction based on FIG. 8) and may be spaced apart from the side surface of the first carrier 440. For example, the third portion 494c may extend from the first portion 494a toward the second support part 451-2. The third portion 494c may form or define an opposite end portion of the first spring member 494. For example, the opposite end portion of the first spring member 494 may be defined as an end of the third portion 494c. The ball receiving recess 494r, in which the second ball 482 is accommodated, may be formed on the third portion 494c. For example, the ball receiving recess 494r of the third portion 494c may face the third groove 451b of the second support part 451-2. The second ball 482 may be accommodated in the space between the third groove 451b of the second support part 451-2 and the ball receiving recess 494r of the third portion 494c so as to be rotatable. The third portion 494c may apply a pre-load P2 in a direction toward the second support part 451-2.

The third portion 494c of the first spring member 494 may overlap the second support part 451-2 and the first groove 451a of the first carrier 440 in the direction of the second shift axis S2 substantially perpendicular to the optical axis OA. For example, the third portion 494c may overlap the first groove 451a and the third groove 451b formed on the second support part 451-2 and the second groove 455 formed on the first carrier 440 in the direction of the second shift axis S2. The third portion 494c may apply the pre-load P2 in the direction toward the second support part 451-2. As the pre-load P2 is applied by the direction toward portion 494c, the first ball 481 or the second ball 482 may be stably seated in the first groove 451a and the second groove 445 or in the third groove 451b and the ball receiving recess 494r, and movement of the first ball 481 or the second ball 482 in directions other than the extension direction of the first groove 451a, the second groove 445, and the third groove 451b (e.g., the direction of the optical axis OA) may be prevented or reduced.

The third portion 494c of the first spring member 494 may elastically press the second ball 482 accommodated in the third groove 451b of the second support part 451-2 in a state of being disposed to overlap the first groove 451a of the first carrier 440 in the direction of the second shift axis S2 with the second support part 451-2 of the second carrier 450 therebetween. Due to the pre-load P2 applied by the third portion 494c, the second support part 451-2 may be brought into contact with the first ball 481 and the second ball 482 by a predetermined pressing force facing in the direction of the second shift axis S2. Accordingly, movement in the direction of the first shift axis S1 between the first carrier 440 and the second carrier 450 may be restricted or prevented.

As the pre-load structure is applied through the first spring member 494, the camera module 400 according to the embodiment of the disclosure may secure the stability of the ball guide structure 481 and 482 that guides movement of the first carrier 440 relative to the second carrier 450 in the direction of the optical axis OA. In addition, the first spring member 494 may prevent tilt of the first carrier 440 with respect to the second carrier 450 (e.g., a rotational motion about an axis perpendicular to the optical axis OA), thereby stably maintaining a state in which the first rod 513 of the first piezoelectric motor 510 and the axis of the ball guide structure are aligned. In addition, the first spring member 494 may prevent or reduce movement of the first carrier 440 relative to the second carrier 450 in the directions of the shift axes S1 and S2 substantially perpendicular to the optical axis OA.

FIG. 9A is a view illustrating the first piezoelectric motor of the camera module according to an embodiment. FIG. 9B is a view illustrating the first piezoelectric motor of the camera module according to an embodiment. FIG. 9C is a view illustrating the piezoelectric element and the elastic body of the first piezoelectric motor according to an embodiment.

FIG. 9A is a perspective view of the first piezoelectric motor, and FIG. 9B is a plan view of the first piezoelectric motor of FIG. 9A as viewed in a direction B.

Referring to FIGS. 9A, 9B, and 9C, the first piezoelectric motor 510 of the camera module according to an embodiment (e.g., the camera module 400 of FIGS. 4A, 4B, and 5) includes the first piezoelectric element 511, the elastic body 512, the first rod 513, and the first connecting member 514. For example, the first piezoelectric element 511, the elastic body 512, and the first rod 513 may be sequentially coupled in the optical axis directions ① and ②, and the first connecting member 514 may be coupled to the first rod 513 so as to slide in the optical axis directions ① and ②.

In an embodiment, when a voltage is applied to the first piezoelectric element 511, mechanical displacement or deformation such as expansion or contraction may occur depending on the direction of an electric field and the polarization direction of the first piezoelectric element 511. For example, the first piezoelectric element 511 may be deformed when a voltage is applied thereto. The first piezoelectric element 511 may be formed by using various piezoelectric elements including piezo-ceramic, a piezo-polymer, or a piezo-composite. For example, the first piezoelectric element 511 may be lead zirconate titanate (PZT)-based piezoelectric ceramic, but is not limited thereto.

The first piezoelectric element 511 is disposed on one surface of the elastic body 512. The first piezoelectric element 511 is attached to an upper surface 5153 (e.g., a surface facing in the first optical axis direction ①) of the elastic body 512. The first piezoelectric element 511 may have a plate shape having a specified thickness and/or length (e.g., a distance in a long side direction). For example, the length of the first piezoelectric element 511 may be smaller than the length of the elastic body 512. According to various embodiments, the first piezoelectric element 511 may include a bulk type piezoelectric element formed of one layer having a predetermined thickness and/or a stacked type piezoelectric element formed of a plurality of layers stacked one above another. The type of the first piezoelectric element 511 is not limited to the aforementioned examples.

The first piezoelectric element 511 may include a first surface 5111 that faces in the first optical axis direction ① and a second surface 5112 that faces away from the first surface 5111 and, for example, faces in the second optical axis direction . The second surface 5112 of the first piezoelectric element 511 may be attached with the elastic body 5112. For example, the first piezoelectric element 511, when expanded or contracted, may be bent together with the elastic body 512 due to a difference in rigidity between the first surface 5111 (e.g., a non-attached surface) and the second surface 5112 (e.g., an attached surface) since the elastic body 512 is attached to the second surface 5112. Bending deformation of the first piezoelectric element 511 and the elastic body 512 will be described below with reference to FIG. 10.

In an embodiment, the elastic body 512 may be formed of a material having predetermined elasticity. For example, the elastic body 512 may be formed of a elastic material capable of being partially bent by deformation of the first piezoelectric element 511. In various embodiments, the elastic body 512 may be a metal elastic body, but is not limited thereto.

The first piezoelectric element 511 is attached to the upper surface 5153 of the elastic body 512, and the first rod 513 is coupled to a lower surface 5154 of the elastic body 512. The upper surface 5153 of the elastic body 512 may face in the first optical axis direction , and the lower surface 5154 may face in the second optical axis direction . The elastic body 512 may convert contraction/expansion of the first piezoelectric element 511 into bending deformation by providing a rigidity difference to the first surface 5111 and the second surface 5112 of the first piezoelectric element 511. For example, when the first piezoelectric element 511 is expanded or contracted based on a voltage applied thereto, the elastic body 512 may be convexly bent in the first optical axis direction ① together with the first piezoelectric element 511, or may vibrate in the direction of the optical axis OA while being convexly bent in the second optical axis direction ②.

The elastic boy 512 may include a base portion 515, extending portions 516, and protruding portions 517. The first piezoelectric element 511 may be disposed on the base portion 515. For example, the base portion 515 may include the upper surface 5153 to which the first piezoelectric element 511 is attached and the lower surface 5154 that faces away from the upper surface 5153 and to which the first rod 513 is attached. The extending portions 516 and the protruding portions 517 may extend or protrude from the base portion 515.

In an embodiment, the extending portions 516 may be formed at opposite ends of the base portion 515 that face away from each other in the direction of a length L. The extending portions 516 may extend from the opposite ends of the base portion 515 in the direction of the length L and may have a greater thickness than the base portion 515. For example, the thickness of the extending portions 516 may be greater than the thickness T of the base portion 515. The thicknesses are defined as distances measured in the optical axis directions ① and ②.

The extending portions 516 may increase vibration displacement of the first piezoelectric motor 510. The extending portions 516 may function as a vibration displacement expansion structure. For example, the extending portions 516 may increase the volumes (or, masses) of opposite end portions of the elastic body 512 that face away from each other in the lengthwise direction and thus may increase vibration displacement or bending displacement of the elastic body 512 (or, the first piezoelectric element 511) using an inertia effect when the elastic body 512 vibrates. For example, due to the inertial force depending on the weights of the extending portions 516, vibration of the opposite end portions of the elastic body 512 may have higher amplitude in the direction of the optical axis OA. Since the extending portions 516 extend from the base portion 515, the elastic body 512 may be configured to integrally include the displacement expansion structure. The sizes of the extending portions 516 may be diversely modified depending on design conditions.

In an embodiment, the protruding portions 517 may be formed at opposite ends of the base portion 515 that face away from each other in the direction of a width W. The protruding portions 517 may protrude from the opposite ends of the base portion 515 that face away from each other in the direction of the width W. For example, the protruding portions 517 may protrude from opposite side surfaces 5151 and 5152 of the base portion 515 that face away from each other in the direction of the width W and may be substantially parallel to the base portion 515. The protruding portions 517 may have substantially the same thickness as the base portion 515, but are not limited thereto.

The protruding portions 517 may be located between the pair of extending portions 516. The protruding portions 517 may be formed to be symmetrical to each other with respect to the first rod 513. The base portion 515 may include the first side surface 5151 and the second side surface 5152 that face away from each other in the direction of the width W, and the protruding portions 517 may be formed on the first side surface 5151 and the second side surface 5152. For example, the protruding portions 517 may include a pair of first protruding portions 518 that protrude from the first side surface 5151 and the second side surface 5152 and that are formed at positions symmetrical to each other based on the direction of the length L of the base portion 515 and a pair of second protruding portions 519 that protrude from the first side surface 5151 and the second side surface 5152 so as to be spaced apart from the pair of first protruding portions 518 by a predetermined distance and that are formed at positions symmetrical to each other based on the direction of the length L of the base portion 515.

The pair of first protruding portions 518 may include a first protrusion 518a formed on the first side surface 5151 and a second protrusion 518b formed on the second side surface 5152. The first protrusion 518a and the second protrusion 518b may be formed at positions corresponding to each other on the first surface 5151 and the second side surface 5152 so as to be aligned with each other in the direction of the width W of the base portion 515. For example, the first protrusion 518a and the second protrusion 518b may overlap each other based on the direction of the width W of the base portion 515. The pair of second protruding portions 519 may include a third protrusion 519a formed on the first side surface 5151 and spaced apart from the first protrusion 518a by a specified distance in the direction of the length L and a fourth protrusion 519b formed on the second side surface 5152 and spaced apart from the second protrusion 518b by the specified distance in the direction of the length L. The third protrusion 519a and the fourth protrusion 519b may be formed at positions corresponding to each other on the first side surface 5151 and the second side surface 5152 so as to be aligned with each other in the direction of the width W of the base portion 515. For example, the third protrusion 519a and the fourth protrusion 519b may overlap each other based on the direction of the width W of the base portion 515. The separation distance between the first protrusion 518a and the second protrusion 518b may be substantially the same as the separation distance between the third protrusion 519a and the fourth protrusion 519b.

The protruding portions 517 may be located between the extending portions 516. The protruding portions 517 may be formed to be symmetrical based on the direction of the width W and the direction of the length L of the base portion 515. The pair of first protruding portions 518 and the pair of second protruding portions 519 may be spaced apart from the first rod 513 by substantially the same distance in the direction of the length L. The distance between the pair of first protruding portions 518 and the extending portion 516 (e.g., the right extending portion in FIG. 9C) formed at one end of the base portion 515 may be substantially the same as the distance between the pair of second protruding portions 519 and the extending portion 516 (e.g., the left extending portion in FIG. 9C) formed at an opposite end of the base portion 515.

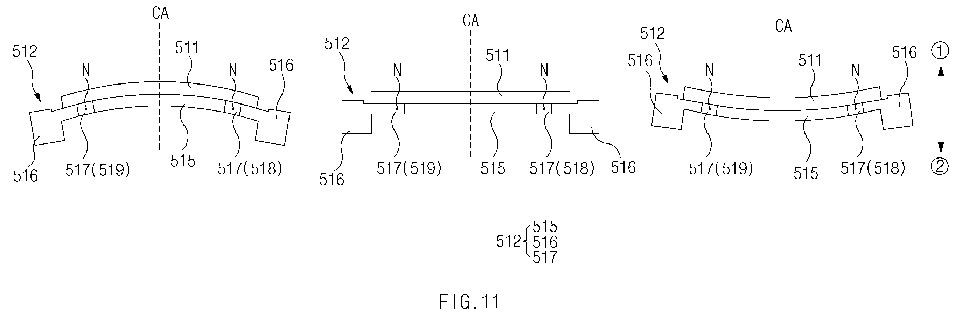

The protruding portions 517 may be portions supported on the second carrier 450. The protruding portions 517 may be formed at positions corresponding to portions having the smallest vibration displacement when the first piezoelectric motor 510 vibrates. Accordingly, transmission of vibration to other components of the camera module 400 may be reduced. For example, the protruding portions 517 may function as a vibration isolation structure as well as a support structure. Since the protruding portions 517 extend from the base portion 515, the elastic body 515 may be configured to integrally include the vibration isolation structure. The positions of the protruding portions 517 will be described below with reference to FIGS. 11 and 12.

The first rod 513 is disposed on one surface of the elastic body 512. The first rod 513 is coupled to the lower surface 5154 of the elastic body 512 that faces in the second optical axis direction ②. The first rod 513 may be coupled to a central portion of the lower surface 5154 of the elastic body 512. For example, the first rod 513 may be disposed at the center in the direction of the width W and the direction of the length L of the base portion 515. The first rod 513 moves in the first optical axis direction ① and the second optical axis direction ② depending on bending vibration of the first piezoelectric element 511 and the elastic body 512.

The first rod 513 may extend in a direction substantially perpendicular to the first piezoelectric element 511. The first rod 513 may extend so as to be substantially perpendicular to the lower surface 5154 of the base portion 515. For example, the first rod 513 may be formed in a cylindrical shape, and the length of the first rod 513 may remain constant. The first rod 513 may be formed of a carbon-based material. For example, the first rod 513 may be formed of a carbon fiber reinforced plastic (CFRP) material. However, the shape or material of the first rod 513 is not limited to the above-described contents.

The first rod 513 provides movement of the first carrier (e.g., the first carrier 440 of FIGS. 6 and 7) by transferring vibration displacement occurring depending on contraction or expansion of the first piezoelectric element 511 to the first connecting member 514. The first rod 513 may be at least partially coupled to the first connecting member 514 in a state of being attached to the elastic body 512. The first rod 513 may be capable of both an operation of moving together with the first connecting member 514 and an operation of moving separately from the first connecting member 514. For example, the first rod 513 may be connected with the first connecting member 514 so as to perform an operation of moving together with the first connecting member 514 and an operation of moving relative to the first connecting member 514, based on a moving speed. The moving speed of the first rod 513 may be determined and controlled, based on the speed at which the first piezoelectric element 511 is contracted or expanded.

The first connecting member 514 is coupled to the first rod 513 of the first piezoelectric motor 510. For example, the first connecting member 514 may be coupled to the first rod 513 to move together with the first rod 513 or move separately from the first rod 513, based on a frictional force or an inertial force. For example, one portion of the first connecting member 514 may be coupled to the first rod 513 by elastically making pressure contact with the first rod 513, and another portion of the first connecting member 514 may be fixedly coupled to the first carrier 440. The first carrier 440 moves together with the first connecting member 514. The first connecting member 514 may transmit a driving force of the first piezoelectric motor 510 to the first carrier 440.

The first connecting member 514 may include a first body portion 514a, a plurality of first pressing portions 514b connected to one side of the first body portion 514a, and the first fixed portion 514c connected to an opposite side of the first body portion 514a. For example, the first body portion 514a may be formed of an injection material, and the plurality of first pressing portions 514b and the first fixed portion 514c may be formed of a metallic material. However, the disclosure is not limited thereto. In various embodiments, the first connecting member 514 may be formed or manufactured through an insert molding (or, insert injection) process such that the first body portion 514a, the plurality of first pressing portions 514b, and the first fixed portion 514 are integrally formed. However, a manufacturing process of the first connecting member 514 is not limited to the insert molding.

In an embodiment, the first body portion 514a may support the plurality of first pressing portions 514b and the first fixed portion 514c. For example, the plurality of first pressing portions 514b elastically connected to the first rod 513 and the first fixed portion 514c fixedly connected to the first carrier 440 may be coupled to the opposite sides of the first body portion 514a.

In an embodiment, the plurality of first pressing portions 514b may surround at least a portion of the outer circumferential surface of the first rod 513. The plurality of first pressing portions 514b may include a first portion 514b-1 and a second portion 514b-2. The first portion 514b-1 and the second portion 514b-2 may make contact with the first rod 513. When the plurality of first pressing portions 514b and the first rod 513 are viewed in the optical axis directions ① and ②, the plurality of first pressing portions 514b and the first rod 513 may be connected in a three-point contact structure. For example, the plurality of first pressing portions 514b may be configured such that the first portion 514b-1 makes two-point contact with the first rod 513 and the second portion 514b-2 makes one-point contact with the first rod 513. According to the illustrated embodiment, the first portion 514b-1 may be partially bent to make two-point contact with the first rod 513.

The plurality of first pressing portions 514b may make contact with the first rod 513, which is disposed between the first portion 514b-1 and the second portion 514b-2, while maintaining a predetermined pre-load. For example, the plurality of first pressing portions 514b may make contact with the outer circumferential surface of the first rod 513 while elastically pressing the first rod 513. The plurality of first pressing portions 514b may be configured such that the first portion 514b-1 and the second portion 514b-2 apply a pre-load to the first rod 513 in opposite directions. For example, the first portion 514b-1 may apply a pre-load P3 to the first rod 513 in a direction toward the second portion 514b-2, and the second portion 514b-2 may apply a pre-load P4 to the first rod 513 in a direction toward the first portion 514b-1. As the plurality of first pressing portions 514b are divided into the first portion 514b-1 and the second portion 514b-2, the first connecting member 514 according to the embodiment of the disclosure may easily adjust the pre-load applied to the first rod 513.

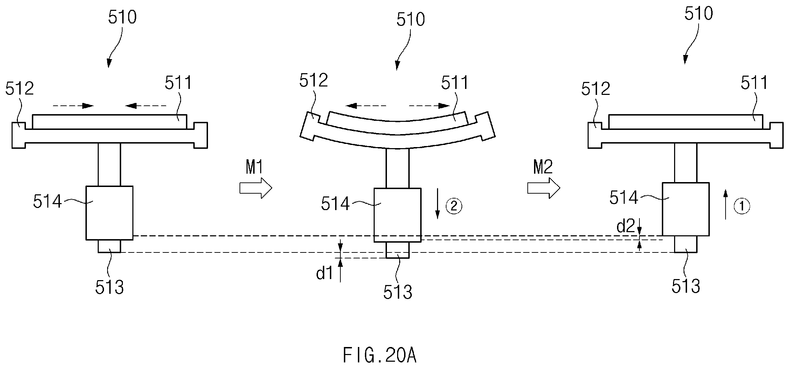

The plurality of first pressing portions 514b may be formed to have an elastic force. For example, the first portion 514b-1 and the second portion 514b-2 may be formed of a plate spring made of a metallic material, but are not limited thereto. As the plurality of first pressing portions 514b are elastically coupled to the first rod 513, the first connecting member 514 may move together with the first rod 513 or may not move together with the first rod 513, based on the deformation speed of the first piezoelectric element 511 (or, the moving speed of the first rod 513) (e.g., stick-slip motion). For example, when the first rod 513 moves at a speed lower than a predetermined speed, the first connecting member 514 may move together with the first rod 513, and when the first rod 513 moves at a speed higher than the predetermined speed, the first connecting member 514 may not move together with the first rod 513. In other words, the ratio of the speed of the first rod 513 to the speed of the connecting member 514 may vary depending on the deformation speed of the first piezoelectric elements 511. An operation in which the first connecting member 514 moves in the first piezoelectric motor 510 will be described below in detail with reference to FIG. 20A.

In an embodiment, the first fixed portion 514c may be coupled to the first carrier 440. For example, the first fixed portion 514c may be fixedly coupled to the first carrier 440 so as to move together with the first carrier 440 (e.g., refer to FIG. 7). For example, as the first carrier 440 is connected to the first connecting member 514 through the first fixed portion 514c, the first carrier 440 moves together with the first connecting member 514 when the first connecting member 514 moves on the first rod 513 in the optical axis directions ① and ②.

FIG. 10 is a view illustrating an operation of the first piezoelectric motor according to an embodiment.

Referring to FIG. 10, the first piezoelectric motor 510 includes the first piezoelectric element 511, the elastic body 512 attached to the first piezoelectric element 511, and the first rod 513 attached to the elastic body 512. FIG. 10 is a view in which the first connecting member (e.g., the first connecting member 514 of FIGS. 9A and 9B) is omitted.

In an embodiment, the first piezoelectric motor 510 may be configured such that the first rod 513 moves in the optical axis directions ① and ② as the elastic body 512 is bent by expansion and contraction of the first piezoelectric element 511. For example, the first piezoelectric element 511 may be contracted or expanded in the direction of the length L of the first piezoelectric element 511 based on a voltage applied thereto. The elastic body 512 may be bent in the first optical axis direction ① or the second optical axis direction ② by the contraction or expansion of the first piezoelectric element 511, and the first rod 513 linearly moves in the first optical axis direction ① or the second optical axis direction ② in response to the bending direction of the first piezoelectric element 511.

Referring to an operation in which deformation from the middle figure to the left figure in FIG. 10 occurs, the first piezoelectric motor 510 may receive a voltage for contracting the first piezoelectric element 511 in the direction of the length L. When the first piezoelectric element 511 is contracted in the direction of the length L, a portion adjacent to the second surface 5112 may be less contracted than a portion adjacent to the first surface 5111 due to the difference in rigidity between the second surface 5112 attached with the elastic body 512 and the first surface 5111 not attached with the elastic body 512. Accordingly, the first piezoelectric element 511 may be bent in the second optical axis direction ② in which the second surface 5112 faces, and the elastic body 512 may be bent in the second optical axis direction ② together with the first piezoelectric element 511. For example, the elastic body 512 and the first piezoelectric element 511 may be bent in a shape in which a central portion is convex in the second optical axis direction ②. The first rod 513 may linearly move in the second optical axis direction ② by a specified distance d as the elastic body 512 is convexly bent in the second optical axis direction ②.

Referring to an operation in which deformation from the middle figure to the right figure in FIG. 10 occurs, the first piezoelectric motor 510 may receive a voltage for expanding the first piezoelectric element 511 in the direction of the length L. When the first piezoelectric element 511 is expanded in the direction of the length L, the portion adjacent to the second surface 5112 may be less expanded than the portion adjacent to the first surface 5111 due to the difference in rigidity between the second surface 5112 and the first surface 5111. Accordingly, the first piezoelectric element 511 may be bent in the first optical axis direction ① in which the first surface 5111 faces, and the elastic body 512 may be bent in the first optical axis direction ① together with the first piezoelectric element 511. For example, the elastic body 512 and the first piezoelectric element 511 may be bent in a shape in which the central portion is convex in the first optical axis direction ①. The first rod 513 may linearly move in the first optical axis direction ① by the specified distance d as the elastic body 512 is convexly bent in the first optical axis direction ①.

In an embodiment, the first piezoelectric element 511 may be contracted or expanded in the lengthwise direction, based on the polarization direction of the first piezoelectric element 511 and the direction of an electric field. When an electric field facing the same direction as the polarization direction of the first piezoelectric element 511 is formed for the first piezoelectric element 511, the first piezoelectric element 511 may be contracted in the direction of the length. For example, the polarization direction of the first piezoelectric element 511 may be substantially parallel to the optical axis directions ① and ②, and when an electric field is formed in the same direction as the polarization direction, the first piezoelectric element 511 may be expanded in the polarization direction (e.g., the optical axis directions ① and ② or the thickness direction) and may be contracted in the lengthwise direction due to the Poisson's ratio. When an electric field facing the direction opposite to the polarization direction of the first piezoelectric element 511 is formed for the first piezoelectric element 511, the first piezoelectric element 511 may be expanded in the lengthwise direction. For example, the polarization direction of the first piezoelectric element 511 may be substantially parallel to the optical axis directions ① and ②, and when an electric field is formed in the direction opposite to the polarization direction, the first piezoelectric element 511 may be contracted in the polarization direction (e.g., the optical axis directions ① and (2) or the thickness direction) and may be expanded in the lengthwise direction due to the Poisson's ratio.

In an embodiment of the disclosure, as the first piezoelectric motor 510 has the structure in which the first piezoelectric element 511 and the elastic body 512 are bonded to each other, contraction/expansion of the first piezoelectric element 511 may be converted into bending vibration of the first piezoelectric element 511 and the elastic body 512, and the first rod 513 may be linearly vibrated in the optical axis directions ① and ② by the bending vibration.

FIG. 11 is a view illustrating an operation in which the first piezoelectric element and the elastic body of the first piezoelectric motor vibrate according to an embodiment.

Referring to FIG. 11, the first piezoelectric motor according to an embodiment (e.g., the first piezoelectric motor 510 of FIGS. 9A and 9B) includes the first piezoelectric element 511 and the elastic body 512 attached or bonded to each other. FIG. 11 may be a view in which the first rod (e.g., the first rod 513 of FIGS. 9A and 9B) and the first connecting member (e.g., the first connecting member 514 of FIGS. 9A and 9B) are omitted.

Hereinafter, the positions of the protruding portions 517 for a vibration isolation structure will be described with reference to FIGS. 11 and 9C together.

In an embodiment, the first piezoelectric element 511 and the elastic body 512 form a vibrator of the first piezoelectric motor 510. For example, the vibrator includes the elastic body 512 and the first piezoelectric element 511 attached to the upper surface (e.g., a surface facing in the first optical axis direction ①) of the elastic body 512 and may form bending vibration by stretching vibration of the first piezoelectric element 511. The vibrator of the first piezoelectric motor 510 according to the illustrated embodiment may be a uni-morph type vibrator. Hereinafter, the vibrator is used as a term referring to a structure or part in which the elastic body 512 and the first piezoelectric element 511 are bonded or coupled to each other.

In an embodiment, the elastic body 512 may include the base portion 515, the extending portions 516 formed at the opposite ends of the base portion 515, and the protruding portions 517 formed on the side surfaces of the base portion 515 (e.g., the first side surface 5151 and the second side surface 5152 of the base portion 515 of FIG. 9C) so as to be located between the extending portions 516.

In an embodiment, the protruding portions 517 may be formed at positions spaced apart from the extending portions 516 toward the center of the vibrator 511 and 512 by a specified distance. For example, when the vibrator 511 and 512 is viewed in the direction of the first side surface 5151 of the base portion 515, a central axis C may be defined to pass through the center of the vibrator 511 and 512, and the protruding portions 517 may be located between the central axis C and the extending portions 516. The protruding portions 517 may include the first protruding portions 518 (e.g., the first protrusion 518a and the second protrusion 518b of FIG. 9C) and the second protruding portions 519 (e.g., the third protrusion 519a and the fourth protrusion 519b of FIG. 9C), and the first protruding portions 518 and the second protruding portions 519 may be formed at positions symmetrical to each other with respect to the central axis CA. For example, the vibrator 511 and 512 may be formed in a symmetrical shape with respect to the central axis CA.

The protruding portions 517 may be portions supported on at least a portion of the second carrier 450 (e.g., the motor support part 453 of FIGS. 6 and 7) such that the first piezoelectric motor 510 is seated on the second carrier (e.g., the second carrier 450 of FIGS. 6 and 7). To reduce transmission of vibration of the vibrator 511 and 512 to the second carrier 450 when the first piezoelectric motor 510 is driven, the protruding portions 517 may be formed at positions where vibration displacement in the optical axis directions ① and ② is minimal on the vibrator 511 and 512.

Referring to FIG. 11, the vibrator 511 and 512 may perform bending vibration in the optical axis directions ① and (2) by contraction or expansion of the first piezoelectric element 511. When the vibrator 511 and 512 vibrates, at least portions (some points or regions) of the vibrator 511 and 512 may not vibrate, and the vibration displacements in the optical axis directions ① and ② may be substantially 0. The non-vibrating points on the vibrator 511 and 512 at which the vibration displacement is substantially zero may be defined as nodal positions N (e.g., nodes, nodal points, or nodal lines). For example, when the vibrator 511 and 512 vibrates in the optical axis directions ① and ②, one or more nodal positions N, the positions of which are maintained without being changed, may be formed in at least portions of the vibrator 511 and 512.

The vibrator 511 and 512 may have two nodal positions N symmetrical to each other with respect to the central axis CA, and the nodal positions N may be located on the vibrator 511 and 512. For example, the nodal positions N may overlap the vibrator 511 and 512 at positions symmetrical to each other with respect to the central axis CA based on the direction of the side surfaces 5151 and 5152 of the base portion 515. The nodal positions N of the vibrator 511 and 512 may be located on the same line without moving even when the vibrator 511 and 512 vibrates. For example, the portions of the vibrator 511 and 512 where the nodal positions N are located may have minimal vibration displacement or may have no vibration displacement in the optical axis directions ① and ②. In the illustrated embodiment, the nodal positions N may be located on the elastic body 512 of the vibrator 511 and 512. However, the positions of the nodal positions N may be changed to correspond to the shapes of the first piezoelectric element 511 and the elastic body 512 that constitute the vibrator 511 and 512.

The protruding portions 517 may be formed at positions corresponding to the nodal positions N of the vibrator 511 and 512. The protruding portions 517 may be formed at positions overlapping the nodal positions N. For example, the protruding portions 517 may overlap the nodal positions N based on the direction of the width W and/or the direction of the thickness T of the base portion 515. In the illustrated embodiment, the protruding portions 517 may overlap the nodal positions N based on the direction of the width W and the direction of the thickness T of the base portion 515. In various embodiments, the nodal positions N may be defined or formed on the first piezoelectric element 511 of the vibrator 511 and 512 depending on the shape of the vibrator 511 and 512. In this case, the protruding portions 517 may overlap the nodal positions N based on the direction of the width W of the base portion 515 (or, the optical axis directions ① and ②) and may not overlap the nodal positions N based on the direction of the width W of the base portion 515 (or, the direction of the first and second side surfaces 5151 and 5152).

Two protruding portions 517 may be formed to overlap the two nodal positions N, respectively. For example, in the embodiment of FIG. 11, the first protruding portions 518 may overlap the nodal position N located on the right side with respect to the central axis CA, and the second protruding portions 519 may overlap the nodal position N located on the left side with respect to the central axis CA. The protruding portions 517 may protrude from partial regions of the first side surface 5151 and the second side surface 5152 of the base portion 515 that overlap the nodal positions N, based on the direction of the width (e.g., the width W of FIG. 9C) of the base portion 515. For example, when the vibrator 511 and 512 is viewed in the direction of the first and second side surfaces 5151 and 5152 of the base portion 515, the two nodal positions N may be located on the first protruding portions 518 and the second protruding portions 519.

FIG. 12 is a view illustrating a coupling structure of the first piezoelectric motor and the second carrier of the camera module according to an embodiment.

FIG. 12 is a blowup of portion A in FIG. 7.

Referring to FIG. 12, the camera module according to an embodiment (e.g., the camera module 400 of FIGS. 4A, 4B, and 5) includes the first carrier 440, the second carrier 450, and the first piezoelectric motor 510. The first piezoelectric motor 510 includes the first piezoelectric element 511, the elastic body 512, the first rod 513, and the first connecting member 514.

In an embodiment, the first fixed portion 514c of the first connecting member 514 of the first piezoelectric motor 510 may be coupled to the first carrier 440 in a state in which a portion of the elastic body 512 is supported on the second carrier 450. For example, in a state in which a portion of the elastic body 512 is supported on the second carrier 450, the first piezoelectric motor 510 may operate such that vibration displacement is generated in the first piezoelectric element 511 and the elastic body 512, and when the first connecting member 514 moves on the first rod 513 in the direction of the optical axis OA depending on the vibration displacement, the first carrier 440 connected with the first fixed portion 514c may move in the direction of the optical axis OA together with the first connecting member 514.

In an embodiment, the second carrier 450 may include the motor support part 453 on which the first piezoelectric motor 510 is seated. The motor support part 453 may include a first sidewall 4531 and a second sidewall 4532 facing the first sidewall 4531. An opening region 4533 may be formed between the first sidewall 4531 and the second sidewall 4532. The first sidewall 4531 and the second sidewall 4532 may support the first piezoelectric motor 510. The elastic body 512 may be bonded to partial regions of the first sidewall 4531 and the second sidewall 4532. For example, the first piezoelectric motor 510 may be seated on the motor support part 453 as the first rod 513 is accommodated in the opening region 4533 and the elastic body 512 makes contact with the first sidewall 4531 and the second sidewall 4532.

Each of the first sidewall 4531 and the second sidewall 4532 may include a first bonding portion 453a and second bonding portions 453b to which the elastic body 512 is coupled. The first bonding portion 453a may extend in the direction of the width of the elastic body 512 (e.g., the x-axis direction or the direction of the width W in FIG. 9C). The second bonding portions 453b may extend from opposite ends of the first bonding portion 453a in the direction of the thickness of the elastic body 512 (e.g., the z-axis direction or the direction of the thickness T in FIG. 9C).

The first bonding portion 453a may be coupled with the base portion 515 and the protruding portions 517 of the elastic body 512, and the second bonding portions 453b may be coupled with the protruding portions 517 of the elastic body 512. For example, the second bonding portions 453b of the first sidewall 4531 may be coupled with the first protruding portions 518, and the second bonding portions 453b of the second sidewall 4532 may be coupled with the second protruding portions 519. Partial regions of the bottom surfaces (e.g., surfaces facing in the -z-axis direction) of the protruding portions 517 and the bottom surface (e.g., a surface facing in the -z-axis direction) of the base portion 515 that are aligned with the protruding portions 517 may be bonded to the first bonding portions 453a, and side surfaces of the protruding portions 517 may be bonded to the second bonding portions 453b. The partial regions of the elastic body 512 bonded to the first bonding portions 453a may be referred to as bonding regions BA illustrated in FIG. 9B. The first bonding portions 453a and the second bonding portions 453b may be coupled with the elastic body 512 through various coupling means.

In an embodiment, the remaining portion of the elastic body 512 other than the portions bonded to the first bonding portions 453a and the second bonding portions 453b may be spaced apart from the motor support part 453. For example, each of the first sidewall 4531 and the second sidewall 4532 may include a step portion 453c connected from the first bonding portion 453a in a stepwise manner, and the step portion 453c may be spaced apart from the elastic body 512 by a specified gap. Accordingly, a space for vibration of the elastic body 512 may be secured.

According to an embodiment of the disclosure, the elastic body 512 of the first piezoelectric motor 510 may be divided into a portion bonded to the second carrier 450 and a portion not bonded to the second carrier 450, based on the protruding portions 517. The protruding portions 517 and the base portion 515 corresponding thereto may be coupled to (or, supported on) the second carrier 450, and the protruding portions 517 may be formed at positions corresponding to the normal positions (e.g., the nodal positions N in FIG. 11) where the vibration displacement of the vibrator (e.g., the first piezoelectric element 511 and the elastic body 512) is minimal. Accordingly, when the vibrator 511 and 512 vibrates as the first piezoelectric motor 510 is driven, unnecessary vibration transmitted to the second carrier 450 may be reduced, and noise caused by vibration/collision between parts included in the camera module 400 may be reduced.

FIG. 13 is a view illustrating a coupling structure of the second carrier, the guide members, and the second piezoelectric motor of the camera module according to an embodiment. FIG. 14 is an exploded perspective view illustrating the camera housing, the second carrier, the guide members, and the second piezoelectric motor of the camera module according to an embodiment.

Referring to FIGS. 13 and 14, the camera module according to an embodiment (e.g., the camera module 400 of FIGS. 4A, 4B, and 5) may include the camera housing 410, the second carrier 450, the first guide member 460, the second guide member 470, a second spring member 495, the motor holder 493, a plurality of guide balls 483, 484, 485, and 486, and the second piezoelectric motor 530. The camera housing 410 may be referred to as the base 413 (e.g., the base 413 of FIG. 5).

At least some of the components of the camera module 400 illustrated in FIGS. 13 and 14 may be identical or similar to some of the components of the camera module 400 illustrated in FIG. 5, and repetitive descriptions will hereinafter be omitted.

In an embodiment, the base 413 may include the first support surface 415 on which the first guide member 460 and the motor holder 493 are disposed. The first guide member 460 may be seated on the first support surface 415 of the base 413 such that the first guide member 460 is movable in the direction of the first shift axis S1, but movement of the first guide member 460 in the direction of the second shift axis S2 is restricted (or, constrained). The plurality of third balls 483 for guiding movement of the first guide member 460 relative to the base 413 in the direction of the first shift axis S1 may be disposed between the base 413 and the first guide member 460. For example, a plurality of fourth grooves 419 extending in the direction of the first shift axis S1 may be formed on the first support surface 415, and the plurality of third balls 483 may be accommodated in the plurality of fourth grooves 419. The motor holder 493 may be fixed to the first support surface 415 of the base 413. For example, the motor holder 493 may be fixedly disposed at edges of the first support surface 415 of the base 413 that are perpendicular to each other (e.g., an edge facing in the +x-axis direction and an edge facing in the -y-axis direction).

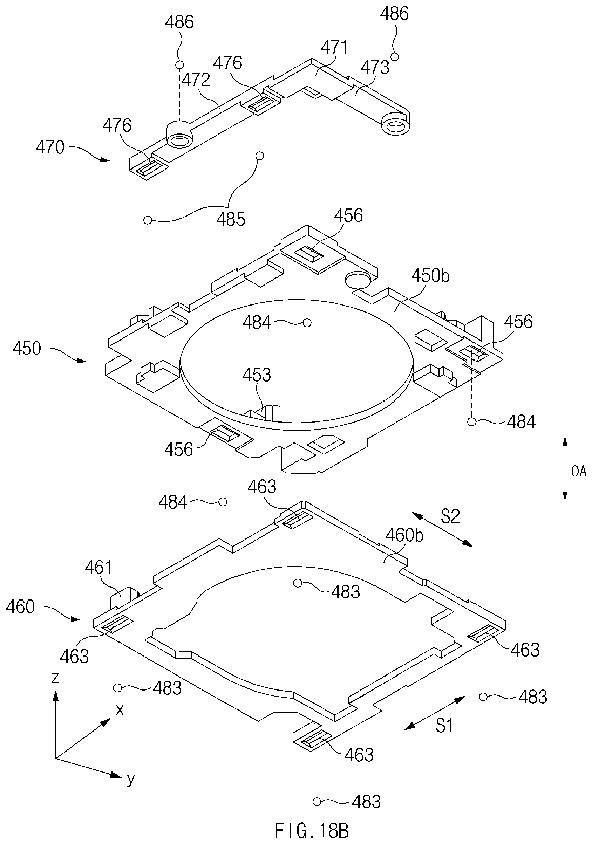

In an embodiment, the first guide member 460 may be configured such that the first guide member 460 is movable relative to the base 413 in the direction of the first shift axis S1 and movement of the first guide member 460 in the direction of the second shift axis S2 is restricted. The plurality of third balls 483 for guiding movement of the first guide member 460 relative to the base 413 may be disposed between the first guide member 460 and the base 413. The first guide member 460 may be movable only in the direction of the first shift axis S1 relative to the base 413 as the plurality of third balls 483 are accommodated in the guide grooves (e.g., the fourth grooves 419 of FIG. 14 and fifth grooves 463 of FIG. 18B) of the first guide member 460 and the base 413 that extend in the direction of the first shift axis S1. The first guide member 460 may receive a driving force from the first sub-piezoelectric motor 530-1 of the second piezoelectric motor 530 that is driven in the direction of the first shift axis S1. For example, the first guide member 460 may be connected with a second connecting member 534 of the first sub-piezoelectric motor 530-1.

The first guide member 460 may include a second upper surface 460a on which the second carrier 450 is disposed. The first guide member 460 may be seated on the second upper surface 460a of the first guide member 460 such that the first guide member 460 is movable in the direction of the second shift axis S2, but movement of the first guide member 460 in the direction of the first shift axis S1 is restricted (or, constrained). The plurality of fourth balls 484 for guiding movement of the second carrier 450 relative to the first guide member 460 in the direction of the second shift axis S2 may be disposed between the first guide member 460 and the second carrier 450.

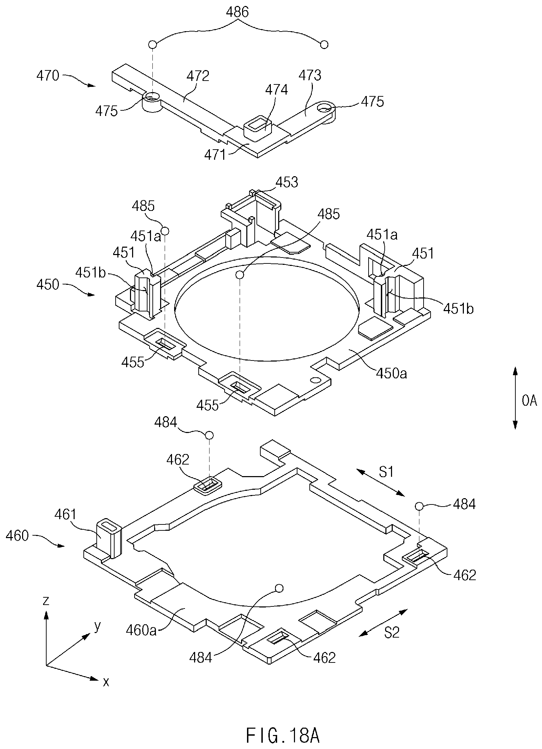

In an embodiment, the second carrier 450 may be configured such that the second carrier 450 is movable relative to the first guide member 460 in the direction of the second shift axis S2 and movement of the second carrier 450 in the direction of the first shift axis S1 is restricted. The plurality of fourth balls 484 for guiding movement of the second carrier 450 relative to the first guide member 460 may be disposed between the second carrier 450 and the first guide member 460. The second carrier 450 may be movable only in the direction of the second shift axis S2 relative to the first guide member 460 as the plurality of fourth balls 484 are accommodated in guide grooves (e.g., sixth grooves 462 of FIG. 18A and seventh grooves 453 of FIG. 18B) of the second carrier 450 and the first guide member 460 that extend in the direction of the second shift axis S2.

The second carrier 450 may include the first upper surface 450a on which the second guide member 470 is disposed. The second guide member 470 may be seated on the first upper surface 450a of the second carrier 450 such that the second guide member 470 is movable in the direction of the first shift axis S1, but movement of the second guide member 470 in the direction of the second shift axis S2 is restricted (or, constrained). The plurality of fifth balls 485 for guiding movement of the second guide member 470 relative to the second carrier 450 in the direction of the first shift axis S1 may be disposed between the second carrier 450 and the second guide member 470. The first carrier (e.g., the first carrier 440 of FIG. 5) having the lens assembly coupled thereto (e.g., the lens assembly 420 of FIG. 5) may be seated on the second carrier 450.

The second carrier 450 may receive a driving force of the second piezoelectric motor 530 through the first guide member 460 and the second guide member 470. For example, when the first guide member 460 is moved in the direction of the first shift axis S1 by the first sub-piezoelectric motor 530-1, the second carrier 450 may move in the direction of the first shift axis S1 together with the first guide member 460. Furthermore, when the second guide member 470 is moved in the direction of the second shift axis S2 by the second sub-piezoelectric motor 530-2, the second carrier 450 may move in the direction of the second shift axis S2 together with the second guide member 470. As the second carrier 450 receives a driving force through the first guide member 460 and the second guide member 470 without being directly connected with the second piezoelectric motor 530, the second carrier 450 may have a degree of freedom in the directions of the first shift axis S1 and the second shift axis S2 for the base 413. For example, when the second carrier 450 is directly connected to the first sub-piezoelectric motor 530-1, the driving of the second sub-piezoelectric motor 530-2 may be constrained, and when the second carrier 450 is directly connected to the second sub-piezoelectric motor 530-2, the driving of the first sub-piezoelectric motor 530-1 may be constrained. Since the second carrier 450 according to the embodiment of the disclosure is not directly connected to the second piezoelectric motor 530, the driving of the second piezoelectric motor 530 may not be constrained. Accordingly, design for movement of the second piezoelectric motor 530 relative to an FPCB for application of power may be avoided.

In an embodiment, the second guide member 470 may be configured such that the second guide member 470 is movable relative to the second carrier 450 in the direction of the first shift axis S1 and movement of the second guide member 470 in the direction of the second shift axis S2 is restricted. The plurality of fifth balls 485 for guiding movement of the second guide member 470 relative to the second carrier 450 may be disposed between the second guide member 470 and the second carrier 450. The second guide member 470 may be movable only in the direction of the first shift axis S1 relative to the second carrier 450 as the plurality of fifth balls 485 are accommodated in guide grooves (e.g., eighth grooves 455 of FIG. 18A and ninth grooves 476 of FIG. 18B) of the second guide member 470 and the second carrier 450 that extend in the direction of the first shift axis S1. The second guide member 470 may receive a driving force from the second sub-piezoelectric motor 530-2 of the second piezoelectric motor 530 that is driven in the direction of the second shift axis S2. For example, the second guide member 470 may be connected with a second connecting member 534 of the second sub-piezoelectric motor 530-2.

The second guide member 470 may make pressure contact with the second spring member 495. For example, a partial region of the second guide member 470 may make contact with the second spring member 495 and may receive a predetermined pre-load P8 in a direction toward the second carrier 450, the first guide member 460, and the base 413 by the second spring member 495. The second guide member 470 may partially overlap the second spring member 495 in the direction of the optical axis OA.

The plurality of sixth balls 486 may be disposed between the second guide member 470 and the second spring member 495 to enable the second guide member 470 to smoothly move with respect to the second spring member 495 fixed to the base 413. For example, when the second guide member 470 is moved in the direction of the second shift axis S2 by the second sub-piezoelectric motor 530-2, the second guide member 470 may move relative to the second spring member 495 fixed to the motor holder 493, and the plurality of sixth balls 486 may perform a rotational motion between the second guide member 470 and the second spring member 495 to smoothly move the second guide member 470.

A seventh ball 487 may be disposed between the second guide member 470 and the first guide member 460 to enable smooth movement when the first guide member 460 moves relative to the second guide member 470 together with the second carrier 450 or when the second guide member 470 moves relative to the first guide member 460 together with the second carrier 450. For example, the seventh ball 487 may perform a rotational motion between the second guide member 470 and the first guide member 460 when the first guide member 460 is moved relative to the second guide member 470 in the direction of the first shift axis S1 by the first sub-piezoelectric motor 530-1 or when the second guide member 470 is moved relative to the first guide member 460 in the direction of the second shift axis S2 by the second sub-piezoelectric motor 530-2. The seventh ball 487 may be accommodated in a through-hole 457 formed in the second carrier 450 and may be disposed between the first guide member 460 and the second guide member 470 accordingly. For example, a portion of the first guide member 460 and a portion of the second guide member 470 may face each other in the direction of the optical axis OA through the through-hole 457 and may make contact with the seventh ball 487 accommodated in the through-hole 457. The seventh ball 487 may be accommodated in the through-hole 457 of the second carrier 450 to enable a rotational motion and/or a rolling motion between the first guide member 460 and the second guide member 470 when the first guide member 460 and the second guide member 470 move relative to each other. However, according to various embodiments, the seventh ball 487 may be omitted.

In an embodiment, the second spring member (or, elastic member) 495 may apply the predetermined pre-load P8 to the second guide member 470, the second carrier 450, and the first guide member 460 in a direction toward the base 413. The second spring member 495 may be formed to have an elastic force. For example, the second spring member 495 may be a spring having a thin plate shape (e.g., a plate spring) and may elastically fix the second guide member 470, the second carrier 450, and the first guide member 460 to the base 413. In various embodiments, the second spring member 495 may be formed of a plate spring made of a metallic material, but is not limited thereto.

The second spring member 495 may include a central portion 495a partially making contact with the second guide member 470, a first end portion 495b that extends from one side of the central portion 495a and that is fixed to the first motor holder 493-1, and a second end portion 495c that extends from an opposite side of the central portion 495a and that is fixed to the second motor holder 493-2. As the motor holder 493 is fixed to the base 413 and the opposite end portions of the second spring member 495 are fixed to the motor holder 493, the central portion 495a of the second spring member 495 may apply the pre-load P8 to the second guide member 470 in a direction toward the base 413. The first guide member 460, the second carrier 450, and the second guide member 470 may be brought into pressure contact with the first support surface 415 of the base 413, the second upper surface 460a of the first guide member 460, and the first upper surface 450a of the second carrier 450, respectively, by the second spring member 495.

As the pre-load structure is applied by the second spring member 495, the guide grooves of the base 413 and the first guide member 460 in which the plurality of third balls 483 are accommodated may be brought into contact with each other by a predetermined pressing force, the guide grooves of the first guide member 460 and the second carrier 450 in which the plurality of fourth balls 484 are accommodated may be brought into contact with each other by a predetermined pressing force, and the guide grooves of the second carrier 450 and the second guide member 470 in which the plurality of fifth balls 485 are accommodated may be brought into contact with each other by a predetermined pressing force. Accordingly, a ball guide structure that is movable in the extension direction of each guide groove and is restricted from moving in a direction perpendicular to the extension direction of the guide groove may be implemented.

In an embodiment, the motor holder 493 may support the second piezoelectric motor 530. The motor holder 493 may be fixedly coupled to the base 413. The motor holder 493 may include the first motor holder 493-1 to which the first sub-piezoelectric motor 530-1 is connected and the second motor holder 493-2 to which the second sub-piezoelectric motor 530-2 is connected. The opposite end portions 495b and 495c of the second spring member 495 may be coupled to the first motor holder 493-1 and the second motor holder 493-2.

The motor holder 493 may include a coupling protrusion 493a to which a second rod 532 of the second piezoelectric motor 530 is coupled. The second rod 532 may be fitted into the coupling protrusion 493a. For example, the second rod 532 may be coupled to a recess formed in the coupling protrusion 493a such that the second rod 532 is movable in the coupling protrusion 493a in the lengthwise direction of the second rod 532 (e.g., the directions of the shift axes S1 and S2). The coupling protrusion 493a may be formed of an elastic piece having elasticity such that the second rod 532 is inserted into the coupling protrusion 493a. For example, the second piezoelectric motor 530 may be driven in a state of being coupled to the motor holder 493 fixed to the base 413 and may move the first guide member 460 and the second guide member 470 relative to the base 413.

In an embodiment, the second piezoelectric motor 530 may provide a driving force for moving the second carrier 450 in the directions of the shift axes S1 and S2. For example, the second piezoelectric motor 530 may generate the driving force, based on a change in the shape of piezoelectric ceramic depending on application of a voltage. The second carrier 450 may be moved in the directions of the shift axes S1 and S2 by the second piezoelectric motor 530. In various embodiments, the second piezoelectric motor 530 may be referred to as a piezoelectric linear actuator or an ultrasonic linear actuator.

The second piezoelectric motor 530 may be indirectly connected to the second carrier 450 through the guide members 460 and 470 in a state of being fixed to the base 413 and may move the second carrier 450 relative to the base 413 in the directions of the shift axes S1 and S2. The second piezoelectric motor 530 may include the first sub-piezoelectric motor 530-1 that generates a driving force in the direction of the first shift axis S1 and the second sub-piezoelectric motor 530-2 that generates a driving force in the direction of the second shift axis S2. The first sub-piezoelectric motor 530-1 may be disposed on the base 413 in the direction of the first shift axis S1, and the second sub-piezoelectric motor 530-2 may be disposed on the base 413 in the direction of the second shift axis S2. For example, the first sub-piezoelectric motor 530-1 may be disposed adjacent to an edge of the base 413 that is parallel to the first shift axis S1, and the second sub-piezoelectric motor 530-2 may be disposed adjacent to an edge of the base 413 that is parallel to the second shift axis S2.

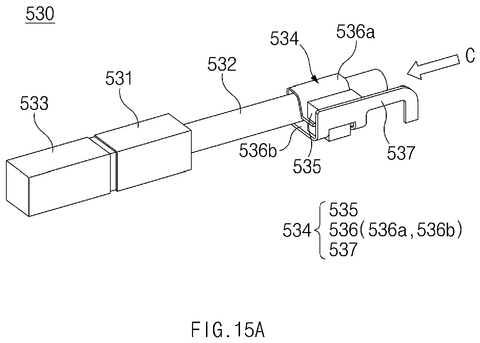

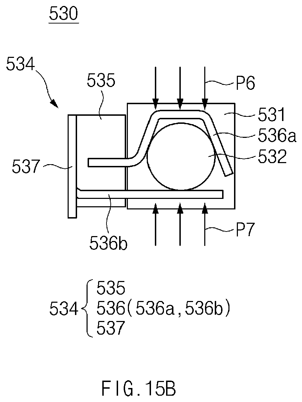

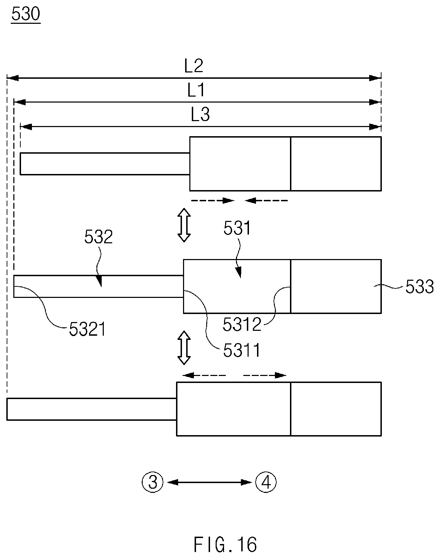

In an embodiment, the first sub-piezoelectric motor 530-1 and the second sub-piezoelectric motor 530-2 may have substantially the same structure. Each of the first sub-piezoelectric motor 530-1 and the second sub-piezoelectric motor 530-2 may include a second piezoelectric element 531, the second rod 532, a counter mass 533, and the second connecting member 534. A portion of the second piezoelectric motor 530 may be supported on the motor holder 493, and a second fixed portion (e.g., a second fixed portion 537 of FIG. 15A) of the second connecting member 534 may be coupled to the guide members 460 and 470. For example, the second connecting member 534 of the first sub-piezoelectric motor 530-1 may be connected to a first connecting portion 461 of the first guide member 460 in a state in which the first sub-piezoelectric motor 530-1 is supported on the first motor holder 493-1, and the second connecting member 534 of the second sub-piezoelectric motor 530-2 may be connected to a second connecting portion 471 of the second guide member 470 in a state in which the second sub-piezoelectric motor 530-2 is supported on the second motor holder 493-2. The second piezoelectric motor 530 may generate a driving force, based on vibration displacements of the second piezoelectric element 531 and the elastic body 512. The components and operation of the second piezoelectric motor 530 will be described below in detail with reference to FIGS. 15A, 15B, and 16.

According to embodiments, the OIS carrier may be a structure that allows the entire AF sub-unit to be mounted on top of each other and may be ultimately connected to the lens to provide two-dimensional drive in the direction perpendicular to the optical axis.

Due to the structural characteristics of a piezo motor, movement other than one-dimensional linear movement is not possible because the moving part is mechanically bound to the rod. Therefore, in the conventional X and Y drive OIS structure using a piezo motor, it is inevitable to design a structure in which the motor driving a particular axis rests on the motor driving the other axis, and it is essential to design a mechanism having a suitable motion to ensure that the FPCB for powering the motor for a particular axis does not interfere with the operation of the other axis. This may, in conventional systems according to the state of the art, cause problems with the balance of X and Y OIS operation, the size of the actuator and the increase in power consumption, so it can be said that this is a problem that needs to be overcome in the development direction of the piezo actuator for mobile cameras that aim for light weight, small size and low power consumption. Embodiments of the present disclosure address these problems.

FIG. 15A is a view illustrating the second piezoelectric motor of the camera module according to an embodiment. FIG. 15B is a view illustrating the second piezoelectric motor of the camera module according to an embodiment.

FIG. 15A is a perspective view of the second piezoelectric motor 530, and FIG. 15B is a plan view of the second piezoelectric motor 530 of FIG. 15A as viewed in a direction C.

Referring to FIGS. 15A and 15B, the second piezoelectric motor 530 of the camera module according to an embodiment (e.g., the camera module 400 of FIGS. 4A, 4B, and 5) may include the second piezoelectric element 531, the second rod 532, the counter mass 533, and the second connecting member 534. For example, the second piezoelectric motor 530 may be provided in a structure in which the second rod 532 and the counter mass 533 are coupled to opposite ends of the second piezoelectric element 531 and the second connecting member 534 is coupled to the second rod 532 so as to slide.

In an embodiment, when a voltage is applied to the second piezoelectric element 531, mechanical displacement or deformation such as expansion or contraction may occur depending on the direction of an electric field and the polarization direction of the second piezoelectric element 531. For example, the second piezoelectric element 531 may be deformed when a voltage is applied thereto. The second piezoelectric element 531 may be formed by using various piezoelectric elements including piezo-ceramic, a piezo-polymer, or a piezo-composite. For example, the second piezoelectric element 531 may be lead zirconate titanate (PZT)-based piezoelectric ceramic, but is not limited thereto.

The second piezoelectric element 531 may have a shape extending in a direction substantially perpendicular to the optical axis OA and may be contracted or expanded in the lengthwise direction of the second piezoelectric element 531 as a voltage is applied to the second piezoelectric element 531. Here, the lengthwise direction of the second piezoelectric element 531 may be the direction of the first shift axis (e.g., the first shift axis S1 of FIGS. 13 and 14) or the second shift axis (e.g., the second shift axis S2 of FIGS. 13 and 14) that is substantially perpendicular to the optical axis OA. In the illustrated embodiment, the second piezoelectric element 531 may be formed in a rectangular parallelepiped shape extending in a direction substantially perpendicular to the optical axis OA, and the lengthwise direction of the second piezoelectric element 531 may mean a direction parallel to the longest edge among the edges of the rectangular parallelepiped. However, the shape of the second piezoelectric element 531 is not limited to the illustrated embodiment, and the second piezoelectric element 531 may be formed in various shapes including a cylindrical shape.

The second rod 532 and the counter mass 533 may be coupled to the opposite ends of the second piezoelectric element 531, respectively. For example, the second rod 532 may be attached to one side surface of the second piezoelectric element 471 in the lengthwise direction, and the counter mass 533 may be attached to an opposite side surface of the second piezoelectric element 531 in the lengthwise direction.

In an embodiment, the second rod 532 may be coupled to one end of the second piezoelectric element 531. The second rod 532 may move as the second piezoelectric element 531 is contracted or expanded in a direction substantially perpendicular to the optical axis OA with respect to the counter mass 533. The second rod 532 may extend in a direction parallel to the extension direction of the second piezoelectric element 531. For example, the second rod 532 may be formed in a cylindrical shape, and the length of the second rod 532 may remain constant. The second rod 532 may be formed of a carbon-based material. For example, the second rod 532 may be formed of a carbon fiber reinforced plastic (CFRP) material. However, the shape or material of the second rod 532 is not limited to the above-described contents.

The second rod 532 may provide movement of the second carrier (e.g., the second carrier 450 of FIGS. 13 and 14) by transferring vibration displacement occurring depending on contraction or expansion of the second piezoelectric element 531 to the second connecting member 534. At least a portion of the second rod 532 may be coupled to the second connecting member 534 in the state in which the second rod 532 is coupled to the one end of the second piezoelectric element 531. The second rod 532 may be capable of both an operation of moving together with the second connecting member 534 and an operation of moving separately from the second connecting member 534. For example, the second rod 532 may be connected with the second connecting member 534 so as to perform an operation of moving together with the second connecting member 534 and an operation of moving relative to the second connecting member 534, based on a moving speed. The moving speed of the second rod 532 may be determined and controlled, based on the speed at which the second piezoelectric element 531 is contracted or expanded.

In an embodiment, the counter mass 533 may be coupled to an opposite end of the second piezoelectric element 531. The counter mass 533 may serve to support the opposite end of the second piezoelectric element 531 such that contraction or expansion of the second piezoelectric element 531 is smoothly converted into a linear motion of the second rod 532. The counter mass 533 may be a reference for contraction or expansion of the second piezoelectric element 531. For example, the counter mass 533 may support the opposite end of the second piezoelectric element 531 such that the opposite end of the second piezoelectric element 531 is a fixed end. The counter mass 533 may be formed to have a specified mass. For example, the counter mass 533 may be formed of a metallic material, but is not limited thereto.

In an embodiment, the second connecting member 534 may be coupled to the second rod 532 of the second piezoelectric motor 530. For example, the second connecting member 534 may be coupled to the second rod 532 to move together with the second rod 532 or move separately from the second rod 532, based on a frictional force or an inertial force. For example, one portion of the second connecting member 534 may be coupled to the second rod 532 by elastically making pressure contact with the second rod 532, and another portion of the second connecting member 534 may be coupled to the guide members (e.g., the guide members 460 and 470 of FIGS. 13 and 14). The guide members 460 and 470 may move together with the second connecting member 534. The second connecting member 534 may transmit a driving force of the second piezoelectric motor 530 to the guide members 460 and 470.

The second connecting member 534 may include a second body portion 535, a plurality of second pressing portions 536 connected to one side of the second body portion 553, and the second fixed portion 537 connected to an opposite side of the second body portion 535. For example, the second body portion 535 may be formed of an injection material, and the plurality of second pressing portions 536 and the second fixed portion 537 may be formed of a metallic material. However, the disclosure is not limited thereto. In various embodiments, the second connecting member 534 may be formed or manufactured through an insert molding (or, insert injection) process such that the second body portion 535, the plurality of second pressing portions 536, and the second fixed portion 537 are integrally formed. However, a manufacturing process of the second connecting member 534 is not limited to the insert molding.

In an embodiment, the second body portion 535 may support the plurality of second pressing portions 536 and the second fixed portion 537. For example, the plurality of second pressing portions 536 elastically connected to the second rod 532 and the second fixed portion 537 connected to the guide members 460 and 470 may be coupled to the opposite sides of the second body portion 535.

In an embodiment, the plurality of second pressing portions 536 may surround at least a portion of the outer circumferential surface of the second rod 532. The plurality of second pressing portions 536 may include a third portion 536a and a fourth portion 536b. The third portion 536a and the fourth portion 536b may make contact with the second rod 532. When the plurality of second pressing portions 536 and the second rod 532 are viewed in the optical axis directions ① and ②, the plurality of second pressing portions 536 and the second rod 532 may be connected in a three-point contact structure. For example, the plurality of second pressing portions 536 may be configured such that the third portion 536a makes two-point contact with the second rod 532 and the fourth portion 536b makes one-point contact with the second rod 532. According to the illustrated embodiment, the third portion 536a may be partially bent to make two-point contact with the second rod 532.

The plurality of second pressing portions 536 may make contact with the second rod 532, which is disposed between the third portion 536 and the fourth portion 536b, while maintaining a predetermined pre-load. For example, the plurality of second pressing portions 536 may make contact with the outer circumferential surface of the second rod 532 while elastically pressing the second rod 532. The plurality of second pressing portions 536 may be configured such that the third portion 536a and the fourth portion 536b apply a pre-load to the second rod 532 in opposite directions. For example, the third portion 536a may apply a pre-load P6 to the second rod 532 in a direction toward the fourth portion 536b, and the fourth portion 536b may apply a pre-load P7 to the second rod 532 in a direction toward the third portion 536a. As the plurality of second pressing portions 536 are divided into the third portion 536a and the fourth portion 536b, the second connecting member 534 according to the embodiment of the disclosure may easily adjust the pre-load applied to the second rod 532.

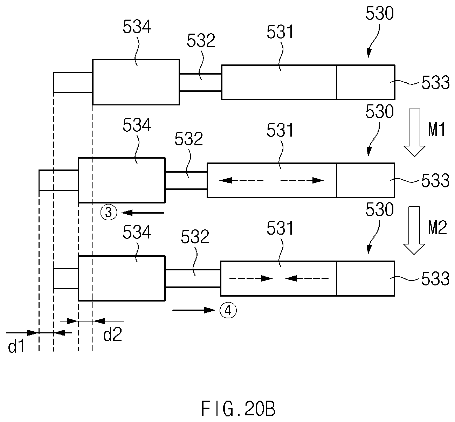

The plurality of second pressing portions 536 may be formed to have an elastic force. For example, the third portion 536a and the fourth portion 536b may be formed of a plate spring made of a metallic material, but are not limited thereto. As the plurality of second pressing portions 536 are elastically coupled to the second rod 532, the second connecting member 534 may move together with the second rod 532 or may not move together with the second rod 532, based on the deformation speed of the second piezoelectric element 531 (or, the moving speed of the second rod 532) (e.g., stick-slip motion). For example, when the second rod 532 moves at a speed lower than a predetermined speed, the second connecting member 534 may move together with the second rod 532, and when the second rod 532 moves at a speed higher than the predetermined speed, the second connecting member 534 may not move together with the second rod 532. In other words, the ratio of the speed of the second rod 532 to the speed of the second connecting member 534 may vary depending on the deformation speed of the second piezoelectric element 531. An operation in which the second connecting member 534 moves in the second piezoelectric motor 530 will be described below in detail with reference to FIG. 20B.

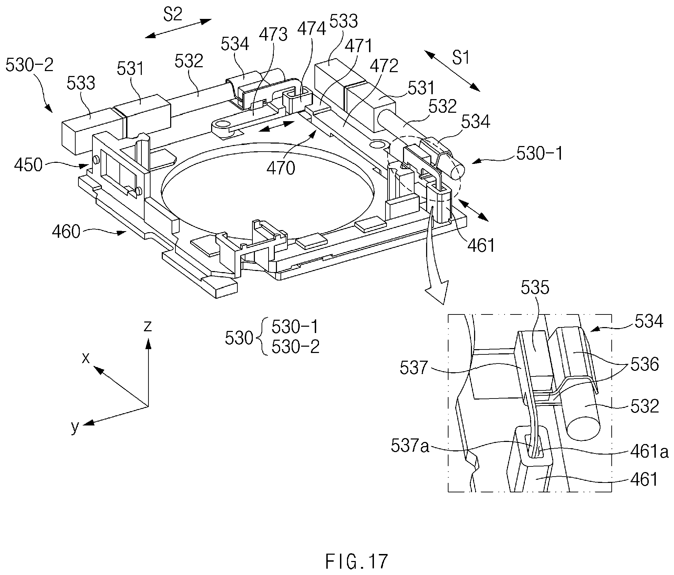

In an embodiment, the second fixed portion 537 may be coupled to the guide members 460 and 470. For example, the second fixed portion 537 may be fixedly coupled to the guide members 460 and 470 so as to move together with the guide members 460 and 470 (e.g., refer to FIG. 17). For example, as the first guide member 460 is connected to the second connecting member 534 through the second fixed portion 537 of the first sub-piezoelectric motor 530-1, the first guide member 460 may move together with the second connecting member 534 when the second connecting member 534 moves on the second rod 532 in the direction of the first shift axis S1. As the second guide member 470 is connected to the second connecting member 534 through the second fixed portion 537 of the second sub-piezoelectric motor 530-2, the second guide member 470 may move together with the second connecting member 534 when the second connecting member 534 moves on the second rod 532 in the direction of the second shift axis S2.

FIG. 16 is a view illustrating an operation of the second piezoelectric motor according to an embodiment.

Referring to FIG. 16, the second piezoelectric motor 530 according to an embodiment may include the second piezoelectric element 531, the second rod 532 attached to one side of the second piezoelectric element 531, and the counter mass 533 attached to an opposite side of the second piezoelectric element 531. FIG. 16 is a view in which the second connecting member (e.g., the second connecting member 534 of FIGS. 15A and 15B) is omitted.

In an embodiment, the second piezoelectric motor 530 may be configured such that the second rod 532 is moved in the directions of the shift axes (e.g., the shift axes S1 and S2 of FIGS. 13 and 14) by expansion and contraction of the second piezoelectric element 531. As the second piezoelectric element 531 is supported by the counter mass 533, expansion or contraction of the second piezoelectric element 531 may be converted into a linear motion of the second rod 532. For example, the second piezoelectric element 531 may be expanded or contracted in the directions of the shift axes S1 and S2, based on a voltage applied thereto. The second rod 532 may be linearly moved in the directions of the shift axes S1 and S2 by the expansion or contraction of the second piezoelectric element 531.

In an embodiment, the second piezoelectric element 531, when contracted or expanded, may be deformed such that a first end portion 5311 of the second piezoelectric element 531 moves away from or toward a second end portion 5312 as the second end portion 5312 of the second piezoelectric element 531 is supported by the counter mass 533. The second rod 532 may be coupled to the first end portion 5311 of the second piezoelectric element 531 and may move together with the first end portion 5311. The second rod 532 may maintain a predetermined length and may perform a linear motion in the directions of the shift axes S1 and S2 with respect to the second end portion 5312 or the counter mass 533 as the second piezoelectric element 533 expands and contracts. For example, in a default state in which a voltage is not applied to the second piezoelectric element 531, the one end portion 5311 of the second rod 532 may be located at a first distance L1 from the counter mass 533.

Referring to an operation in which deformation from the middle figure to the lower figure in FIG. 16 occurs, the second piezoelectric motor 531 may receive a voltage for expanding the second piezoelectric element 531 in the lengthwise direction (e.g., the directions of the shift axes S1 and S2). The second piezoelectric element 531 may be expanded while the second end portion 5312 is supported by the counter mass 533 and the first end portion 5311 moves in one direction ③ with respect to the second end portion 5312 or the counter mass 533. When the second piezoelectric element 531 expands in the directions of the shift axes S1 and S2, the second rod 532 may move in the one direction ③ (e.g., a direction away from the counter mass 533), and the distance from the counter mass 533 to the one end portion 5311 of the second rod 532 may be a second distance L2 greater than the first distance L1.

Referring to an operation in which deformation from the middle figure to the upper figure in FIG. 16 occurs, the second piezoelectric motor 531 may receive a voltage for contracting the second piezoelectric element 531 in the lengthwise direction (e.g., the directions of the shift axes S1 and S2). The second piezoelectric element 531 may be contracted while the second end portion 5312 is supported by the counter mass 533 and the first end portion 5311 moves in a direction ④ opposite to the one direction ③ with respect to the second end portion 5312 or the counter mass 533. When the second piezoelectric element 531 contracts in the directions of the shift axes S1 and S2, the second rod 532 may move in the direction ④ opposite to the one direction ③ (e.g., a direction toward the counter mass 533), and the distance from the counter mass 533 to the one end portion 5311 of the second rod 532 may be a third distance L3 smaller than the first distance L1.

FIG. 17 is a view illustrating a coupling structure of the guide members and the second piezoelectric motor of the camera module according to an embodiment.

Referring to FIG. 17, the camera module 400 according to an embodiment may include the second carrier 450, the first guide member 460, the second guide member 470, and the second piezoelectric motor 530.

In an embodiment, the second carrier 450 may receive a driving force of the second piezoelectric motor 530 through the first guide member 460 and the second guide member 470 without being directly connected with the second piezoelectric motor 530. For example, the second carrier 450 may receive a driving force of the first sub-piezoelectric motor 530-1 through the first guide member 460 and may receive a driving force of the second sub-piezoelectric motor 530-2 through the second guide member 470.

Movement of the second carrier 450 relative to the second guide member 460 in the direction of the first shift axis S1 may be restricted, and the second carrier 450 may be movable in the direction of the second shift axis S2. The first guide member 460 may be moved in the direction of the first shift axis S1 by the driving force of the first sub-piezoelectric motor 530-1, and the second carrier 450 may move in the direction of the first shift axis S1 together with the first guide member 460.

Movement of the second carrier 450 relative to the second guide member 470 in the direction of the second shift axis S2 may be restricted, and the second carrier 450 may be movable in the direction of the first shift axis S1. The second guide member 470 may be moved in the direction of the second shift axis S2 by the driving force of the second sub-piezoelectric motor 530-2, and the second carrier 450 may move in the direction of the second shift axis S2 together with the second guide member 470. Since the second carrier 450 is movable relative to the second guide member 470 in the direction of the first shift axis S1, the second carrier 450 may move relative to the second guide member 470 in the direction of the first shift axis S1 together with the first guide member 460.

In an operation of moving the second carrier 450 in the direction of the first shift axis S1, the first sub-piezoelectric motor 530-1 may apply a driving force for movement in the direction of the first shift axis S1 to the first guide member 460. When the first guide member 460 moves in the direction of the first shift axis S1, the second carrier 450 may move together with the first guide member 460 since movement in the direction of the first shift axis S1 between the first guide member 460 and the second carrier 450 is restricted, and the second guide member 470 may be separated from movement of the second carrier 450 without moving together with the second carrier 450 since movement in the direction of the first shift axis S1 between the second guide member 470 and the second carrier 450 is possible.

In an operation of moving the second carrier 450 in the direction of the second shift axis S2, the second sub-piezoelectric motor 530-2 may apply a driving force for movement in the direction of the second shift axis S2 to the second guide member 470. When the second guide member 470 moves in the direction of the second shift axis S1, the second carrier 450 may move together with the second guide member 470 since movement in the direction of the second shift axis S2 between the second guide member 470 and the second carrier 450 is restricted, and the first guide member 460 may be separated from movement of the second carrier 450 without moving together with the second carrier 450 since movement in the direction of the second shift axis S2 between the first guide member 460 and the second carrier 450 is possible.

In an embodiment, the first guide member 460 may include the first connecting portion 461 to which the first sub-piezoelectric motor 530-1 is connected. The first connecting portion 461 may be formed on the upper surface of the first guide member 460 (e.g., the second upper surface 460a of FIG. 14). For example, the first connecting portion 461 may protrude from the second upper surface 460a so as to be substantially perpendicular to the second upper surface 460a. At least a portion of the second connecting member 534 of the first sub-piezoelectric motor 530-1 may be coupled to the first connecting portion 461. The first connecting portion 461 may have a coupling recess 461a formed therein in which a bending portion 537a of the second fixed portion 537 of the first sub-piezoelectric motor 530-1 is accommodated. For example, the bending portion 537a of the second fixed portion 537 may be partially accommodated in the coupling recess 461a, and a bonding member (not illustrated) to which the bending portion 537a is coupled so as to be movable may be accommodated in the coupling recess 461a. For example, the bonding member may provide a specified level of bonding force (or, constraint force) such that the second fixed portion 537 is not separated from the first guide member 460 and may be bonded with the bending portion 537a such that movement is possible in a predetermined range.

In an embodiment, the second guide member 470 may include a first portion 471, a second portion 472 extending from the first portion 471 in the direction of the first shift axis S1, a third portion 473 extending from the first portion 471 in the direction of the second shift axis S2, and a second connecting portion 474 formed on the first portion 471. The second connecting portion 474, to which the second sub-piezoelectric motor 530-2 is connected, may be formed on the first portion 471 of the second guide member 470. The second connecting portion 474 may protrude one surface (e.g., a surface facing in the +z-axis direction) of the first portion 471 so as to be substantially perpendicular to the one surface of the first portion 471. At least a portion of the second connecting member 534 of the second sub-piezoelectric motor 530-2 may be coupled to the second connecting portion 474. The second connecting portion 474 may have a coupling recess (not illustrated) in which a bending portion 537a of the second fixed portion 537 of the second sub-piezoelectric motor 530-2 is accommodated. The method in which the second fixed portion 537 of the first sub-piezoelectric motor 530-1 is bonded to the first connecting portion 461 by the bonding member may be identically applied to the second sub-piezoelectric motor 530-2 and the second connecting portion 474.

FIG. 18A is a view illustrating the second carrier, the first guide member, and the second guide member of the camera module according to an embodiment. FIG. 18B is a view illustrating the second carrier, the first guide member, and the second guide member of the camera module according to an embodiment.

FIG. 18A is an exploded perspective view of the second carrier, the first guide member, and the second guide member as viewed from above. FIG. 18B is an exploded perspective view of the second carrier, the first guide member, and the second guide member as viewed from below the second carrier.

Referring to FIGS. 18A and 18B, the second guide member 470, the second carrier 450, and the first guide member 460 may be aligned in the direction of the optical axis OA and may be sequentially disposed in the direction of the optical axis OA. The second guide member 470, the second carrier 450, and the first guide member 460 may include the plurality of guide grooves 462, 463, 455, 456, 475, and 476 for guiding movement of the second carrier 450 in the directions of the first shift axis S1 and the second shift axis S2.

In an embodiment, the first guide member 460 may include the second upper surface 460a on which the second carrier 450 is disposed and a second lower surface 460b facing away from the second upper surface 460a. The first guide member 460 may include the plurality of fifth grooves 463 for guiding movement between the first guide member 460 and the base 413 and the plurality of sixth grooves 462 for guiding movement between the first guide member 460 and the second carrier 450.

The second lower surface 460b of the first guide member 460 may face the first support surface (e.g., the first support surface 415 of FIG. 14) of the base (e.g., the base 413 of FIG. 14). The plurality of fifth grooves 463 aligned with the plurality of fourth grooves formed on the base 413 (e.g., the plurality of fourth grooves 419 of FIG. 14) in the direction of the optical axis OA may be formed on the second lower surface 460b. The plurality of fourth grooves 419 and the plurality of fifth grooves 463 may be formed in a shape extending in the direction of the first shift axis S1. The plurality of fourth grooves 419 and the plurality of fifth grooves 463 may face each other in a state in which the first guide member 460 is seated on the base 413.

The plurality of fourth grooves 419 and the plurality of fifth grooves 463 may form or define spaces in which the plurality of third balls 483 are accommodated. The plurality of third balls 483 may be disposed between the base 413 and the first guide member 460. The plurality of third balls 483 may be accommodated in the spaces between the plurality of fourth grooves 419 and the plurality of fifth grooves 463 so as to perform a rotational motion and/or a rolling motion. For example, when the first guide member 460 moves in the direction of the first shift axis S1 with respect to the base 413, the plurality of third balls 483 may rotate while linearly moving in the direction of the first shift axis S1 between the plurality of fourth grooves 419 and the plurality of fifth grooves 463, or may rotate in place.

The second upper surface 460a of the first guide member 460 may face a first lower surface 450b of the second carrier 450. The plurality of sixth grooves 462 having a shape extending in the direction of the second shift axis S2 may be formed on the second upper surface 460a.

In an embodiment, the second carrier 450 may include the first upper surface 450a on which the second guide member 470 is disposed and the first lower surface 450b facing away from the first upper surface 450a. The second carrier 450 may include the plurality of seventh grooves 456 for guiding movement between the second carrier 450 and the first guide member 460 and the plurality of eighth grooves 455 for guiding movement between the second carrier 450 and the second guide member 470.

The first lower surface 450b of the second carrier 450 may face the second upper surface 460a of the first guide member 460. The plurality of seventh grooves 456 aligned with the plurality of sixth grooves 462 of the first guide member 460 in the direction of the optical axis OA may be formed on the first lower surface 450b. The plurality of seventh grooves 456 may be formed in a shape extending in the direction of the second shift axis S2 to correspond to the plurality of sixth grooves 462. The plurality of sixth grooves 462 and the plurality of seventh grooves 456 may face each other in a state in which the second carrier 450 is seated on the first guide member 460.

The plurality of sixth grooves 462 and the plurality of seventh grooves 456 may form or define spaces in which the plurality of fourth balls 484 are accommodated. The plurality of fourth balls 484 may be disposed between the first guide member 460 and the second carrier 450. The plurality of fourth balls 484 may be accommodated in the spaces between the plurality of sixth grooves 462 and the plurality of seventh grooves 456 so as to perform a rotational motion and/or a rolling motion. For example, when the second carrier 450 moves in the direction of the second shift axis S2 with respect to the first guide member 460, the plurality of fourth balls 484 may rotate while linearly moving in the direction of the second shift axis S2 between the plurality of sixth grooves 462 and the plurality of seventh grooves 456, or may rotate in place.

The first upper surface 450a of the second carrier 450 may face the second guide member 470. The plurality of eighth grooves 455 having a shape extending in the direction of the first shift axis S1 may be formed on the first upper surface 450a.

In an embodiment, the second guide member 470 may include the first portion 471 on which the second connecting portion 474 is formed, the second portion 472 extending from the first portion 471 in the direction of the first shift axis S1, and the third portion 473 extending from the first portion 471 in the direction of the second shift axis S2. The second guide member 470 may include the plurality of ninth grooves 476 for guiding movement between the second guide member 470 and the second carrier 450 and the plurality of tenth grooves 475 for movement between the second guide member 470 and the second spring member (e.g., the second spring member 495 of FIGS. 13 and 14).

The second portion 472 of the second guide member 470 may include the plurality of ninth grooves 476 formed on one surface facing the second carrier 450 (e.g., a surface facing in the -z-axis direction). The plurality of ninth grooves 476 may be aligned with the plurality of eighth grooves 455 of the second carrier 450 in the direction of the optical axis OS. The plurality of ninth grooves 476 may be formed in a shape extending in the direction of the first shift axis S1 to correspond to the plurality of eighth grooves 455. The plurality of eighth grooves 455 and the plurality of ninth grooves 476 may face each other in a state in which the second guide member 470 is seated on the second carrier 450.

The plurality of eighth grooves 455 and the plurality of ninth grooves 476 may form or define spaces in which the plurality of fifth balls 485 are accommodated. The plurality of fifth balls 485 may be disposed between the second carrier 450 and the second guide member 470. The plurality of fifth balls 485 may be accommodated in the spaces between the plurality of eighth grooves 455 and the plurality of ninth grooves 476 so as to perform a rotational motion and/or a rolling motion. For example, when the second carrier 450 moves in the direction of the first shift axis S1 with respect to the second guide member 470, the plurality of fifth balls 485 may rotate while linearly moving in the direction of the first shift axis S1 between the plurality of eighth grooves 455 and the plurality of ninth grooves 476, or may rotate in place.

The first portion 471 and the second portion 472 of the second guide member 470 may have the plurality of tenth grooves 475 formed on a surface (e.g., a surface facing in the +z-axis direction) facing away from the surface on which the plurality of ninth grooves 476 are formed. For example, the plurality of tenth grooves 475 may be formed on a surface facing toward the second spring member 495. The plurality of sixth balls 486 may be accommodated in the plurality of tenth grooves 475 so as to be rotatable. The plurality of tenth grooves 475 may be formed in a cylindrical groove shape corresponding to the plurality of sixth balls 486 without extending in the directions of the shift axes S1 and S2. The plurality of sixth balls 486 may make contact with the second spring member 495 in the state of being accommodated in the plurality of tenth grooves 475. When the second guide member 470 moves with respect to the second spring member 495, the plurality of sixth balls 486 may rotate in the spaces between the second spring member 495 and the plurality of tenth grooves 475.

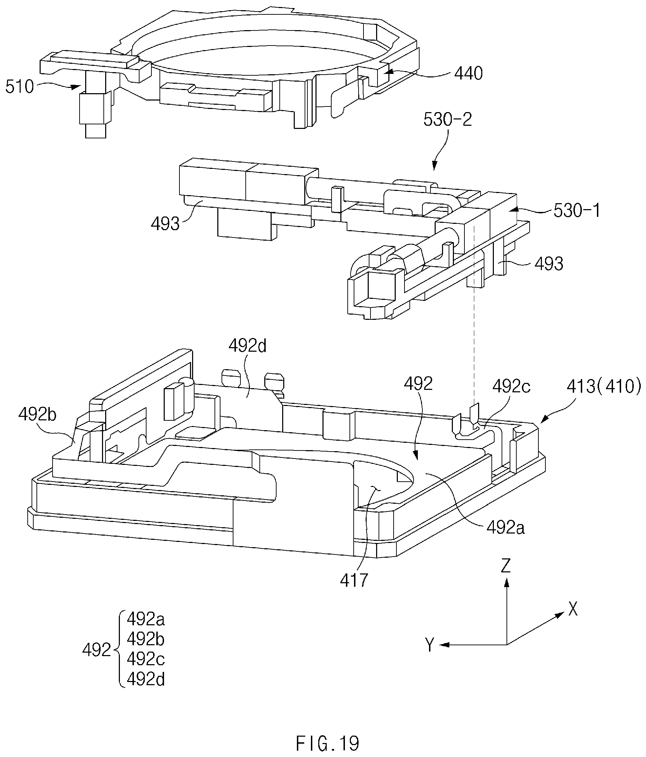

FIG. 19 is a view illustrating an electrical connection structure between the substrate member and the piezoelectric motors of the camera module according to an embodiment.

Referring to FIG. 19, the camera module according to an embodiment (e.g., the camera module 400 of FIG. 5) may include the base 413 of the camera housing 410, the first carrier 440, the motor holder 493, the substrate member 492, the first piezoelectric motor 510, and the second piezoelectric motor 530.

In an embodiment, the substrate member 492 may include a first sub-substrate 492a seated on the base 413 and second, third, and fourth sub-substrates 492b, 492c, and 492d extending from the first sub-substrate 492a. According to various embodiments, the substrate member 492 may include a printed circuit board (PCB), a flexible printed circuit board (FPCB), or a rigid-flexible printed circuit board (RFPCB). The number, shape, or positions of substrate members 492 illustrated in FIG. 19 are illustrative and are not limited to the illustrated embodiment.

In an embodiment, the first sub-substrate 492a may be disposed on one surface of the base 413 (e.g., a surface facing in the +z-axis direction or the first surface 415 of FIG. 5). For example, the first sub-substrate 492a may be attached to the one surface to face the first carrier 440 and the motor holder 493. An opening region (not illustrated) corresponding to the second opening 417 of the base 413 may be formed in the first sub-substrate 492a.

In an embodiment, the second, third, and fourth sub-substrates 492b, 492, and 492d may extend from the first sub-substrate 492a toward the first piezoelectric motor 510 and the second piezoelectric motor 530. The second sub-substrate 492b may be electrically connected with the first piezoelectric motor 510, and the third sub-substrate 492c and the fourth sub-substrate 492d may be electrically connected with the plurality of second piezoelectric motors 530. The third sub-substrate 492c may be electrically connected with the first sub-piezoelectric motor 530-1, and the fourth sub-substrate 492d may be electrically connected with the second sub-piezoelectric motor 530-2. For example, the first sub-substrate 492a may be connected to the first piezoelectric element 511 to apply an electrical signal to the first piezoelectric element 511 of the first piezoelectric motor 510. The second sub-substrate 492b and the third sub-substrate 492c may be connected to the second piezoelectric element 531 to apply an electrical signal to the second piezoelectric element 531 of the second piezoelectric motor 530.

The third sub-substrate 492c and the fourth sub-substrate 492d may be fixed without moving when the second piezoelectric motor 530 is driven. For example, the first sub-piezoelectric motor 530-1 and the second sub-piezoelectric motor 530-2 of the second piezoelectric motor 530 may be supported on the motor holder 493 fixed to the base 413. The first sub-piezoelectric motor 530-1 and the second sub-piezoelectric motor 530-2 may not interfere with or obstruct each other when driven. As described above with reference to FIGS. 13 and 14, according to an embodiment of the disclosure, the second carrier 450 may not be directly connected with the first sub-piezoelectric motor 530-1 and the second sub-piezoelectric motor 530-2 and may receive a driving force through the first and second guide members 460 and 470. For example, since the second piezoelectric motor 530 is not directly connected to the second carrier 450 that moves along two axes perpendicular to each other, the second sub-piezoelectric motor 530-2 does not have to move together with the second carrier 450 so as not to obstruct or constrain driving of the first sub-piezoelectric motor 530-1 when the first sub-piezoelectric motor 530-1 is driven, and the first sub-piezoelectric motor 530-1 does not have to move together the second carrier 450 so as not to obstruct or constrain driving of the second sub-piezoelectric motor 530-2 when the second sub-piezoelectric motor 530-2 is driven.

The third sub-substrate 492c is independent of the driving of the first sub-piezoelectric motor 530-1 and does not have to move in response to the driving of the first sub-piezoelectric motor 530-1. The fourth sub-substrate 492d is independent of the driving of the second sub-piezoelectric motor 530-2 and does not have to move in response to the driving of the second sub-piezoelectric motor 530-2. According to an embodiment of the disclosure, a structure avoiding design to provide movement of an FPCB connected to another shift axis so as not to obstruct an OIS operation using one shift axis may be implemented.

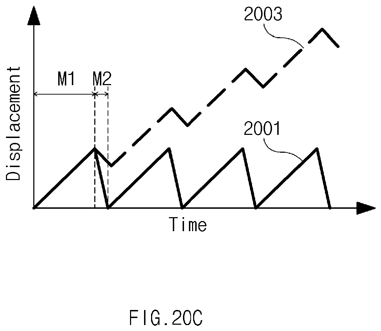

FIG. 20A is a view illustrating a moving operation of the first connecting member in the first piezoelectric motor according to an embodiment. FIG. 20B is a view illustrating a moving operation of the second connecting member in the second piezoelectric motor according to an embodiment. FIG. 20C is a graph depicting the moving operations of the connecting members in the first piezoelectric motor and the second piezoelectric motor according to an embodiment.

Referring to FIGS. 20A, 20B, and 20C, the camera module 400 according to an embodiment may include the first piezoelectric motor 510 for an AF function and the second piezoelectric motor 530 for an OIS function. The first piezoelectric motor 510 includes the first piezoelectric element 511, the elastic body 512, the first rod 513, and the first connecting member 514. The second piezoelectric motor 530 may include the second piezoelectric element 531, the second rod 532, the counter mass 533, and the second connecting member 534.

In an embodiment, the piezoelectric motors 510 and 530 may operate using a smooth impact drive mechanism (SIDM). For example, the operating principle of a general SIDM may be based on an inertial force and a frictional force and may be understood as a stick-slip motion. When the piezoelectric elements 511 and 531 are slowly contracted or expanded, the rods 513 and 532 may move at low speed and may move together with the connecting members 514 and 534 (e.g., a stick motion). In contrast, when the piezoelectric elements 511 and 531 are rapidly contracted or expanded, the rods 513 and 532 may move relative to the connecting members 514 and 534 without moving at high speed together with the connecting members 514 and 534 (e.g., a slip motion). In other words, the ratio of the speed of the rods 513 and 532 to the speeds of the connecting members 514 and 534 may vary depending on the speed of the contraction or expansion of the piezoelectric elements 511 and 531. For example, the first carrier (e.g., the first carrier 440 of FIG. 12) may be moved by movement of the first connecting member 514, and the first guide member and the second guide member (e.g., the first guide member 460 and the second guide member 470 of FIG. 17) may be moved by movement of the second connecting member 534.

Referring to an operation of the first piezoelectric motor 510 illustrated in FIG. 20A, the first piezoelectric motor 510 may be driven in a first operation M1 and a second operation M2 and may move the first connecting member 514 on the first rod 513. In the first motion M1, the first piezoelectric element 511 may be slowly contracted, the first rod 513 may slowly move in the second optical axis direction ②, and as the first connecting member 514 and the first rod 513 make pressure contact with each other, the first connecting member 514 may be moved in the second optical axis direction ② by a first distance d1 together with the first rod 513 by a frictional force between the first connecting member 514 and the first rod 513. In the second motion M2, the first piezoelectric element 511 may be more rapidly expanded than in the first motion M1, the first rod 513 may be rapidly moved in the first optical axis direction ① by the first distance d1, and the first connecting member 514 may not move together with the first rod 513 due to the inertial force of the first connecting member 514 and may remain at the position moved by the first motion M1 while sliding from the first rod 513 or may move in the first optical axis direction ① by a distance shorter than the first distance d1. According to the illustrated embodiment, when the first motion M1 and the second motion M2 are performed, the first connecting member 514 may be moved by a second distance d2 shorter than the first distance d1. However, the disclosure is not limited thereto, and according to various embodiments, the first distance d1 and the second distance d2 may be substantially the same as each other.

FIG. 20A illustrates the operation of the first piezoelectric motor 510 for moving the first connecting member 514 in the second optical axis direction, and the direction of movement of the first connecting member 514 may be changed depending on the direction in which the first piezoelectric element 511 is deformed in the first motion M1 and the second motion M2. For example, as the first piezoelectric element 511 is slowly expanded in the first motion M1 and rapidly contracted in the second motion M2, the first piezoelectric motor 510 may move the first connecting member 514 in the first optical axis direction ①.

Referring to an operation of the second piezoelectric motor 530 illustrated in FIG. 20B, the second piezoelectric motor 530 may be driven in a first operation M1 and a second operation M2 and may move the second connecting member 534 on the second rod 532. In the first motion M1, the second piezoelectric element 531 may be slowly expanded, the second rod 532 may slowly move in one direction (e.g., a direction ③ away from the counter mass 533), and as the second connecting member 534 and the second rod 532 make pressure contact with each other, the second connecting member 534 may be moved in the one direction ③ by a first distance d1 together with the second rod 532 by a frictional force between the second connecting member 534 and the second rod 532. In the second motion M2, the second piezoelectric element 531 may be more rapidly contracted than in the first motion M1, the second rod 532 may be rapidly moved by the first distance d1 in a direction opposite to the one direction (e.g., a direction ④ toward the counter mass 533), and the second connecting member 534 may not move together with the second rod 532 due to the inertial force of the second connecting member 534 and may remain at the position moved by the first motion M1 while sliding from the second rod 532 or may move in the direction ④ opposite to the one direction ③ by a distance shorter than the first distance d1. According to the illustrated embodiment, when the first motion M1 and the second motion M2 are performed, the second connecting member 534 may be moved by a second distance d2 shorter than the first distance d1. However, the disclosure is not limited thereto, and according to various embodiments, the first distance d1 and the second distance d2 may be substantially the same as each other.

FIG. 20B illustrates the operation of the second piezoelectric motor 530 for moving the second connecting member 534 in the direction ③ away from the counter mass 533, and the direction of movement of the second connecting member 534 may be changed depending on the direction in which the second piezoelectric element 531 is deformed in the first motion M1 and the second motion M2. For example, as the second piezoelectric element 531 is slowly contracted in the first motion M1 and rapidly expanded in the second motion M2, the second piezoelectric motor 530 may move the second connecting member 534 in the direction ④ toward the counter mass 533.

FIG. 20C is a graph depicting a change in the positions of the first and second rods 513 and 532 and the first and second connecting members 514 and 534 over time. In the graph, a solid line 2001 represents the displacement of the first and second rods 513 and 532 depending on contraction or expansion of the first and second piezoelectric elements 511 and 531, and a dotted line 2003 represents the displacement of the first and second connecting members 514 and 534. For example, since the first and second rods 513 and 532 more rapidly move in the second motion M2 than in the first motion M1, the slope of the solid line 2001 in the time interval in which the second motion M2 is performed may be greater than that in the time interval in which the first motion M1 is performed.

In an embodiment, the first and second piezoelectric motors 510 and 530 may move the first and second connecting members 514 and 534 by a desired distance by repeating the first motion M1 and the second motion M2. For example, when the first motion M1 and the second motion M2 are performed once, the first and second connecting members 514 and 534 may be moved by the second distance d2, and by repeatedly performing the first motion M1 and the second motion M2, the first and second connecting members 514 and 534 may be moved by a desired distance. For example, when the first operation M1 and the second operation M2 are repeated three times, the first and second connecting members 514 and 534 may be moved by about three times the second distance d2.

The first motion M1 may be performed since the frictional forces between the first and second rods 513 and 532 and the first and second connecting members 514 and 534 are greater than the inertial forces of the first and second connecting members 514 and 534 and may be understood as a sticking motion. The second motion M2 may be performed since the inertial forces of the first and second connecting members 514 and 534 are greater than the frictional forces between the first and second rods 513 and 532 and the first and second connecting members 514 and 534 and may be understood as a slipping motion.

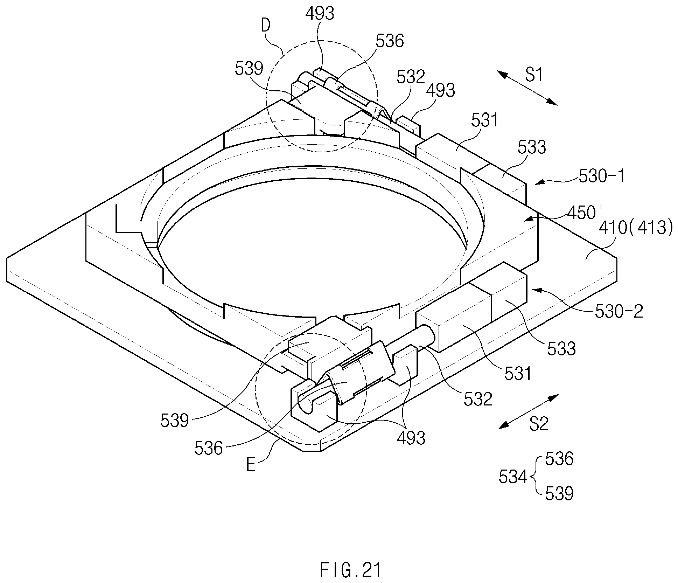

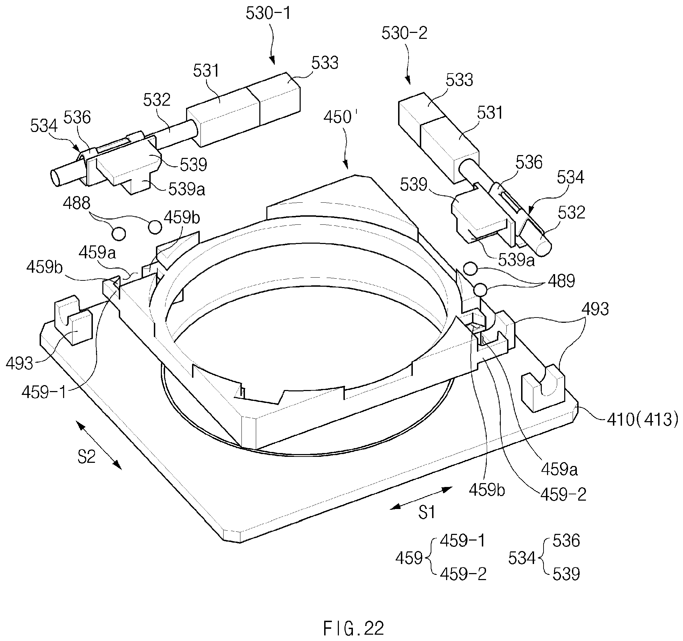

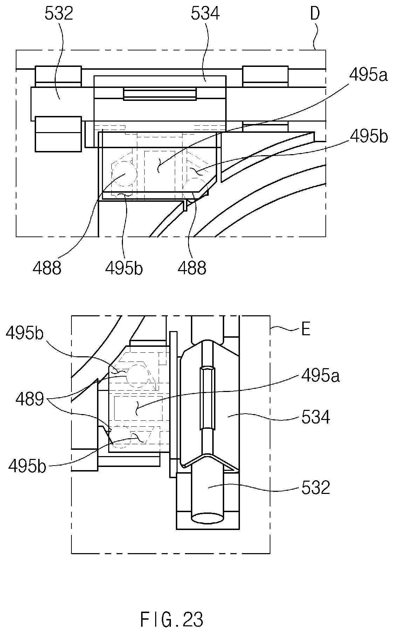

FIG. 21 is a view illustrating a camera housing, a second carrier, and a second piezoelectric motor of a camera module according to an embodiment. FIG. 22 is a view illustrating the camera housing, the second carrier, and the second piezoelectric motor of the camera module according to an embodiment. FIG. 23 is a view illustrating the camera housing, the second carrier, and the second piezoelectric motor of the camera module according to an embodiment.

FIGS. 21, 22, and 23 are views illustrating an embodiment in which a connection structure between the second carrier and the second piezoelectric motor is changed, compared to that in the embodiment described above with reference to FIG. 17.

Referring to FIGS. 21, 22, and 23, the camera module according to an embodiment (e.g., the camera module 400 of FIGS. 4A, 4B, and 5) may include the camera housing 410 (e.g., the camera housing 410 or the base 413 of FIG. 5), the second carrier 450' (e.g., the second carrier 450 of FIG. 5), the second piezoelectric motor 530 (e.g., the second piezoelectric motor 530 of FIG. 5), and guide balls 488 and 489. The camera housing 410 may be referred to as the base 413. For example, FIGS. 21 to 23 illustrate an embodiment in which the structure of the second carrier 450' and the structure of a second connecting member 534 of the second piezoelectric motor 530 are changed, compared to those in the embodiment illustrated in FIG. 17 and guide members (e.g., the guide members 460 and 470 of FIG. 17) are omitted due to the changed structures.

In an embodiment, the second carrier 450' may be moved in the direction of a first shift axis S1 by a first sub-piezoelectric motor 530-1 and may be moved in the direction of a second shift axis S2 by a second sub-piezoelectric motor 530-2. The second carrier 450' may include a connecting portion 459 to which the second piezoelectric motor 530 is connected. The connecting portion 459 may be formed on a side surface of the second carrier 450'. The connecting portion 459 may include a first connecting portion 459-1 to which the first sub-piezoelectric motor 530-1 is connected and a second connecting portion 459-2 to which the second sub-piezoelectric motor 530-2 is connected. The first connecting portion 459-1 may receive a driving force from the first sub-piezoelectric motor 530-1, and the second connecting portion 459-2 may receive a driving force from the second sub-piezoelectric motor 530-2.

In an embodiment, movement of the first connecting portion 459-1 in the direction of the first shift axis S1 relative to the second connecting member 534 of the first sub-piezoelectric motor 530-1 may be constrained, and the first connecting portion 459-1 may freely move in the direction of the second shift axis S2. Movement of the second connecting portion 459-2 in the direction of the second shift axis S2 relative to the second connecting member 534 of the second sub-piezoelectric motor 530-2 may be constrained, and the second connecting portion 459-2 may freely move in the direction of the first shift axis S1.

The first connecting portion 459-1 may be movable in the direction of the second shift axis S2 relative to the first sub-piezoelectric motor 530-1 such that the second carrier 450' is moved in the direction of the second shift axis S2 by the second sub-piezoelectric motor 530-2. The second connecting portion 459-2 may be movable in the direction of the first shift axis S1 relative to the second sub-piezoelectric motor 530-2 such that the second carrier 450' is moved in the direction of the first shift axis S1 by the first sub-piezoelectric motor 530-1.

A guide rail 459a in which a guide protrusion 539a of the second piezoelectric motor 530 is accommodated and guide grooves 459b that are formed on opposite sides of the guide rail 459a and in which the guide balls 488 and 489 are accommodated may be formed in each of the first connecting portion 459-1 and the second connecting portion 459-2. The guide rail 459a and the guide grooves 459b of the first connecting portion 459-1 may be formed in a shape extending in the direction of the second shift axis S2. The guide rail 459a and the guide grooves 459b of the second connecting portion 459-2 may be formed in a shape extending in the direction of the first shift axis S1.

In an embodiment, the second piezoelectric motor 530 may include a second piezoelectric element 531, a second rod 532, a counter mass 533, and the second connecting member 534. The second connecting member 534 may include a second pressing portion 536 and a guide portion 539 coupled to the second pressing portion 536. For example, the second piezoelectric element 531, the second rod 532, the counter mass 533, and the second pressing portion 536 of the second connecting member 534 of the second piezoelectric motor 530 illustrated in FIGS. 21 and 22 may be substantially the same as, or similar to, the components included in the second piezoelectric motor 530 illustrated in FIGS. 15A and 15B. Hereinafter, repetitive descriptions will be omitted, and the following description will be focused on the changed contents.

In an embodiment, the second connecting member 534 may include the guide portion 539 for guiding movement of the second carrier 450'. The guide portion 539 may be coupled to one side of the second pressing portion 536 elastically coupled to the second rod 532. The guide portion 539 may be coupled to the second carrier 450'. For example, the guide portion 539 may be coupled to the connecting portion 459 of the second carrier 450'. The guide portion 539 may include the guide protrusion 539a corresponding to the guide rail 459a formed in the connecting portion 459. The guide protrusion 539a may be accommodated in the guide rail 459a. The guide protrusion 539a may be movable in the guide rail 459a in the extension direction of the guide rail 459a.

In an embodiment, the guide protrusion 539a coupled to the guide rail 459a may guide the second carrier 450' such that the second carrier 450' is movable relative to the guide portion 539 in one of the directions of the shift axes S1 and S2 and movement of the second carrier 450' in a direction perpendicular to the one direction is constrained.

The guide protrusion 539a of the first sub-piezoelectric motor 530-1 may be formed in a shape extending in the direction of the second shift axis S2. The guide protrusion 539a of the first sub-piezoelectric motor 530-1 may transmit a driving force of the first sub-piezoelectric motor 530-1 to the second carrier 450' to move the second carrier 450' in the direction of the first shift axis S1. For example, since movement of the guide protrusion 539a of the first sub-piezoelectric motor 530-1 in the direction of the first shift axis S1 relative to the first connecting portion 459-1 is restricted, the guide protrusion 539a of the first sub-piezoelectric motor 530-1 may transmit the driving force of the first sub-piezoelectric motor 530-1 to the second carrier 450'. Since the guide protrusion 539a of the first sub-piezoelectric motor 530-1 is movable in the direction of the second shift axis S2 relative to the guide rail 459a, the second carrier 450' may not be constrained by the guide protrusion 539a when moving in the direction of the second shift axis S2.

The guide protrusion 539a of the second sub-piezoelectric motor 530-2 may be formed in a shape extending in the direction of the first shift axis S1. The guide protrusion 539a of the second sub-piezoelectric motor 530-2 may transmit a driving force of the second sub-piezoelectric motor 530-2 to the second carrier 450' to move the second carrier 450' in the direction of the second shift axis S2. For example, since movement of the guide protrusion 539a of the second sub-piezoelectric motor 530-2 in the direction of the second shift axis S2 relative to the second connecting portion 459-2 is restricted, the guide protrusion 539a of the second sub-piezoelectric motor 530-2 may transmit the driving force of the second sub-piezoelectric motor 530-2 to the second carrier 450'. Since the guide protrusion 539a of the second sub-piezoelectric motor 530-2 is movable in the direction of the first shift axis S1 relative to the guide rail 459a, the second carrier 450' may not be constrained by the guide protrusion 539a when moving in the direction of the first shift axis S1.

In an embodiment, the guide balls 488 and 489 may guide movement of the second carrier 450' relative to the guide portion 539 of the second piezoelectric motor 530. The guide balls 488 and 489 may include the first guide balls 488 accommodated in the guide groove 459b of the first connecting portion 459-1 and the second guide balls 489 accommodated in the guide groove 459b of the second connecting portion 459-2.

The guide balls 488 and 489 may be accommodated in spaces between the connecting portions 459 and the guide portions 539 so as to perform a rotational motion and/or a rolling motion. For example, when the second carrier 450' moves in the direction of the second shift axis S2 with respect to the base 413, the first guide balls 488 may rotate while linearly moving in the direction of the second shift axis S2 between the guide portion 539 of the first sub-piezoelectric motor 530-1 and the guide groove 459b of the first connecting portion 459-1 or may rotate in place. For example, when the second carrier 450' moves in the direction of the first shift axis S1 with respect to the base 413, the second guide balls 489 may rotate while linearly moving in the direction of the first shift axis S1 between the guide portion 539 of the second sub-piezoelectric motor 530-2 and the guide groove 459b of the second connecting portion 459-2 or may rotate in place.

A camera module imbedded in an electronic device, such as a smartphone, may be configured to move a lens using a voice coil motor that includes a coil and a magnet. An actuator of a voice coil motor type may increase the weight of the camera module due to the weights of the magnet and the coil, and magnetic interference may occur.

Alternatively, the camera module may be configured to move the lens using a stepping motor. An actuator of a stepping motor type may have a limitation in compactness of the camera module due to a large size thereof, and noise may be generated by an operation of a motor.

Various embodiments of the disclosure may provide a camera module that performs linear movement of a lens using a piezoelectric motor.

A camera module 400 includes a camera housing 410, a lens assembly 420, at least a portion of which is disposed in the camera housing, the lens assembly including a lens 421, a first carrier 440 to which the lens assembly is coupled and that is movable relative to the camera housing in a direction of an optical axis OA of the lens, a second carrier 450 on which the first carrier is disposed and that is movable relative to the camera housing in one or more directions S1 and S2 perpendicular to the optical axis, a first piezoelectric motor 510 that is connected to the first carrier and the second carrier and that provides a first driving force to move the first carrier in the direction of the optical axis, and a second piezoelectric motor 530 that is connected to the camera housing and the second carrier and that provides a second driving force to move the second carrier in the one or more directions perpendicular to the optical axis. The first carrier is connected to the second carrier so as to be movable in the direction of the optical axis. The second piezoelectric motor transmits the second driving force to the second carrier as at least a portion of the second piezoelectric motor moves in a direction perpendicular to the optical axis in a state in which the second piezoelectric motor is disposed in the camera housing.

The first piezoelectric motor includes an elastic body 512, a first piezoelectric element 511 attached to an upper surface 5153 of the elastic body, a first rod 513 attached to a lower surface 5154 of the elastic body, and a first connecting member 514 connected to the first rod. The elastic body and the first piezoelectric element forms a vibrator that performs bending vibration in the direction of the optical axis based on a voltage applied to the first piezoelectric element.

In various embodiments, the second carrier may include a motor support part 453 on which the first piezoelectric motor is seated. A portion of the elastic body may be coupled to the motor support part. The first connecting member is coupled to the first carrier to move together with the first carrier.

In various embodiments, a nodal position N at which vibration displacement is substantially zero in the bending vibration may be defined on the vibrator. The nodal position may overlap the vibrator. The elastic body may include a protruding portion 517 formed at a position corresponding to the nodal position of the vibrator.

In various embodiments, a partial region of the elastic body that overlaps the nodal position based on a direction of the upper surface may be bonded to the second carrier.

In various embodiments, the elastic body may include a base portion 515 to which the first piezoelectric element and the first rod are coupled and extending portions 516 that extend from opposite ends of the base portion that face away from each other in a lengthwise direction L of the base portion. The extending portions may be formed to be thicker than the base portion and may expand vibration displacement of the vibrator in the bending vibration.

In various embodiments, the first connecting member may include a first body portion 514a, a plurality of first pressing portions 514b disposed on one side of the first body portion and connected with the first rod, and a first fixed portion 514c disposed on an opposite side of the first body portion and fixed to the first carrier. The plurality of first pressing portions may have elasticity and may apply a pre-load P3 or P4 to the first rod.

In various embodiments, the plurality of first pressing portions may include a first portion 514b-1 and a second portion 514b-2 separated from the first portion. The first portion and the second portion may apply the pre-load to the first rod in opposite directions.

In various embodiments, the camera module may further include a first guide member 460 disposed on a base 413 of the camera housing so as to be movable in a direction of a first shift axis S1 perpendicular to the optical axis. The second carrier may be disposed on the first guide member so as to be movable in a direction of a second shift axis S2 perpendicular to the optical axis and the first shift axis.

In various embodiments, the base may include a first guide groove 419 that extends in the direction of the first shift axis. The first guide member may include a second guide groove 463 that extends in the direction of the first shift axis and overlaps the first guide groove in the direction of the optical axis. A first guide ball 483 may be accommodated in a space between the first guide groove and the second guide groove.

In various embodiments, the first guide member may include a third guide groove 462 formed on a surface 460a that faces toward the second carrier, and the third guide groove 462 may extend in the direction of the second shift axis. The second carrier may include a fourth guide groove 456 that extends in the direction of the second shift axis and overlaps the third guide groove in the direction of the optical axis. A second guide ball 484 may be accommodated in a space between the third guide groove and the fourth guide groove.

In various embodiments, the camera module may further include a second guide member 470 disposed on the second carrier so as to be movable in the direction of the first shift axis. The second carrier may be aligned with the first guide member and the second guide member in the direction of the optical axis.

In various embodiments, the second carrier may include a fifth guide groove 455 formed on a surface 450a that faces toward the second guide member, and the fifth guide groove 455 may extend in the direction of the first shift axis. The second guide member may include a sixth guide groove 476 that extends in the direction of the first shift axis and overlaps the fifth guide groove in the direction of the optical axis. A third guide ball 485 may be accommodated in a space between the fourth guide groove and the sixth guide groove.

In various embodiments, the second piezoelectric motor may include a first sub-piezoelectric motor 530-1 that moves the second carrier in the direction of the first shift axis and a second sub-piezoelectric motor 530-2 that moves the second carrier in the direction of the second shift axis. The first sub-piezoelectric motor may be connected to the first guide member, and the second sub-piezoelectric motor may be connected to the second guide member.

In various embodiments, the second carrier and the first guide member may be connected such that movement of the second carrier relative to the first guide member in the direction of the first shift axis is restricted, but the second carrier is movable in the direction of the second shift axis. The second carrier and the second guide member may be connected such that movement of the second carrier relative to the second guide member in the direction of the second shift axis is restricted, but the second carrier is movable in the direction of the first shift axis.

In various embodiments, the first sub-piezoelectric motor may apply a driving force to the first guide member in the direction of the first shift axis. The second carrier may move in the direction of the first shift axis together with the first guide member, and the second guide member may be separated from the movement of the second carrier and the first guide member.

In various embodiments, the second sub-piezoelectric motor may apply a driving force to the second guide member in the direction of the second shift axis. The second carrier may move in the direction of the second shift axis together with the second guide member, and the first guide member may be separated from the movement of the second carrier and the second guide member.

In various embodiments, the second piezoelectric motor may be seated on the base 413 of the camera housing. The first sub-piezoelectric motor may be disposed adjacent to an edge parallel to the first shift axis among edges of the base. The second sub-piezoelectric motor may be disposed adjacent to an edge parallel to the second shift axis among the edges of the base.

In various embodiments, the camera module may further include a first elastic member 495 (e.g., the second spring 495) disposed such that opposite end portions 495a and 495b are fixed to the base 413 of the camera housing and a central portion 495a makes contact with the second guide member. The first elastic member may apply a pre-load P8 to the second guide member, the second carrier, and the first guide member in a direction toward the base.

In various embodiments, the camera module may further include a second elastic member 494 (e.g., the first spring member 494 of FIG. 8) coupled to the first carrier. A support part 451 (451-1 and 451-2) of the second carrier may be disposed between opposite end portions 494b and 494c of the second elastic member and a side surface 442 of the first carrier. The second elastic member may apply a pre-load P1 or P2 to the support part in a direction toward the first carrier.

According to the embodiments of the disclosure, the camera module may include the guide members that receive the driving forces of the piezoelectric motors. Accordingly, a lens carrier for AF and a lens carrier for OIS may not be directly connected to the piezoelectric motors, and thus an FPCB for application of power may be fixed without being moved.

In addition, according to the embodiments of the disclosure, the tension structure or the elastic structure for applying a pre-load may be applied to the camera module, thereby preventing misalignment of the piezoelectric motors and the lens carrier.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and " at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.
one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A camera module (400) comprising:
a camera housing (410);
a lens assembly (420) including a lens (421), at least a portion of the lens assembly (420) is disposed in the camera housing (410);
a first carrier (440) to which the lens assembly (420) is coupled, the first carrier (440) being movable relative to the camera housing (410) in a direction of an optical axis (OA) of the lens (421);
a second carrier (450) on which the first carrier (440) is coupled, the second carrier (450) being movable relative to the camera housing (410) in one or more directions perpendicular to the optical axis (OA), wherein the first carrier (440) is connected to the second carrier (450) so as to be movable in the direction of the optical axis (OA);
a first piezoelectric motor (510) connected to the first carrier (440) and the second carrier (450) and configured to provide a first driving force to move the first carrier (440) in the direction of the optical axis (OA); and
a second piezoelectric motor (530) connected to the camera housing (410) and the second carrier (450) and configured to provide a second driving force to move the second carrier (450) in the one or more directions perpendicular to the optical axis (OA),
wherein the second piezoelectric motor (530) transmits the second driving force to the second carrier (450) as at least a portion of the second piezoelectric motor (530) moves in a direction perpendicular to the optical axis (OA) in a state in which the second piezoelectric motor (530) is disposed in the camera housing (410),
**characterized in that**,
the first piezoelectric motor (510) includes an elastic body (512), a first piezoelectric element (511) attached to an upper surface of the elastic body (512), a first rod (513) attached to a lower surface (5154) of the elastic body (512) and a first connecting member (514) connected to the first rod (513),
wherein the elastic body (512) and the first piezoelectric element (511) form a vibrator (511) configured to perform bending vibration in the direction of the optical axis (OA) based on a voltage applied to the first piezoelectric element (511) to linearly move the first rod (513) in the direction of the optical axis (OA) in response to the bending direction of the first piezoelectric element (511), and
wherein the first connecting member (514) is coupled to the first carrier (440) to move together with the first carrier (440).

2. The camera module (400) of claim 1, wherein the second carrier (450) includes a motor support part (453) on which the first piezoelectric motor (510) is seated,
wherein a portion of the elastic body (512) is coupled to the motor support part (453).

3. The camera module (400) of one of the claims 1 to 2, wherein a nodal position (N) at which vibration displacement is substantially zero in the bending vibration is defined on the vibrator (511),
wherein the nodal position (N) overlaps the vibrator (511), and
wherein the elastic body (512) includes a protruding portion (517) formed at a position corresponding to the nodal position (N) of the vibrator (511), and wherein a partial region of the elastic body (512) configured to overlap the nodal position (N) based on a direction of the upper surface is bonded to the second carrier (450).

4. The camera module (400) of any one of claims 1 to 3, wherein the elastic body (512) includes a base portion (515) to which the first piezoelectric element (510) and the first rod (513) are coupled and extending portions (516) configured to extend from opposite ends of the base portion (515) configured to face away from each other in a lengthwise direction of the base portion (515), and
wherein the extending portions (516) are formed to be thicker than the base portion and configured to expand vibration displacement of the vibrator (511) in the bending vibration.

5. The camera module (400) of any one of claims 2 to 4, wherein the first connecting member (514) includes:
a first body portion (514a);
a plurality of first pressing portions (514b) disposed on one side of the first body portion (514a) and connected with the first rod (513); and
a first fixed portion (514c) disposed on an opposite side of the first body portion (514a) and fixed to the first carrier (440), and
wherein the plurality of first pressing portions (514b) have elasticity and apply a pre-load to the first rod (513), and wherein the plurality of first pressing portions (514b) include a first portion (514b-1) and a second portion (514b-2) separated from the first portion (514b-1), and
wherein the first portion (514b-1) and the second portion (514-b2) apply the pre-load to the first rod (513) in opposite directions.

6. The camera module (400) of any one of claims 1 to 5, further comprising:
a first guide member (460) disposed on a base of the camera housing (410) so as to be movable in a direction of a first shift axis perpendicular to the optical axis (OA),
wherein the second carrier (450) is disposed on the first guide member (460) so as to be movable in a direction of a second shift axis perpendicular to the optical axis (OA) and the first shift axis, and wherein the base includes a first guide groove (419) configured to extend in the direction of the first shift axis,
wherein the first guide member (460) includes a second guide groove (463) configured to extend in the direction of the first shift axis and overlap the first guide groove (419) in the direction of the optical axis, and
wherein a first guide ball (483) is accommodated in a space between the first guide groove (419) and the second guide groove (463).

7. The camera module (400) of claim 6, wherein the first guide member (460) includes a third guide groove (462) formed on a surface configured to face toward the second carrier (450), the third guide groove (462) being configured to extend in the direction of the second shift axis,
wherein the second carrier (450) includes a fourth guide groove (456) configured to extend in the direction of the second shift axis and overlap the third guide groove (462) in the direction of the optical axis, and
wherein a second guide ball (484) is accommodated in a space between the third guide groove (462) and the fourth guide groove (456).

8. The camera module (400) of any one of claims 6 or 7, further comprising:
a second guide member (470) disposed on the second carrier (450) so as to be movable in the direction of the first shift axis,
wherein the second carrier (450) is aligned with the first guide member (460) and the second guide member (470) in the direction of the optical axis.

9. The camera module (400) of claim 8, wherein the second carrier (450) includes a fifth guide groove (455) formed on a surface configured to face toward the second guide member (470), the fifth guide groove (455) being configured to extend in the direction of the first shift axis,
wherein the second guide member (470) includes a sixth guide groove (476) configured to extend in the direction of the first shift axis and overlap the fifth guide groove (455) in the direction of the optical axis, and
wherein a third guide ball (485) is accommodated in a space between the fourth guide groove (456) and the sixth guide groove (476).

10. The camera module (400) of claim 8, wherein the second piezoelectric motor (530) includes a first sub-piezoelectric motor (530-1) configured to move the second carrier (450) in the direction of the first shift axis and a second sub-piezoelectric motor (530_2) configured to move the second carrier (450) in the direction of the second shift axis,
wherein the first sub-piezoelectric motor (530-1) is connected to the first guide member (460), and
wherein the second sub-piezoelectric motor (530_2) is connected to the second guide member (470).

11. The camera module (400) of any one of claims 8 to 10, wherein the second carrier (450) and the first guide member are connected such that movement of the second carrier (450) relative to the first guide member in the direction of the first shift axis is restricted, but the second carrier (450) is movable in the direction of the second shift axis, and
wherein the second carrier (450) and the second guide member are connected such that movement of the second carrier (450) relative to the second guide member (470) in the direction of the second shift axis is restricted, but the second carrier (450) is movable in the direction of the first shift axis.

12. The camera module (400) of claim 10 or 11, wherein the first sub-piezoelectric motor (530-1) applies a driving force to the first guide member (460) in the direction of the first shift axis and/or wherein the second sub-piezoelectric motor (530-2) applies a driving force to the second guide member (470) in the direction of the second shift axis, and
wherein the second carrier (450) moves in the direction of the first shift axis together with the first guide member (460), and the second guide member (470) is separated from the movement of the second carrier (450) and the first guide member and/or wherein the second carrier (450) moves in the direction of the second shift axis together with the second guide member (470), and the first guide member is separated from the movement of the second carrier (450) and the second guide member.

13. The camera module (400) of any one of claims 10 to 12, wherein the second piezoelectric motor (530) is seated on the base of the camera housing (410),
wherein the first sub-piezoelectric motor (530-1) is disposed adjacent to an edge parallel to the first shift axis among edges of the base, and
wherein the second sub-piezoelectric motor (530-2) is disposed adjacent to an edge parallel to the second shift axis among the edges of the base.

14. The camera module (400) of any one of claims 10 to 13, further comprising:
a first elastic member (495) disposed such that opposite end portions are fixed to the base of the camera housing (410) and a central portion makes contact with the second guide member (470),
wherein the first elastic member (495) applies a pre-load to the second guide member (470), the second carrier (450), and the first guide member in a direction toward the base.

15. The camera module (400) of any one of claims 1 to 14, further comprising:
a second elastic member (495) coupled to the first carrier (440),
wherein a support part of the second carrier (450) is disposed between opposite end portions of the second elastic member (495) and a side surface of the first carrier (440), and
wherein the second elastic member (495) applies a pre-load to the support part in a direction toward the first carrier (440).

## Patentansprüche

1. Kameramodul (400), umfassend:
ein Kameragehäuse (410);
eine Linsenbaugruppe (420), die eine Linse (421) beinhaltet, wobei mindestens ein Abschnitt der Linsenbaugruppe (420) in dem Kameragehäuse (410) angeordnet ist;
einen ersten Träger (440), an den die Linsenbaugruppe (420) gekoppelt ist, wobei der erste Träger (440) relativ zu dem Kameragehäuse (410) in einer Richtung einer optischen Achse (OA) der Linse (421) bewegbar ist;
einen zweiten Träger (450), an den der erste Träger (440) gekoppelt ist, wobei der zweite Träger (450) relativ zu dem Kameragehäuse (410) in einer oder mehreren Richtungen senkrecht zu der optischen Achse (OA) bewegbar ist, wobei der erste Träger (440) mit dem zweiten Träger (450) verbunden ist, um in der Richtung der optischen Achse (OA) bewegbar zu sein;
einen ersten piezoelektrischen Motor (510), der mit dem ersten Träger (440) und dem zweiten Träger (450) verbunden und dazu konfiguriert ist, eine erste Antriebskraft bereitzustellen, um den ersten Träger (440) in der Richtung der optischen Achse (OA) zu bewegen; und
einen zweiten piezoelektrischen Motor (530), der mit dem Kameragehäuse (410) und dem zweiten Träger (450) verbunden und dazu konfiguriert ist, eine zweite Antriebskraft bereitzustellen, um den zweiten Träger (450) in der einen oder den mehreren Richtungen senkrecht zu der optischen Achse (OA) zu bewegen,
wobei der zweite piezoelektrische Motor (530) die zweite Antriebskraft auf den zweiten Träger (450) überträgt, wenn sich mindestens ein Abschnitt des zweiten piezoelektrischen Motors (530) in einem Zustand, in dem der zweite piezoelektrische Motor (530) in dem Kameragehäuse (410) angeordnet ist, in einer Richtung senkrecht zu der optischen Achse (OA) bewegt,
**dadurch gekennzeichnet, dass**
der erste piezoelektrische Motor (510) einen elastischen Körper (512), ein erstes piezoelektrisches Element (511), das an einer oberen Oberfläche des elastischen Körpers (512) angebracht ist, eine erste Stange (513), die an einer unteren Oberfläche (5154) des elastischen Körpers (512) angebracht ist, und ein erstes Verbindungselement (514), das mit der ersten Stange (513) verbunden ist, beinhaltet,
wobei der elastische Körper (512) und das erste piezoelektrische Element (511) einen Vibrator (511) bilden, der dazu konfiguriert ist, Biegevibration in der Richtung der optischen Achse (OA) basierend auf einer Spannung, die auf das erste piezoelektrische Element (511) angewendet wird, durchzuführen, um die erste Stange (513) in der Richtung der optischen Achse (OA) als Reaktion auf die Biegerichtung des ersten piezoelektrischen Elements (511) linear zu bewegen, und
wobei das erste Verbindungselement (514) an den ersten Träger (440) gekoppelt ist, um sich zusammen mit dem ersten Träger (440) zu bewegen.

2. Kameramodul (400) nach Anspruch 1, wobei der zweite Träger (450) ein Motorstützteil (453) beinhaltet, auf dem der erste piezoelektrische Motor (510) sitzt,
wobei ein Abschnitt des elastischen Körpers (512) an das Motorstützteil (453) gekoppelt ist.

3. Kameramodul (400) nach einem der Ansprüche 1 bis 2, wobei eine Knotenposition (N), an der Vibrationsverschiebung im Wesentlichen null in der Biegevibration ist, an dem Vibrator (511) definiert ist,
wobei die Knotenposition (N) den Vibrator (511) überlappt, und
wobei der elastische Körper (512) einen hervorstehenden Abschnitt (517) beinhaltet, der an einer Position gebildet ist, die der Knotenposition (N) des Vibrators (511) entspricht, und wobei eine Teilregion des elastischen Körpers (512), die dazu konfiguriert ist, die Knotenposition (N) basierend auf einer Richtung der oberen Oberfläche zu überlappen, an den zweiten Träger (450) gebunden ist.

4. Kameramodul (400) nach einem der Ansprüche 1 bis 3, wobei der elastische Körper (512) einen Basisabschnitt (515), an den das erste piezoelektrische Element (510) und die erste Stange (513) gekoppelt sind, und Erstreckungsabschnitte (516), die dazu konfiguriert sind, sich von gegenüberliegenden Enden des Basisabschnittes (515) zu erstrecken, die dazu konfiguriert sind, in einer Längenrichtung des Basisabschnittes (515) voneinander abgewandt zu sein, beinhaltet, und
wobei die Erstreckungsabschnitte (516) dazu gebildet sind, dicker als der Basisabschnitt zu sein, und dazu konfiguriert sind, Vibrationsverschiebung des Vibrators (511) in der Biegevibration zu erweitern.

5. Kameramodul (400) nach einem der Ansprüche 2 bis 4, wobei das erste Verbindungselement (514) Folgendes beinhaltet:
einen ersten Körperabschnitt (514a);
eine Vielzahl von ersten Drückabschnitten (514b), die an einer Seite des ersten Körperabschnittes (514a) angeordnet und mit der ersten Stange (513) verbunden ist; und
einen ersten festen Abschnitt (514c), der an einer gegenüberliegenden Seite des ersten Körperabschnittes (514a) angeordnet und an dem ersten Träger (440) befestigt ist, und
wobei die Vielzahl von ersten Drückabschnitten (514b) Elastizität aufweist und eine Vorspannung auf die erste Stange (513) anwendet, und wobei die Vielzahl von ersten Drückabschnitten (514b) einen ersten Abschnitt (514b-1) und einen zweiten Abschnitt (514b-2), der von dem ersten Abschnitt (514b-1) getrennt ist, beinhaltet, und
wobei der erste Abschnitt (514b-1) und der zweite Abschnitt (514-b2) die Vorspannung auf die erste Stange (513) in entgegengesetzten Richtungen anwenden.

6. Kameramodul (400) nach einem der Ansprüche 1 bis 5, ferner umfassend:
ein erstes Führungselement (460), das auf einer Basis des Kameragehäuses (410) angeordnet ist, um in einer Richtung einer ersten Verschiebungsachse senkrecht zu der optischen Achse (OA) bewegbar zu sein,
wobei der zweite Träger (450) auf dem ersten Führungselement (460) angeordnet ist, um in einer Richtung einer zweiten Verschiebungsachse senkrecht zu der optischen Achse (OA) und der ersten Verschiebungsachse bewegbar zu sein, und wobei die Basis eine erste Führungsnut (419) beinhaltet, die dazu konfiguriert ist, sich in der Richtung der ersten Verschiebungsachse zu erstrecken,
wobei das erste Führungselement (460) eine zweite Führungsnut (463) beinhaltet, die dazu konfiguriert ist, sich in der Richtung der ersten Verschiebungsachse zu erstrecken und die erste Führungsnut (419) in der Richtung der optischen Achse zu überlappen, und
wobei eine erste Führungskugel (483) in einem Raum zwischen der ersten Führungsnut (419) und der zweiten Führungsnut (463) aufgenommen ist.

7. Kameramodul (400) nach Anspruch 6, wobei das erste Führungselement (460) eine dritte Führungsnut (462) beinhaltet, die auf einer Oberfläche gebildet ist, die dazu konfiguriert ist, dem zweiten Träger (450) zugewandt zu sein, wobei die dritte Führungsnut (462) dazu konfiguriert ist, sich in der Richtung der zweiten Verschiebungsachse zu erstrecken,
wobei der zweite Träger (450) eine vierte Führungsnut (456) beinhaltet, die dazu konfiguriert ist, sich in der Richtung der zweiten Verschiebungsachse zu erstrecken und die dritte Führungsnut (462) in der Richtung der optischen Achse zu überlappen, und
wobei eine zweite Führungskugel (484) in einem Raum zwischen der dritten Führungsnut (462) und der vierten Führungsnut (456) aufgenommen ist.

8. Kameramodul (400) nach einem der Ansprüche 6 oder 7, ferner umfassend:
ein zweites Führungselement (470), das auf dem zweiten Träger (450) angeordnet ist, um in der Richtung der ersten Verschiebungsachse bewegbar zu sein,
wobei der zweite Träger (450) mit dem ersten Führungselement (460) und dem zweiten Führungselement (470) in der Richtung der optischen Achse ausgerichtet ist.

9. Kameramodul (400) nach Anspruch 8, wobei der zweite Träger (450) eine fünfte Führungsnut (455) beinhaltet, die auf einer Oberfläche gebildet ist, die dazu konfiguriert ist, dem zweiten Führungselement (470) zugewandt zu sein, wobei die fünfte Führungsnut (455) dazu konfiguriert ist, sich in der Richtung der ersten Verschiebungsachse zu erstrecken,
wobei das zweite Führungselement (470) eine sechste Führungsnut (476) beinhaltet, die dazu konfiguriert ist, sich in der Richtung der ersten Verschiebungsachse zu erstrecken und die fünfte Führungsnut (455) in der Richtung der optischen Achse zu überlappen, und
wobei eine dritte Führungskugel (485) in einem Raum zwischen der vierten Führungsnut (456) und der sechsten Führungsnut (476) aufgenommen ist.

10. Kameramodul (400) nach Anspruch 8, wobei der zweite piezoelektrische Motor (530) einen ersten subpiezoelektrischen Motor (530-1), der dazu konfiguriert ist, den zweiten Träger (450) in der Richtung der ersten Verschiebungsachse zu bewegen, und einen zweiten subpiezoelektrischen Motor (530_2), der dazu konfiguriert ist, den zweiten Träger (450) in der Richtung der zweiten Verschiebungsachse zu bewegen, beinhaltet,
wobei der erste subpiezoelektrische Motor (530-1) mit dem ersten Führungselement (460) verbunden ist, und
wobei der zweite subpiezoelektrische Motor (530_2) mit dem zweiten Führungselement (470) verbunden ist.

11. Kameramodul (400) nach einem der Ansprüche 8 bis 10, wobei der zweite Träger (450) und das erste Führungselement verbunden sind, sodass Bewegung des zweiten Trägers (450) relativ zu dem ersten Führungselement in der Richtung der ersten Verschiebungsachse eingeschränkt ist, aber der zweite Träger (450) in der Richtung der zweiten Verschiebungsachse bewegbar ist, und
wobei der zweite Träger (450) und das zweite Führungselement verbunden sind, sodass Bewegung des zweiten Trägers (450) relativ zu dem zweiten Führungselement (470) in der Richtung der zweiten Verschiebungsachse eingeschränkt ist, aber der zweite Träger (450) in der Richtung der ersten Verschiebungsachse bewegbar ist.

12. Kameramodul (400) nach Anspruch 10 oder 11, wobei der erste subpiezoelektrische Motor (530-1) eine Antriebskraft auf das erste Führungselement (460) in der Richtung der ersten Verschiebungsachse anwendet und/oder wobei der zweite subpiezoelektrische Motor (530-2) eine Antriebskraft auf das zweite Führungselement (470) in der Richtung der zweiten Verschiebungsachse anwendet, und
wobei sich der zweite Träger (450) in der Richtung der ersten Verschiebungsachse zusammen mit dem ersten Führungselement (460) bewegt und das zweite Führungselement (470) von der Bewegung des zweiten Trägers (450) und des ersten Führungselements getrennt ist und/oder wobei sich der zweite Träger (450) in der Richtung der zweiten Verschiebungsachse zusammen mit dem zweiten Führungselement (470) bewegt und das erste Führungselement von der Bewegung des zweiten Trägers (450) und des zweiten Führungselements getrennt ist.

13. Kameramodul (400) nach einem der Ansprüche 10 bis 12, wobei der zweite piezoelektrische Motor (530) auf der Basis des Kameragehäuses (410) sitzt,
wobei der erste subpiezoelektrische Motor (530-1) benachbart zu einer Kante parallel zu der ersten Verschiebungsachse unter Kanten der Basis angeordnet ist, und
wobei der zweite subpiezoelektrische Motor (530-2) benachbart zu einer Kante parallel zu der zweiten Verschiebeachse unter den Kanten der Basis angeordnet ist.

14. Kameramodul (400) nach einem der Ansprüche 10 bis 13, ferner umfassend:
ein erstes elastisches Element (495), das angeordnet ist, sodass gegenüberliegende Endabschnitte an der Basis des Kameragehäuses (410) befestigt sind und ein zentraler Abschnitt Kontakt mit dem zweiten Führungselement (470) herstellt,
wobei das erste elastische Element (495) eine Vorspannung auf das zweite Führungselement (470), den zweiten Träger (450) und das erste Führungselement in einer Richtung zu der Basis anwendet.

15. Kameramodul (400) nach einem der Ansprüche 1 bis 14, ferner umfassend:
ein zweites elastisches Element (495), das an den ersten Träger (440) gekoppelt ist,
wobei ein Stützteil des zweiten Trägers (450) zwischen gegenüberliegenden Endabschnitten des zweiten elastischen Elements (495) und einer Seitenoberfläche des ersten Trägers (440) angeordnet ist, und
wobei das zweite elastische Element (495) eine Vorspannung auf das Stützteil in einer Richtung zu dem ersten Träger (440) anwendet.

## Revendications

1. Module de caméra (400) comprenant :
un boîtier de caméra (410) ;
un ensemble objectif (420) comprenant un objectif (421), au moins une partie de l'ensemble objectif (420) étant disposée dans le boîtier de caméra (410) ;
un premier support (440) auquel est couplé l'ensemble objectif (420), le premier support (440) étant mobile par rapport au boîtier de caméra (410) dans une direction d'un axe optique (OA) de l'objectif (421) ;
un deuxième support (450) sur lequel est couplé le premier support (440), le deuxième support (450) étant mobile par rapport au boîtier de caméra (410) dans une ou plusieurs directions perpendiculaires à l'axe optique (OA), le premier support (440) étant relié au deuxième support (450) de manière à être mobile dans la direction de l'axe optique (OA) ;
un premier moteur piézoélectrique (510) relié au premier support (440) et au deuxième support (450) et configuré de manière à fournir une première force motrice pour déplacer le premier support (440) dans la direction de l'axe optique (OA) ; et
un deuxième moteur piézoélectrique (530) relié au boîtier de caméra (410) et au deuxième support (450) et configuré de manière à fournir une deuxième force motrice pour déplacer le deuxième support (450) dans la ou les directions perpendiculaires à l'axe optique (OA),
dans lequel le deuxième moteur piézoélectrique (530) transmet la deuxième force motrice au deuxième support (450) lorsqu'au moins une partie du deuxième moteur piézoélectrique (530) se déplace dans une direction perpendiculaire à l'axe optique (OA) dans un état dans lequel le deuxième moteur piézoélectrique (530) est disposé dans le boîtier de caméra (410),
**caractérisé en ce que**
le premier moteur piézoélectrique (510) comporte un corps élastique (512), un premier élément piézoélectrique (511) attaché à une surface supérieure du corps élastique (512), une première tige (513) attachée à une surface inférieure (5154) du corps élastique (512) et un premier organe de liaison (514) relié à la première tige (513),
dans lequel le corps élastique (512) et le premier élément piézoélectrique (511) forment un vibrateur (511) configuré de manière à effectuer une vibration de flexion dans la direction de l'axe optique (OA) à partir d'une tension appliquée au premier élément piézoélectrique (511) pour déplacer linéairement la première tige (513) dans la direction de l'axe optique (OA) en réponse à la direction de flexion du premier élément piézoélectrique (511), et
dans lequel le premier organe de liaison (514) est couplé au premier support (440) pour se déplacer conjointement avec le premier support (440).

2. Module de caméra (400) selon la revendication 1, dans lequel le deuxième support (450) comporte une pièce de support de moteur (453) sur laquelle est assis le premier moteur piézoélectrique (510),
dans lequel une partie du corps élastique (512) est couplée à la pièce de support de moteur (453).

3. Module de caméra (400) selon l'une des revendications 1 à 2, dans lequel une position nodale (N) à laquelle le déplacement de vibration est sensiblement nul dans la vibration de flexion est définie sur le vibrateur (511),
dans lequel la position nodale (N) chevauche le vibrateur (511), et
dans lequel le corps élastique (512) comporte une partie saillante (517) formée à une position correspondant à la position nodale (N) du vibrateur (511), et dans lequel une région partielle du corps élastique (512) configurée de manière à chevaucher la position nodale (N) à partir d'une direction de la surface supérieure est collée au deuxième support (450).

4. Module de caméra (400) selon l'une des revendications 1 à 3, dans lequel le corps élastique (512) comporte une partie de base (515) à laquelle le premier élément piézoélectrique (510) et la première tige (513) sont couplés et des parties d'extension (516) configurées de manière à s'étendre à partir d'extrémités opposées de la partie de base (515) configurées de manière à être en regard l'une de l'autre dans une direction longitudinale de la partie de base (515), et
dans lequel les parties d'extension (516) sont formées de manière à être plus épaisses que la partie de base et configurées de manière à détendre le déplacement de vibration du vibrateur (511) dans la vibration de flexion.

5. Module de caméra (400) selon l'une des revendications 2 à 4, dans lequel le premier organe de liaison (514) comporte :
une première partie de corps (514a) ;
une pluralité de premières parties d'appui (514b) disposées d'un côté de la première partie de corps (514a) et reliées à la première tige (513) ; et
une première partie fixe (514c) disposée d'un côté opposé de la première partie de corps (514a) et fixée au premier support (440), et
la pluralité de premières parties d'appui (514b) présentant une élasticité et appliquant une précharge sur la première tige (513), et la pluralité de premières parties d'appui (514b) comportant une première partie (514b-1) et une deuxième partie (514b-2) séparée de la première partie (514b-1), et
dans lequel la première partie (514b-1) et la deuxième partie (514-b2) appliquent la précharge sur la première tige (513) dans des directions opposées.

6. Module de caméra (400) selon l'une des revendications 1 à 5, comprenant en outre :
un premier organe de guidage (460) disposé sur une base du boîtier de caméra (410) de manière à être mobile dans une direction d'un premier axe de décalage perpendiculaire à l'axe optique (OA),
dans lequel le deuxième support (450) est disposé sur le premier organe de guidage (460) de manière à être mobile dans une direction d'un deuxième axe de décalage perpendiculaire à l'axe optique (OA) et au premier axe de décalage, et dans lequel la base comporte une première rainure de guidage (419) configurée de manière à s'étendre dans la direction du premier axe de décalage,
dans lequel le premier organe de guidage (460) comporte une deuxième rainure de guidage (463) configurée de manière à s'étendre dans la direction du premier axe de décalage et chevaucher la première rainure de guidage (419) dans la direction de l'axe optique, et
dans lequel une première bille de guidage (483) est logée dans un espace entre la première rainure de guidage (419) et la deuxième rainure de guidage (463).

7. Module de caméra (400) selon la revendication 6, dans lequel le premier organe de guidage (460) comporte une troisième rainure de guidage (462) formée sur une surface configurée de manière à être tournée vers le deuxième support (450), la troisième rainure de guidage (462) étant configurée de manière à s'étendre dans la direction du deuxième axe de décalage,
dans lequel le deuxième support (450) comporte une quatrième rainure de guidage (456) configurée de manière à s'étendre dans la direction du deuxième axe de décalage et chevaucher la troisième rainure de guidage (462) dans la direction de l'axe optique, et
dans lequel une deuxième bille de guidage (484) est logée dans un espace entre la troisième rainure de guidage (462) et la quatrième rainure de guidage (456).

8. Module de caméra (400) selon l'une des revendications 6 ou 7, comprenant en outre :
un deuxième organe de guidage (470) disposé sur le deuxième support (450) de manière à être mobile dans la direction du premier axe de décalage,
dans lequel le deuxième support (450) est aligné avec le premier organe de guidage (460) et le deuxième organe de guidage (470) dans la direction de l'axe optique.

9. Module de caméra (400) selon la revendication 8, dans lequel le deuxième support (450) comporte une cinquième rainure de guidage (455) formée sur une surface configurée de manière à être tournée vers le deuxième organe de guidage (470), la cinquième rainure de guidage (455) étant configurée de manière à s'étendre dans la direction du premier axe de décalage,
dans lequel le deuxième organe de guidage (470) comporte une sixième rainure de guidage (476) configurée de manière à s'étendre dans la direction du premier axe de décalage et chevaucher la cinquième rainure de guidage (455) dans la direction de l'axe optique, et
dans lequel une troisième bille de guidage (485) est logée dans un espace entre la quatrième rainure de guidage (456) et la sixième rainure de guidage (476).

10. Module de caméra (400) selon la revendication 8, dans lequel le deuxième moteur piézoélectrique (530) comporte un premier moteur sous-piézoélectrique (530-1) configuré de manière à déplacer le deuxième support (450) dans la direction du premier axe de décalage et un deuxième moteur sous-piézoélectrique (530_2) configuré de manière à déplacer le deuxième support (450) dans la direction du deuxième axe de décalage,
dans lequel le premier moteur sous-piézoélectrique (530-1) est relié au premier organe de guidage (460), et
dans lequel le deuxième moteur sous-piézoélectrique (530_2) est relié au deuxième organe de guidage (470).

11. Module de caméra (400) selon l'une des revendications 8 à 10, dans lequel le deuxième support (450) et le premier organe de guidage sont reliés de sorte que le déplacement du deuxième support (450) par rapport au premier organe de guidage dans la direction du premier axe de décalage est limité, mais le deuxième support (450) est mobile dans la direction du deuxième axe de décalage, et
dans lequel le deuxième support (450) et le deuxième organe de guidage sont reliés de sorte que le déplacement du deuxième support (450) par rapport au deuxième organe de guidage (470) dans la direction du deuxième axe de décalage est limité, mais le deuxième support (450) est mobile dans la direction du premier axe de décalage.

12. Module de caméra (400) selon la revendication 10 ou 11, dans lequel le premier moteur sous-piézoélectrique (530-1) applique une force motrice au premier organe de guidage (460) dans la direction du premier axe de décalage et/ou dans lequel le deuxième moteur sous-piézoélectrique (530-2) applique une force motrice au deuxième organe de guidage (470) dans la direction du deuxième axe de décalage, et
dans lequel le deuxième support (450) se déplace dans la direction du premier axe de décalage conjointement avec le premier organe de guidage (460), et le deuxième organe de guidage (470) est séparé du déplacement du deuxième support (450) et du premier organe de guidage et/ou dans lequel le deuxième support (450) se déplace dans la direction du deuxième axe de décalage conjointement avec le deuxième organe de guidage (470), et le premier organe de guidage est séparé du déplacement du deuxième support (450) et du deuxième organe de guidage.

13. Module de caméra (400) selon l'une des revendications 10 à 12, dans lequel le deuxième moteur piézoélectrique (530) est assis sur la base du boîtier de caméra (410),
dans lequel le premier moteur sous-piézoélectrique (530-1) est disposé de manière adjacente à un bord parallèle au premier axe de décalage parmi les bords de la base, et
dans lequel le deuxième moteur sous-piézoélectrique (530-2) est disposé de manière adjacente à un bord parallèle au deuxième axe de décalage parmi les bords de la base.

14. Module de caméra (400) selon l'une des revendications 10 à 13, comprenant en outre :
un premier organe élastique (495) disposé de sorte que des parties d'extrémité opposées sont fixées à la base du boîtier de caméra (410) et une partie centrale entre en contact avec le deuxième organe de guidage (470),
dans lequel le premier organe élastique (495) applique une précharge sur le deuxième organe de guidage (470), le deuxième support (450) et le premier organe de guidage dans une direction vers la base.

15. Module de caméra (400) selon l'une des revendications 1 à 14, comprenant en outre :
un deuxième organe élastique (495) couplé au premier support (440),
dans lequel une partie de support du deuxième support (450) est disposée entre des parties d'extrémité opposées du deuxième organe élastique (495) et une surface latérale du premier support (440), et
dans lequel le deuxième organe élastique (495) applique une précharge sur la pièce de support dans une direction vers le premier support (440).
